(19) Europäisches Patentamt
European Patent Office
Office européen des brevets

(11) EP 3 553 154 B1

(12) EUROPEAN PATENT SPECIFICATION

(45) Date of publication and mention of the grant of the patent:
**12.02.2025 Bulletin 2025/07**

(21) Application number: **17878833.7**

(22) Date of filing: **10.11.2017**

(51) International Patent Classification (IPC):
***C09K 19/54*** *(2006.01)* ***C09K 19/12*** *(2006.01)*
***C09K 19/14*** *(2006.01)* ***C09K 19/20*** *(2006.01)*
***C09K 19/30*** *(2006.01)* ***C09K 19/32*** *(2006.01)*
***C09K 19/34*** *(2006.01)* ***C09K 19/38*** *(2006.01)*
***C09K 19/42*** *(2006.01)* ***G02F 1/13*** *(2006.01)*
***G02F 1/1334*** *(2006.01)* ***C09K 19/04*** *(2006.01)*

(52) Cooperative Patent Classification (CPC):
**C09K 19/3066; C09K 19/12; C09K 19/14; C09K 19/20; C09K 19/30; C09K 19/3068; C09K 19/3098; C09K 19/32; C09K 19/34; C09K 19/38; C09K 19/42; C09K 19/54; G02F 1/13; G02F 1/1334;** C09K 2019/0411; (Cont.)

(86) International application number:
**PCT/JP2017/040522**

(87) International publication number:
**WO 2018/105312 (14.06.2018 Gazette 2018/24)**

(54) **LIQUID CRYSTAL COMPOSITE AND LIQUID CRYSTAL DIMMER ELEMENT**

FLÜSSIGKRISTALLZUSAMMENSETZUNG UND FLÜSSIGKRISTALLDIMMERELEMENT

COMPOSITE DE CRISTAUX LIQUIDES ET ÉLÉMENT GRADATEUR À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2016 JP 2016236385**
**27.07.2017 JP 2017145292**

(43) Date of publication of application:
**16.10.2019 Bulletin 2019/42**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **MATSUDA, Naoko**
  **Ichihara-shi**
  **Chiba 290-8551 (JP)**
- **KURIHARA, Eriko**
  **Ichihara-shi**
  **Chiba 290-8551 (JP)**
- **SAITO, Masayuki**
  **Ichihara-shi**
  **Chiba 290-8551 (JP)**

(74) Representative: **Becker Kurig & Partner Patentanwälte mbB**
**Bavariastraße 7**
**80336 München (DE)**

(56) References cited:
**WO-A1-2016/072436** **WO-A1-2016/082922**
**WO-A1-2016/146245** **CN-A- 104 371 744**
**JP-A- 2003 255 315** **JP-A- 2013 144 796**
**JP-A- 2013 254 059** **JP-A- 2013 254 060**
**JP-A- 2015 131 956** **JP-A- 2016 186 070**
**US-A1- 2015 102 259** **US-A1- 2015 376 505**
**US-A1- 2016 168 466**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 553 154 B1

(52) Cooperative Patent Classification (CPC): (Cont.)
C09K 2019/0448; C09K 2019/122; C09K 2019/123;
C09K 2019/3009; C09K 2019/301;
C09K 2019/3015; C09K 2019/3016;
C09K 2019/3021; C09K 2019/3025;
C09K 2019/3027; C09K 2019/3036;
C09K 2019/3037; C09K 2019/3078;
C09K 2019/3422; C09K 2019/3425; C09K 2219/13

## Description

### Technical Field

The invention relates mainly to a liquid crystal dimming device. More specifically, it relates to a liquid crystal dimming device having a liquid crystal composite where a liquid crystal composition is combined with a polymer.

### Technical Background

There is a method using light-scattering or the like for a liquid crystal dimming device. Such a device is used for building materials, such as window glasses or the partition of a room, automobile parts and so forth. Soft substrates such as plastic films are used for these devices in addition to hard substrates such as glass substrates. In a liquid crystal composition sandwiched between these substrates, the arrangement of liquid crystal molecules can be changed by adjusting applied voltage. Light that transmits the liquid crystal composition is adjusted by this method so that the liquid crystal dimming device can widely be used for displays, light-shutters, dimming windows (see patent document No. 1) and smart windows (see patent document No. 2) .

One example of the liquid crystal dimming device is a device with a polymer dispersed type, having a light-scattering mode. A liquid crystal composition is dispersed in a polymer. The device has the following characteristics. It is easy to produce the device. A device having a large screen can be produced, since a film thickness can easily be adjusted over a wide area. A bright display is possible, since no polarizers are required. A viewing angle is wide, since light-scattering is utilized. An application to dimming windows, projection-type displays, large-area displays and so forth is expected, since the device has such excellent properties.

Another example is a liquid crystal dimming device with a polymer-network type. In this type of device, a liquid crystal composition is present in a three-dimensional network of a polymer. This composition is continuous, which is different from the composition in a polymer dispersed type. This type of device has the same characteristics with these of a device with a polymer-dispersed type. A liquid crystal dimming device is present in which a polymer-network type and a polymer-dispersed type are mixed.

A liquid crystal composition having suitable characteristics is used for a liquid crystal dimming device. A device having good characteristics can be obtained by improving the characteristics of this composition. Table 1 below summarizes the relationship between two characteristics. The characteristics of the composition will be further explained on the basis of the device. The temperature range of a nematic phase relates to the temperature range in which the device can be used. A desirable maximum temperature of the nematic phase is approximately 90 °C or higher and a desirable minimum temperature of the nematic phase is approximately -20 °C or lower. The viscosity of the composition relates to the response time of the device. A short response time is desirable for adjusting light transmittance. Response time that is one millisecond shorter than that of the other devices is desirable. Thus a small viscosity of the composition is desirable. A small viscosity at a low temperature is more desirable.

Table 1. Characteristics of liquid crystal compositions and characteristics of liquid crystal dimming devices

| No. | Characteristics of liquid crystal compositions | Characteristics of liquid crystal dimming devices |
|---|---|---|
| 1 | a wide temperature range of a nematic phase | a wide temperature range in which the device can be used |
| 2 | a small viscosity | a short response time |
| 3 | a large optical anisotropy | a large haze |
| 4 | a large positive or negative dielectric anisotropy | a low threshold voltage and low power consumption, a large contrast ratio |
| 5 | a large specific resistance | a large voltage holding ratio |
| 6 | a high stability to ultraviolet light or heat | a long service life |

The optical anisotropy of the composition relates to the haze of the liquid crystal dimming device. The haze is the ratio of the diffused light to the total transmitted light. A large haze is desirable when light is shut off. A large optical anisotropy is desirable for a large haze. A large dielectric anisotropy of the composition contributes to a low threshold voltage or low power consumption of the device. A large dielectric anisotropy is thus desirable. A large specific resistance of the composition contributes to a large voltage holding ratio of the device. A large specific resistance of the composition contributes to a large voltage holding ratio of the device. It is thus desirable that a composition should have a large specific

resistance in the initial stages. It is desirable that a composition should have a large specific resistance, after it has been used for a long time. The stability or the weatherproof of the composition to light or heat relates to the service life of the device. When the stability or the weatherproof is high, the service life is long. Characteristics of this kind are expected for the device.

In liquid crystal dimming device, there are a normal mode and a verse mode. In the normal mode, the device is opaque when no voltage is applied, and becomes transparent when voltage is applied. In the reverse mode, the device is transparent when no voltage is applied, and becomes opaque when voltage is applied. A device with a reverse mode that becomes transparent when the device is broken down, is expected for the use of the window of automobiles and so forth.

Patent documents No. 7-12 disclose a liquid crystal medium.
Patent documents No.13-14 disclose a liquid crystal display device.
Patent document No. 15 discloses a liquid crystal dimmer element and a method for manufacturing the same.
Patent document No. 16 discloses a photoreactive liquid crystal composition, a light control element, and a method for producing light control element.
Patent document No. 17 discloses a compound having poly (difluoromethylene) chain, a liquid crystal composition, and a liquid crystal display device.
Patent document No. 18 discloses a polymerizable compound, a polymerizable composition, and a liquid crystal display device.
Patent document No. 19 discloses a polymerizable compound having triple bond, a liquid crystal composition, and a liquid crystal display device.

**Prior Art**

**Patent Document**

Patent document No. 1: JP H06-273725 A (1994).
Patent document No. 2: WO 2011-96386 A.
Patent document No. 3: JP S63-278035 A (1988).
Patent document No. 4: JP H01-198725 A (1989).
Patent document No. 5: JP H07-104262 A (1995).
Patent document No. 6: JP H07-175045 A (1995).
Patent document No. 7: JP 2016-186070 A.
Patent document No. 8: JP 2015-131956 A.
Patent document No. 9: JP 2013-144796 A.
Patent document No. 10: WO 2016/146245 A1.
Patent document No. 11: WO 2016/082922 A1.
Patent document No. 12: CN 104371744 A.
Patent document No. 13: JP 2013-254059 A.
Patent document No. 14: JP 2013-254060 A.
Patent document No. 15: JP 2003-255315 A.
Patent document No. 16: WO 2016/072436 A1.
Patent document No. 17: US 2016/0168466 A1.
Patent document No. 18: US 2015/0102259 A1.
Patent document No. 19: US 2015/0376505 A1.

**Summary of the Invention**

**Subject to be solved by the Invention**

The subject of the invention is to provide a liquid crystal composite that is suitable for dimming and that includes a liquid crystal composition satisfying at least one of characteristics such as a high maximum temperature of a nematic phase, a low minimum temperature of a nematic phase, a small viscosity, a large optical anisotropy, a large negative dielectric anisotropy, a large specific resistance, a high stability to light, a high stability to heat and a large elastic constant. Another subject is to provide a liquid crystal composite that is suitable for dimming and that includes a liquid crystal composition that is suitably balanced between at least two of these characteristics. Another subject is to provide a liquid

crystal dimming device including such a liquid crystal composite. Another subject is to provide a liquid crystal dimming device having characteristics such as a short response time, a large voltage holding ratio, a low threshold voltage, a large haze and a long service life.

## Means for solving the Subject

The invention relates to a liquid crystal composite for a reverse mode device that is transparent when no voltage is applied and is opaque when voltage is applied, the liquid crystal composite including a polymer and a liquid crystal composition that includes at least one compound selected form compounds represented by formula (1) of claim 1 as a first component, a liquid crystal dimming device, wherein a dimming layer is the liquid crystal composite as specified in the claims 1 to 16, a dimming window using the liquid crystal dimming device as specified in the claims 17 to 19, a smart window using the liquid crystal dimming device as specified in the claims 17 to 19, and the use of said liquid crystal composite of claims 1 to 16 as specified in the claims 22 to 25.

Disclosed herein is a liquid crystal composite including a liquid crystal composition that includes a polymer and at least one compound selected from compounds represented by formula (1) as a first component, and to a liquid crystal dimming device including the composite.

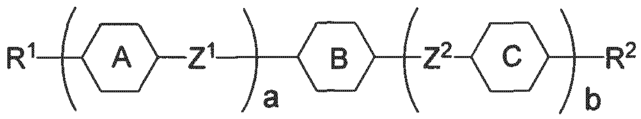

(1)

In formula (1) , $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2,6-diyl or chromane-2,6-diyl in which at least one hydrogen has been replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^1$ and $Z^2$ are independently a single bond, ethylene, carbonyloxy or methyleneoxy; a is 1, 2 or 3, b is 0 or 1; and the sum of a and b is 3 or less.

## Effect of the Invention

The advantage of the invention is to provide a liquid crystal composite that is suitable for dimming and that includes a liquid crystal composition satisfying at least one of characteristics such as a high maximum temperature of a nematic phase, a low minimum temperature of a nematic phase, a small viscosity, a large optical anisotropy, a large negative dielectric anisotropy, a large specific resistance, a high stability to light, a high stability to heat and a large elastic constant. Another advantage is to provide a liquid crystal composite that is suitable for dimming and that includes a liquid crystal composition that is suitably balanced between at least two of these characteristics. Another advantage is to provide a liquid crystal dimming device including such a liquid crystal composite. Another advantage is to provide a liquid crystal dimming device having characteristics such as a short response time, a large voltage holding ratio, a low threshold voltage, a large haze and a long service life.

## Embodiment to carry out the Invention

The usage of the terms in the specification and claims is as follows. The terms such as "liquid crystal compound", "polymerizable compound", "liquid crystal composition", "polymerizable composition", "liquid crystal composite" and "liquid crystal dimming device" are used. "Liquid crystal compound" is a generic term for a compound having a liquid crystal phase such as a nematic phase or a smectic phase, and for a compound having no liquid crystal phases but being mixed with a composition for the purpose of adjusting the characteristics, such as the temperature range of a nematic phase, the viscosity and the dielectric anisotropy. This compound has, for example, a six-membered ring such as 1,4-cyclohexylene or 1,4-phenylene, and its molecular structure is rod-like. "Polymerizable compound" is a compound that is added to a liquid crystal composition in order to form a polymer in it. A liquid crystal compound having alkenyl is not polymerizable in that sense.

"Liquid crystal composition" is prepared by mixing a plurality of liquid crystal compounds. An additive such as an optically active compound, an antioxidant, an ultraviolet light absorber, a coloring matter, an antifoaming agent and a polar compound is added to this liquid crystal composition as required. Even if an additive is added, the ratio of a liquid crystal

compound is expressed as a percentage by weight (% by weight) based on the weight of the liquid crystal composition excluding the additive. The ratio of the additive is expressed as a percentage by weight (% by weight) based on the weight of the liquid crystal composition excluding the additive. That is to say, the ratio of the additive or liquid crystal compound is calculated on the basis of the total weight of the liquid crystal compounds.

"Polymerizable composition" is prepared by mixing a polymerizable compound with a liquid crystal composition. That is to say, a polymerizable composition is a mixture of at least one polymerizable compound and a liquid crystal composition. Additive such as a polymerization initiator, a polymerization inhibitor and a polar compound is added to the polymerizable compound as required. Even if an additive is added, the ratio of the polymerizable compound or the liquid crystal composition is expressed as a percentage by weight (% by weight) based on a polymerizable composition excluding the additive. The ratio of an additive such as a polymerization initiator, a polymerization inhibitor and a polar compound is expressed as a percentage by weight (% by weight) based on the liquid crystal composition. "Liquid crystal composite" is formed by the polymerization of a polymerizable composition. "Liquid crystal dimming device" has a liquid crystal composite and is a generic term for a liquid crystal display panel and a liquid crystal display module .

"The maximum temperature of a nematic phase" is sometimes abbreviated to "the maximum temperature". "The minimum temperature a nematic phase" is sometimes abbreviated to "the minimum temperature" . That "specific resistance is large" means that a composition has a large specific resistance in the initial stages, and that the composition has a large specific resistance, after it has been used for a long time. That "a voltage holding ratio is large" means that a device has a large voltage holding ratio at a temperature close to the maximum temperature as well as at room temperature in the initial stages, and that the device has a large voltage holding ratio at a temperature close to the maximum temperature as well as at room temperature, after it has been used for a long time. The characteristics of a composition or a device are sometimes studied using an aging test. The expression "increase the dielectric anisotropy" means that its value increases positively when the composition has positive dielectric anisotropy, and that its value increases negatively when the composition has negative dielectric anisotropy.

A compound represented by formula (1) is sometimes abbreviated to "compound (1)". At least one compound selected from compounds represented by formula (1) is sometimes abbreviated to "compound (1)". "Compound (1)" means one compound, a mixture of two compounds or a mixture of three or more compounds represented by formula (1). This applies to a compound represented by another formula. The expression "at least one 'A'" means that the number of 'A' is arbitrary. The expression "at least one 'A' may be replaced by 'B'" means that the position of 'A' is arbitrary when the number of 'A' is one, and the positions can also be selected without restriction when the number of 'A' is two or more. This rule also applies to the expression "at least one 'A' has been replaced by 'B'".

An expression such as "at least one $-CH_2-$ may be replaced by -O-" is used in this specification. In this case, $-CH_2-CH_2-CH_2-$ may be transformed to $-O-CH_2-O-$ by replacement of nonadjacent $-CH_2-$ with -O-. However, adjacent $-CH_2-$ should not be replaced by -O-. This is because $-O-O-CH_2-$ (peroxide) is formed by the replacement. That is to say, the expression means both "one $-CH_2-$ may be replaced by -O-" and "at least two nonadjacent $-CH_2-$ may be replaced by -O-". The same rule applies to the replacement with a divalent group such as -CH=CH- or -COO-, as well as the replacement with -O-.

The symbol for the terminal group, $R^1$, is used for a plurality of compounds in the chemical formulas of component compounds. In these compounds, two groups represented by two arbitrary $R^1$ may be the same or different. In one case, for example, $R^1$ of compound (1-1) is ethyl and $R^1$ of compound (1-2) is ethyl. In another case, $R^1$ of compound (1-1) is ethyl and $R^1$ of compound (1-2) is propyl. The same rule applies to other symbols. In formula (1), two rings A are present when subscript 'a' is 2. In this compound, two groups represented by two rings A may be the same or different. The same rule applies to two arbitrary rings A, when subscript 'a' is greater than 2. The same rule applies to other symbols. The same principle applies to a compound having substituents represented by the same symbol.

A symbol such as A, B, C or D surrounded by a hexagon corresponds to a ring such as ring A, ring B, ring C or ring D, respectively, and represents a ring such as a six-membered ring or a condensed ring. In the expression "ring A and ring B are independently X, Y or Z", "independently" is used since the subject is plural. When the subject is "ring A", "independently" is not used, since the subject is singular. When "ring A" is used in a plurality of formulas, the rule "may be the same or different" is applied to "ring A". The same applies to other groups.

2-Fluoro-1,4-phenylene means the two divalent groups described below. Fluorine may be facing left (L) or facing right (R) in a chemical formula. The same rule applies to a left-right asymmetric divalent group formed from a ring by removing two hydrogens, such as tetrahydropyran-2, 5-diyl. The same rule also applies to a bonding group such as carbonyloxy (-COO- or -OCO-) .

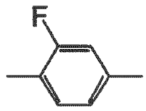 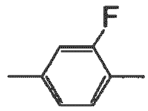

(L) (R)

Alkyl in a liquid crystal compound is straight-chain or branched-chain, and does not include cycloalkyl. In a liquid crystal compound, straight-chain alkyl is preferable to branched-chain alkyl. These apply to a terminal group such as alkoxy and alkenyl. With regard to the configuration of 1,4-cyclohexylene, trans is preferable to cis for increasing the maximum temperature.

The invention as claimed is defined by the appended claims.

A liquid crystal composite for a reverse mode-device that is transparent when no voltage is applied and is opaque when voltage is applied, the liquid crystal composite includes a polymer and a liquid crystal composition that includes at least one compound selected from compounds represented by formula (1) as a first component:

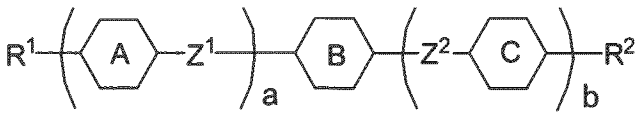

(1)

In formula (1), $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2, 6-diyl or chromane-2, 6-diyl in which at least one hydrogen has been replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^1$ and $Z^2$ are independently a single bond, ethylene, carbonyloxy or methyleneoxy; a is 1, 2 or 3, b is 0 or 1; and the sum of a and b is 3 or less.

The liquid crystal composite according to the present invention can include at least one compound selected from the group of compounds represented by formula (1-1) to formula (1-22) as shown in the list below as the first component. The other shown compounds may be comprised in addition.

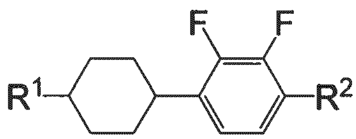

(1-1)

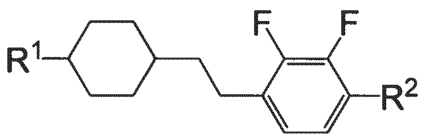

(1-2)

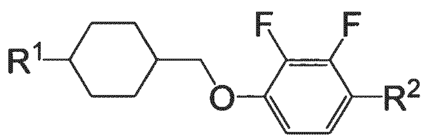

(1-3)

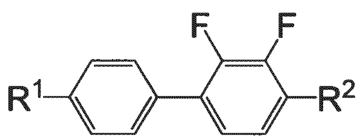

(1-4)

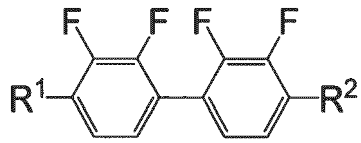

(1-5)

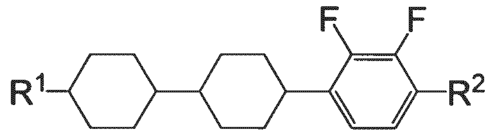

(1-6)

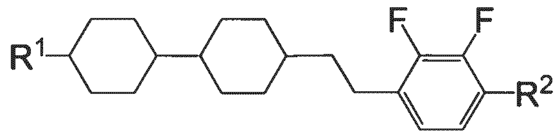

(1-7)

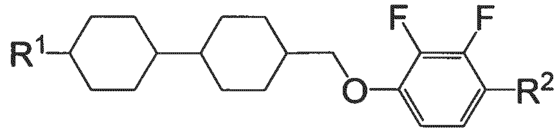

(1-8)

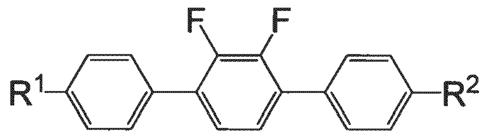

(1-9)

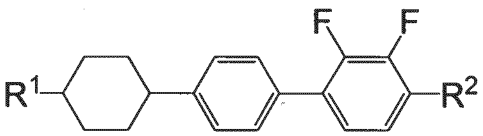

(1-10)

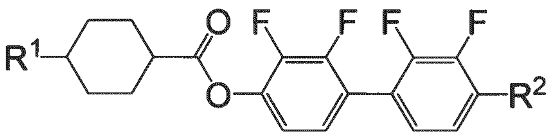

(1-11)

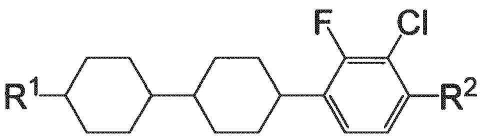

(1-12)

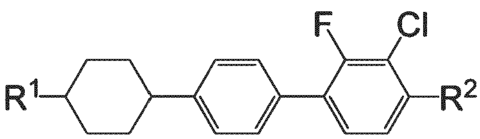

(1-13)

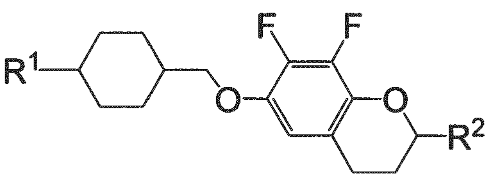

(1-14)

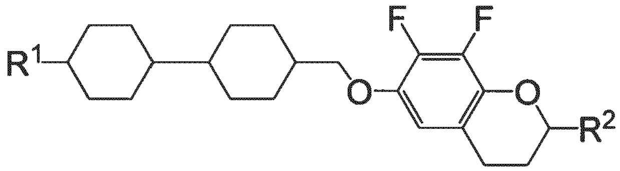

(1-15)

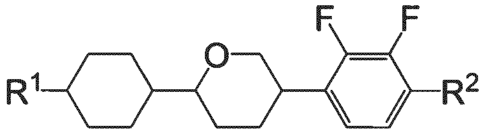

(1-16)

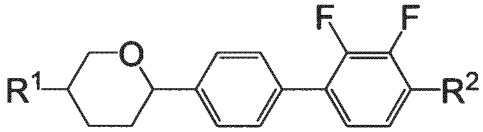

(1-17)

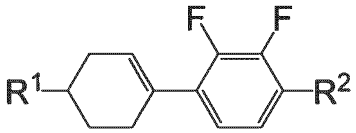

(1-18)

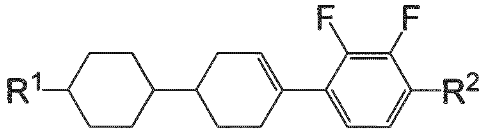

(1-19)

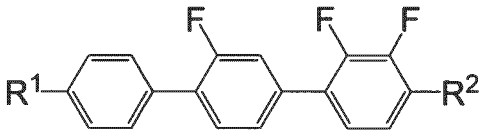

(1-20)

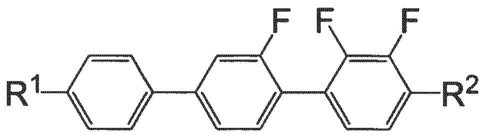

(1-21)

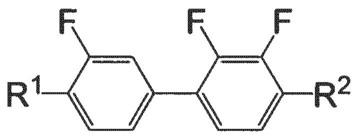

(1-22)

in formula (1-1) to formula (1-22), $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine.

In the liquid crystal composite according to the present invention, the first component can be comprised in a ratio in the range of 20% by weight to 90% by weight based on the weight of the liquid crystal composition.

The liquid crystal composite according to the present invention can include at least one compound selected from compounds represented by formula (2) as a second component:

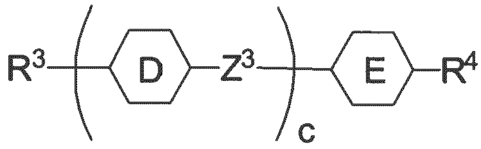

(2)

in formula (2), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine or alkenyl having 2 to 12 carbons in which at least one hydrogen has been replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, ethylene or carbonyloxy; and c is 1, 2 or 3.

The liquid crystal composite according to the present invention can include at least one compound selected from the group of compounds represented by formula (2-1) to formula (2-13) as the second component:

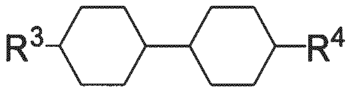

(2-1)

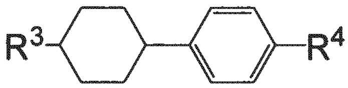

(2-2)

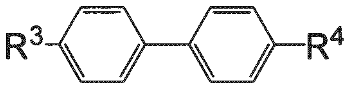

(2-3)

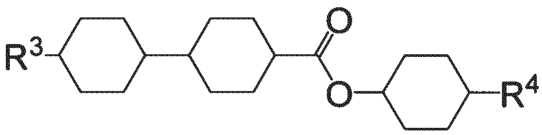

(2-4)

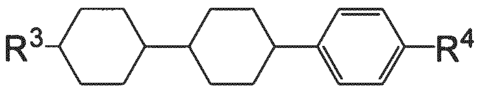

(2-5)

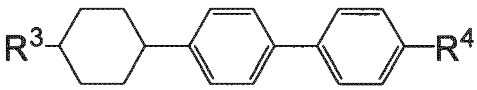

(2-6)

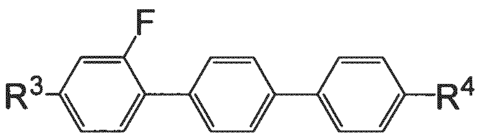

(2-7)

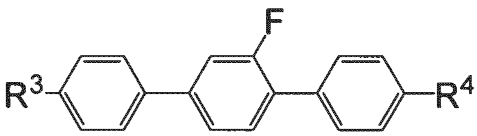

(2-8)

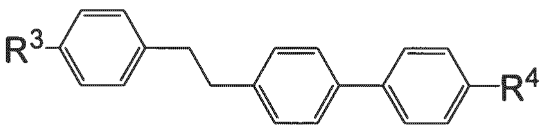

(2-9)

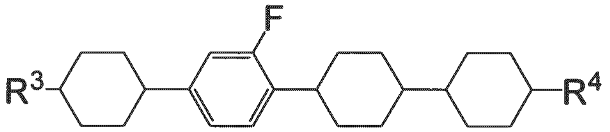

(2-10)

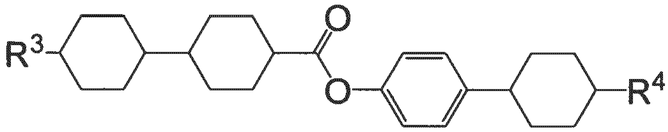

(2-11)

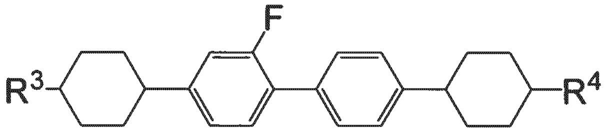

(2-12)

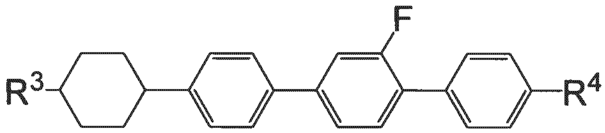

(2-13)

in formula (2-1) to formula (2-13), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine or alkenyl having 2 to 12 carbons in which at least one hydrogen has been replaced by fluorine or chlorine.

In the liquid crystal composite according to the present invention, the second component can be comprised in a ratio in the range of 10% by weight to 70% by weight based on the weight of the liquid crystal composition.

In the liquid crystal composite according to the present invention, a polymer can be derived from a compound represented by formula (3) :

$P^1$-$Z^4$-$P^2$ (3)

in formula (3), $Z^4$ is alkylene having 1 to 20 carbons, and in the alkylene at least one hydrogen may be replaced by alkyl having 1 to 5 carbons, fluorine, chlorine or $P^3$ , at least one $-CH_2-$ may be replaced by -O-, -CO-, -COO-, -OCO-, -NH- or $-N(R^5)-$, at least one $-CH_2-CH_2-$may be replaced by -CH=CH- or -C≡C-, and at least one $-CH_2-$ may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by $R^5$ or $P^3$, where $R^5$ is alkyl having 1 to 12 carbons, and in the alkyl at least one $-CH_2-$ may be replaced by -O-, -CO-, -COO- or -OCO-; and $P^1$ , $P^2$ and $P^3$ are independently a polymerizable group.

In the liquid crystal composite according to the present invention, a polymer can be derived from a compound represented by formula (3) :

$P^1$-$Z^4$-$P^2$ (3)

in formula (3), $Z^4$ is alkylene having 1 to 20 carbons, and in the alkylene at least one hydrogen may be replaced by alkyl having 1 to 5 carbons, fluorine, chlorine or $P^3$, at least one $-CH_2-$ may be replaced by -O-, -CO-, -COO-, -OCO-, -NH-, $-N(R^5)-$, -CH=CH- or -C≡C-, and at least one $-CH_2-$ may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by $R^5$ or $P^3$, where $R^5$ is alkyl having 1 to 12 carbons, and in the alkyl at least one $-CH_2-$ may be replaced by -O-, -CO-, -COO- or -OCO-; and $P^1$, $P^2$ and $P^3$ are independently a polymerizable group.

In formula (3), $P^1$, $P^2$ and $P^3$ can independently be selected from the group of polymerizable groups represented by formula (P-1) to formula (P-6) :

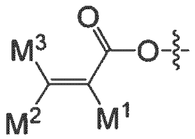
(P-1)
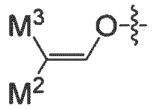
(P-2)
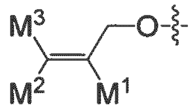
(P-3)
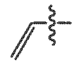
(P-4)
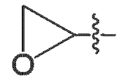
(P-5)
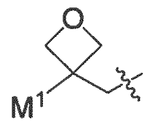
(P-6)

in formula (P-1) to formula (P-6), $M^1$, $M^2$ and $M^3$ are independently hydrogen, fluorine, alkyl having 1 to 5 carbons or alkyl having 1 to 5 carbons in which at least one hydrogen has been replaced by fluorine or chlorine.

In formula (3), at least one of $P^1$, $P^2$ and $P^3$ can be acryloyloxy or methacryloyloxy.

In the liquid crystal composite according to the present invention, a polymer can be derived from a compound represented by formula (4) :

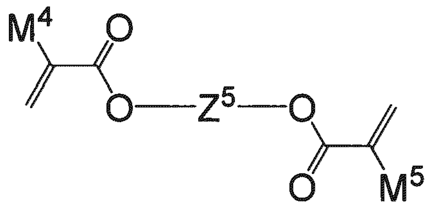
(4)

in formula (4), $M^4$ and $M^5$ are independently hydrogen or methyl; and $Z^5$ is alkylene having 20 to 80 carbons, and in the alkylene at least one hydrogen may be replaced by alkyl having 1 to 20 carbons, fluorine or chlorine, at least one $-CH_2-$ may be replaced by -O-, -CO-, -COO-, -OCO-, -NH- or $-N(R^5)-$, and at least one $-CH_2-CH_2-$ may be replaced by -CH=CH- or -C≡C-, where $R^5$ is alkyl having 1 to 12 carbons, and in the alkyl at least one $-CH_2-$ may be replaced by -O-, -CO-, -COO- or -OCO-.

In the liquid crystal composite according to the present invention, a polymer can be derived from a compound represented by formula (5) :

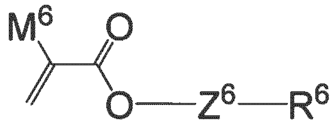
(5)

in formula (5), $M^6$ is hydrogen or methyl; $Z^6$ is a single bond or alkylene having 1 to 5 carbons, and in the alkylene at least one hydrogen may be replaced by fluorine or chlorine and at least one $-CH_2-$ may be replaced by -O-, -CO-, -COO- or -OCO-; and $R^6$ is alkyl having 1 to 40 carbons, and in the alkyl at least one hydrogen may be replaced by fluorine or chlorine, at least one $-CH_2-$ may be replaced by -O-, -CO-, -COO- or -OCO-, and at least one $-CH_2-$ may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by alkyl having 1 to 12 carbons, and in the alkyl at least one $-CH_2-$may be replaced by -O-, -CO-, -COO- or -OCO-.

formula (5), $R^6$ can be alkyl having 1 to 40 carbons, and in the alkyl at least one hydrogen may be replaced by fluorine or chlorine and at least one $-CH_2-$ may be replaced by -O-, -CO-, -COO- or -OCO-.

In the liquid crystal composite according to the present invention, a polymer can be derived from the group of compounds represented by formula (6), formula (7) and formula (8):

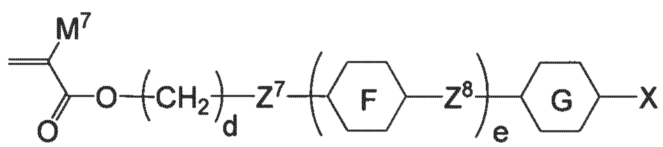
(6)

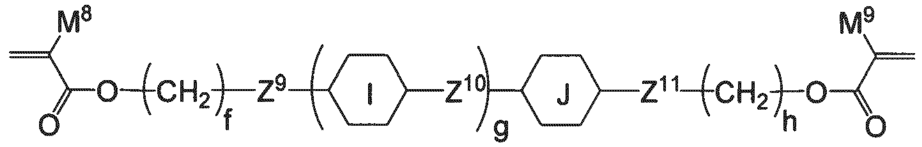

(7)

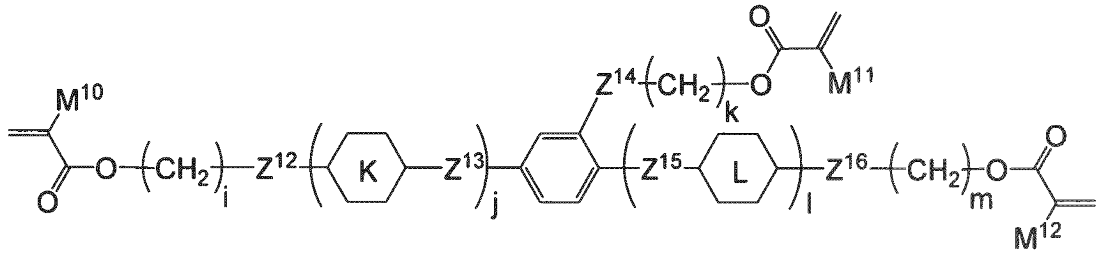

(8)

in formula (6), formula (7) and formula (8), ring F, ring G, ring I, ring J, ring K and ring L are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, where at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 1 to 5 carbons or alkanoyl having 1 to 5 carbons; $Z^7$ , $Z^9$ , $Z^{11}$ , $Z^{12}$ and $Z^{16}$ are independently a single bond, -O-, -COO-, -OCO- or -OCOO-; $Z^8$ , $Z^{10}$ , $Z^{13}$ and $Z^{15}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, $-N=C(CH_3)-$, $-C(CH_3)=N-$, -N=N- or -C≡C-; $Z^{14}$ is a single bond, -O- or -COO-; X is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 1 to 20 carbons; e and g are an integer from 1 to 4; j and l are independently an integer from 0 to 3; the sum of j and 1 is 1 to 4; d, f, h, i, k and m are independently an integer from 0 to 20; and $M^7$ to $M^{12}$ are independently hydrogen or methyl.

In the liquid crystal composite according to the present invention, the liquid crystal composition can be comprised in a ratio in the range of 50% by weight to 95% by weight, and the polymer can be comprised in a ratio in the range of 5% by weight to 50% by weight based on the weight of the liquid crystal composite.

The liquid crystal composite according to the present invention can be obtained from a precursor of a polymerizable composition including the liquid crystal composition and the polymerizable compound, and the polymerizable composition can include a photo-polymerization initiator as an additive.

The present invention is further concerned with a liquid crystal dimming device, including a dimming layer which is the liquid crystal composite according to the present invention, and the dimming layer can be sandwiched between a pair of transparent substrates and the transparent substrates can have a transparent electrode.

In the liquid crystal dimming device according to the present invention, the transparent substrate can be a glass plate or an acrylic plate.

In the liquid crystal dimming device according to the present invention, the transparent substrate can be a plastic film.

The present invention is further concerned with a dimming window using the liquid crystal dimming device according to the present invention.

The present invention is further concerned with a smart window using the liquid crystal dimming device according to the present invention.

A further aspect of the present invention is the use of the liquid crystal composite according to the present invention for a liquid crystal dimming device.

The liquid crystal composite according to the present invention can be used for a liquid crystal dimming device where the transparent substrate is a plastic film.

The liquid crystal composite according to the present invention can be used for a dimming window.

The liquid crystal composite according to the present invention can be used for a smart window.

With regard to the liquid crystal composite described above, the polymer may be derived from a compound represented by formula (3) or may be derived from a mixture with a polymerizable compound that is different from a compound represented by formula (3) . With regard to the liquid crystal composite described above, in formula (3), $P^1$, $P^2$ and $P^3$ may be independently acryloyloxy or methacryloyloxy.

The invention includes also the followings. (a) The liquid crystal composite described above, wherein the ratio of the liquid crystal composition is in the range of 50% by weight to 90% by weight, and the ratio of the polymer is in the range of 10% by weight to 50% by weight, based on the weight of the liquid crystal composite. (b) The liquid crystal composite described above, wherein the ratio of the liquid crystal composition is in the range of 50% by weight to 85% by weight, and

the ratio of the polymer is in the range of 15% by weight to 50% by weight, based on the weight of the liquid crystal composite. (c) The liquid crystal composite described above, wherein the ratio of the liquid crystal composition is in the range of 60% by weight to 80% by weight, and the ratio of the polymer is in the range of 20% by weight to 40% by weight, based on the weight of the liquid crystal composite.

The liquid crystal dimming device of the invention will be explained in the following order: First, the structure of the liquid crystal composite will be explained. Second, the structure of the liquid crystal composition will be explained. Third, the main characteristics of the component compounds and the main effects of these compounds on the composition will be explained. Forth, a combination of the components in the composition, a desirable ratio of the components and its basis will be explained. Fifth, a desirable embodiment of the component compounds will be explained. Sixth, desirable component compounds will be shown. Sixth, methods for synthesizing the component compounds will be explained. Eighth, additives that may be added to the composition will be explained. Ninth, polymerizable compounds and polymerizable compositions will be explained. Last, the liquid crystal composites will be explained.

First, the structure of the liquid crystal composite will be explained. The liquid crystal composite can be obtained by the polymerization of a polymerizable composition. The polymerizable composition is a mixture of a liquid crystal composition and a polymerizable compound. The dielectric anisotropy of the liquid crystal composition is negative. An additive may be added to the composition. The additive may be a polymerization initiator, a polar compound and so forth. The polymerizable composition gives a liquid crystal composite, since a polymer formed by polymerization is phase-separated. That is to say, a liquid crystal composite is formed in which a polymer is combined with a liquid crystal composition. The liquid crystal composite is suitable for a reverse mode-device that is transparent when no voltage is applied and that is opaque when voltage is applied. The optical anisotropy of the liquid crystal composition and the refractive index of the polymer relate to the transparency of the liquid crystal dimming device. It is generally desirable that the optical anisotropy ($\Delta n$) of the liquid crystal composition should be higher. The optical anisotropy preferably 0.16 or more, more preferably 0.18 or more.

In a device with polymer-dispersed type, a liquid crystal composition is dispersed as droplets in a polymer. Each of the droplets is independent, and they are not continuous. In contrast, in a device with a polymer-network type, a polymer has a three dimensional-network structure, and a liquid crystal composition is continuous although it is surrounded by this network. In these devices, it is desirable that the ratio of the liquid crystal composition based on the liquid crystal composite should be larger for an effective light-scattering. It is desirable that the ratio of the polymer should be larger, since the driving voltage is decreased by reducing the size of droplets or networks.

A desirable ratio of the liquid crystal composition is in the range of 50% by weight to 95% by weight based on the weight of the liquid crystal composite. The desirable ratio is also in the range of 50% by weight to 90% by weight. A more desirable ratio is in the range of 50% by weight to 85% by weight. An especially desirable ratio is in the range of 60% by weight to 80% by weight. An especially desirable ratio is in the range of 70% by weight to 80% by weight. The ratio of the polymer can easily be calculated, because the sum of the liquid crystal composite and the polymer is 100% by weight. Incidentally, the ratio of the polymer based on the liquid crystal composite is the same with the ratio of the polymerizable compound based on the polymerizable composition.

When the ratio of the liquid crystal composition and the polymer is in these ranges, a device with a polymer-network type is formed. When the ratio of the polymer is large, a structure of polymer-dispersed type seems to be mixed. In contrast, a device with a polymer sustained alignment type is formed when the ratio of the polymer is smaller than 5% by weight. This is abbreviated as PSA (polymer sustained alignment) device. Example 1 in WO 2012-050178 A describes "the monomer is added so as to be 0.5 wt% based on the liquid crystal material" (paragraph 0105) . As can be seen from this description, a small amount of polymerizable compound is added to a liquid crystal material (a liquid crystal composition) in a PSA device.

In the PSA device, the polymer adjusts the pretilt angle of liquid crystal molecules. The liquid crystal molecules are stabilized by optimizing the pretilt angle, and thus the response time of the device is decreased. In contrast, in the polymer network type-device having a reverse mode, the liquid crystal molecules are homeotropically aligned by the action of an alignment film so that the device is transparent. The liquid crystal molecules are arranged parallel to the substrate when a voltage is applied to the device. Light is scattered because there is a difference between the refractive index of the polymer and that of the liquid crystal molecules, and the device becomes opaque. Thus, a polarizer is not required in the polymer network type-device, which is different from the PSA device.

Second, the structure of the liquid crystal composition will be explained. The composition includes a plurality of liquid crystal compounds. The composition may include an additive. The additive includes an optically active compound, an antioxidant, an ultraviolet light absorber, a coloring matter, an antifoaming agent, a polymerization initiator, a polymerization inhibitor and a polar compound. The compositions are classified into composition A and composition B in view of the liquid crystal compound. Composition A may further include any other liquid crystal compound, an additive and so forth, in addition to liquid crystal compounds selected from compound (1) and compound (2). "Any other liquid crystal compound" is a liquid crystal compound that is different from compound (1) and compound (2) . Such a compound is mixed with the composition for the purpose of further adjusting the characteristics.

Composition B consists essentially of liquid crystal compounds selected from compound (1) and compound (2) . The term "essentially" means that the composition B may include an additive, but does not include any other liquid crystal compound. Composition B has a smaller number of components than composition A. Composition B is preferable to composition A in view of cost reduction. Composition A is preferable to composition B from the point of view that characteristics can be further adjusted by mixing with any other liquid crystal compound.

Third, the main characteristics of the component compounds and the main effects of these compounds on the composition or the device will be explained. Table 2 summarizes the main characteristics of the component compounds based on the effects of the invention. In Table 2, the symbol L stands for "large" or "high", the symbol M stands for "medium", and the symbol S stands for "small" or "low". The symbols L, M and S show a classification based on a qualitative comparison among the component compounds, and the symbol 0 (zero) means that the value is quite small.

Table 2. Characteristics of compounds

| Compounds | Compound (1) | Compound (2) |
|---|---|---|
| Maximum Temperature | S - L | S - L |
| Viscosity | M - L | S - M |
| Optical Anisotropy | M - L | S - L |
| Dielectric Anisotropy | M - L[1)] | 0 |
| Specific Resistance | L | L |
| 1) The value of the dielectric anisotropy is negative, and the symbol expresses the magnitude of the absolute value. | | |

The main effects of the component compounds on the characteristics of the composition are as follows. Compound (1) increases the dielectric anisotropy. Compound (2) increases the maximum temperature or decreases the minimum temperature.

Fourth, a combination of the components in the composition, a desirable ratio of the components and its basis will be explained. A desirable combination of the components in the composition is the first component plus the second component.

A desirable ratio of the first component is approximately 20% by weight or more for increasing the dielectric anisotropy negatively and is approximately 90% by weight or less for decreasing the minimum temperature. A more desirable ratio is in the range of approximately 30% by weight to approximately 85% by weight. An especially desirable ratio is in the range of approximately 40% by weight to approximately 80% by weight.

A desirable ratio of the second component is approximately 10% by weight or more for increasing the maximum temperature or for decreasing the minimum temperature, and is approximately 70% by weight or less for increasing the dielectric anisotropy. A more desirable ratio is in the range of approximately 15% by weight to approximately 65% by weight. An especially desirable ratio is in the range of approximately 20% by weight to approximately 60% by weight.

Fifth, a desirable embodiment of the component compounds will be explained. In formula (1) and formula (2), $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine. Desirable $R^1$ or $R^2$ is alkyl having 1 to 12 carbons for increasing the stability to light or heat, and alkoxy having 1 to 12 carbons for increasing the dielectric anisotropy.

$R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine or alkenyl having 2 to 12 carbons in which at least one hydrogen has been replaced by fluorine or chlorine. Desirable $R^3$ or $R^4$ is alkenyl having 2 to 12 carbons for increasing the maximum temperature or for decreasing the minimum temperature, and alkyl having 1 to 12 carbons for increasing the stability to light or heat.

Desirable alkyl is methyl, ethyl, propyl, butyl, pentyl, hexyl, heptyl or octyl. More desirable alkyl is methyl, ethyl, propyl, butyl or pentyl for decreasing the minimum temperature.

Desirable alkoxy is methoxy, ethoxy, propoxy, butoxy, pentyloxy, hexyloxy or heptyloxy. More desirable alkoxy is methoxy or ethoxy for decreasing the minimum temperature.

Desirable alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. More desirable alkenyl is vinyl, 1-propenyl, 3-butenyl or 3-pentenyl for decreasing the minimum temperature. A desirable configuration of -CH=CH- in the alkenyl depends on the position of the double bond. Trans is preferable in the alkenyl such as 1-propenyl, 1-butenyl, 1-pentenyl, 1-hexenyl, 3-pentenyl and 3-hexenyl for decreasing the minimum temperature, for instance. Cis is preferable in the alkenyl

such as 2-butenyl, 2-pentenyl and 2-hexenyl.

Desirable alkenyloxy is vinyloxy, allyloxy, 3-butenyloxy, 3-pentenyloxy or 4-pentenyloxy. More desirable alkenyloxy is allyloxy or 3-butenyloxy for decreasing the minimum temperature.

Desirable examples of alkyl in which at least one hydrogen has been replaced by fluorine or chlorine are fluoromethyl, 2-fluoroethyl, 3-fluoropropyl, 4-fluorobutyl, 5-fluoropentyl, 6-fluorohexyl, 7-fluoroheptyl or 8-fluorooctyl. More desirable examples are 2-fluoroethyl, 3-fluoropropyl, 4-fluorobutyl or 5-fluoropentyl for increasing the dielectric anisotropy.

Desirable examples of alkenyl in which at least one hydrogen has been replaced by fluorine or chlorine are 2,2-difluorovinyl, 3,3-difluoro-2-propenyl, 4,4-difluoro-3-butenyl, 5,5-difluoro-4-pentenyl or 6,6-difluoro-5-hexenyl. More desirable examples are 2,2-difluorovinyl or 4,4-difluoro-3-butenyl for decreasing the minimum temperature.

Ring A and ring C are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2,6-diyl or chromane-2,6-diyl in which at least one hydrogen has been replaced by fluorine or chlorine. Desirable ring A or ring C is 1,4-cyclohexylene for decreasing the minimum temperature or for increasing the maximum temperature, and 1,4-phenylene for decreasing the minimum temperature. Tetrahydropyran-2,5-diyl is

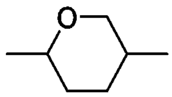

or

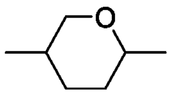

,

preferably

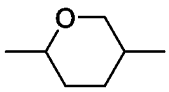

.

Ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl. Desirable ring B is 2,3-difluoro-1,4-phenylene for decreasing the minimum temperature and 2-chloro-3-fluoro-1,4-phenylene for deceasing the optical anisotropy and 7,8-difluorochromane-2,6-diyl for increasing the dielectric anisotropy.

Ring D and ring E are independently 1,4-cyclohexylene, 1,4-phenylene, 2-fluoro-1,4-phenylene or 2,5-difluoro-1,4-phenylene. Desirable ring D or ring E is 1,4-cyclohexylene for increasing the maximum temperature and 1,4-phenylene for decreasing the minimum temperature.

$Z^1$ and $Z^2$ are independently a single bond, ethylene, carbonyloxy or methyleneoxy. Desirable $Z^1$ or $Z^2$ is a single bond or ethylene for decreasing the minimum temperature, and methyleneoxy for increasing the dielectric anisotropy. $Z^3$ is a single bond, ethylene or carbonyloxy. Desirable $Z^3$ is a single bond for increasing the stability to light or heat.

a is 1, 2 or 3; b is 0 or 1; and the sum of a and b is 3 or less. Desirable a is 1 for decreasing the minimum temperature and is 2 or 3 for increasing the maximum temperature. Desirable b is 0 for increasing the dielectric anisotropy and is 1 for decreasing the minimum temperature. c is 1, 2 or 3. Desirable c is 1 for decreasing the minimum temperature and is 2 or 3 for increasing the maximum temperature.

The polymer is derived from a polymerizable compound. The polymerizable compound may be alone or a mixture of a plurality of compounds. Examples of the polymerizable compound are compound (3), compound (4), compound (5), compound (6), compound (7) or compound (8). The polymerizable compound may be a mixture of compounds selected from the group of compound (3) to compound (8). The polymerizable compound may be a mixture of polymerizable compounds that is different from compound (3) to compound (8). Desirable polymerizable compound includes compound (3), compound (4), compound (5), compound (6), compound (7), compound (8) or a mixture of these, in the ratio of 50% by weight or more.

In formula (3), $Z^4$ is alkylene having 1 to 20 carbons, and in the alkylene at least one hydrogen may be replaced by alkyl having 1 to 5 carbons, fluorine, chlorine or $P^3$, at least one $-CH_2-$ may be replaced by -O-, -CO-, -COO-, -OCO-, -NH-, $-N(R^5)-$, -CH=CH- or -C ≡C-, and at least one $-CH_2-$ may be replaced by a divalent group formed from a carbocyclic

saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number carbons is 5 to 35 and at least one hydrogen may be replaced by $R^5$ or $P^3$, wherein $R^5$ is alkyl having 1 to 12 carbons, and in the alkyl at least one $-CH_2-$ may be replaced by -O-, -CO-, -COO- or -OCO-.

Examples of the divalent group formed from a carbocyclic or a heterocyclic saturated aliphatic compound by removing two hydrogens include 1,4-cyclohexylene, decahydronaphthalene-2,6-diyl, tetrahydropyran-2,5-diyl, and 1,3-dioxane-2,5-diyl. Examples of the divalent group formed from a carbocyclic or a heterocyclic unsaturated aliphatic compound by removing two hydrogens include 1,4-cyclohexenylene and dihydropyran-2,5-diyl. Examples of the divalent group formed from a carbocyclic or a heterocyclic aromatic compound by removing two hydrogens include 1,4-phenylene, 1,4-phenylene in which at least one hydrogen has been replaced by fluorine, 1,2,3,4-tetrahydronaphthalene-2,6-diyl, naphthalene-1,2-diyl and pyrimidine-2,5-diyl.

Desirable $Z^4$ is alkylene having 1 to 20 carbons, and in the alkylene at least one hydrogen may be replaced by alkyl having 1 to 5 carbons, at least one $-CH_2-$ may be replaced by -O-, at least one $-CH_2-$ may be replaced by a divalent group formed from a carbocyclic saturated aliphatic compound or a carbocyclic aromatic compound by removing two hydrogens, and in these divalent groups the number of carbons is 5 to 35. More desirable $Z^4$ is alkylene having 1 to 20 carbons, and in the alkylene at least one hydrogen may be replaced by alkyl having 1 to 5 carbons, at least one $-CH_2-$ may be replaced by -O-.

Desirable $Z^4$ includes a ring structure such as 1,4-cyclohexylene or 1,4-phenylene for increasing the compatibility with a liquid crystal composition. Desirable $Z^4$ is includes a chain structure such as alkylene for easily forming a network structure. One example of compound (3) includes compound (3-1) to compound (3-3).

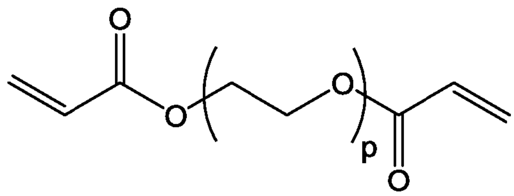

(3-1)

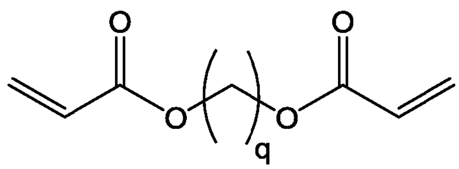

(3-2)

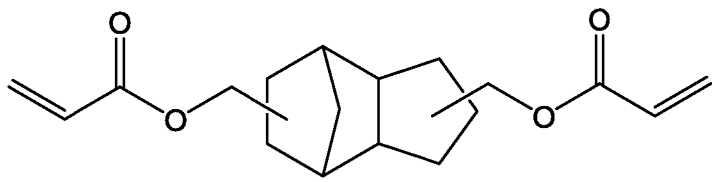

(3-3)

In formula (3-1), p is an integer from 1 to 6, and in formula (3-2), q is an integer from 5 to 20.

$P^1$, $P^2$ and $P^3$ are independently a polymerizable group. A desirable polymerizable group is formula (P-1) to formula (P-6). A more desirable polymerizable group is formula (P-1) to formula (P-3) .

In formula (P-1) to formula (P-6), $M^1$, $M^2$ and $M^3$ are independently hydrogen, fluorine, alkyl having 1 to 5 carbons or alkyl having 1 to 5 carbons in which at least one hydrogen has been replaced by fluorine or chlorine. Desirable $M^1$, $M^2$ or $M^3$ is hydrogen or methyl for increasing the reactivity. More desirable $M^1$ is hydrogen or methyl, and more desirable $M^2$ or $M^3$ is hydrogen.

In formula (4), $M^4$ and $M^5$ are independently hydrogen or methyl. Desirable $M^4$ or $M^5$ is hydrogen for increasing the reactivity.

$Z^5$ is alkylene having 20 to 80 carbons, and in the alkylene at least one hydrogen may be replaced by alkyl having 1 to 20 carbons, fluorine or chlorine, at least one $-CH_2-$ may be replaced by -O-, -CO-, -COO-, -OCO-, -NH- or $-N(R^5)-$, and at least one $-CH_2-CH_2-$ may be replaced by -CH=CH- or -C≡C-, where $R^5$ is alkyl having 1 to 12 carbons, and in the alkyl at least one $-CH_2-$ may be replaced by -O-, -CO-, -COO- or -OCO-. Desirable $Z^5$ is alkylene having 20 to 60 carbons for a low voltage driving, and in the alkylene at least one hydrogen may be replaced by alkyl having 1 to 20 carbons and at least one $-CH_2-$may be replaced by -O-, -COO- or -OCO-.

More desirable $Z^5$ is alkylene in which at least one hydrogen has been replaced by alkyl for a low voltage driving. It is desirable that the steric hindrance should be prevented when two hydrogens of alkylene has been replaced by alkyl. For example, two alkyls are separated sufficiently, or alkyl having 1 to 5 carbons is used for one of alkyls. The same applies when at least three hydrogens have been replaced by alkyls.

One example of compound (4) includes compound (4-1).

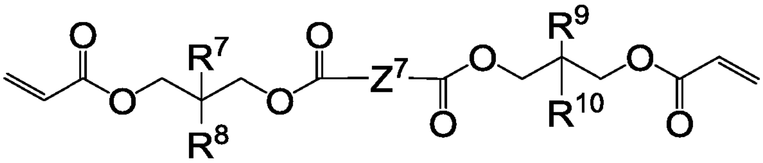

(4-1)

In formula (4-1), $R^7$ and $R^9$ are independently alkyl having 1 to 5 carbons and $R^8$ and $R^{10}$ are independently alkyl having 5 to 20 carbons, and in the alkyl at least one $-CH_2-$ may be replaced by -O-, -CO-, -COO- or -OCO-, $Z^7$ is alkylene having 10 to 30 carbons, and in the alkylene at least one $-CH_2-$ may be replaced by -O-, -CO-, -COO- or -OCO-.

One example of compound (4-1) includes compound (4-1-1) and compound (4-1-2).

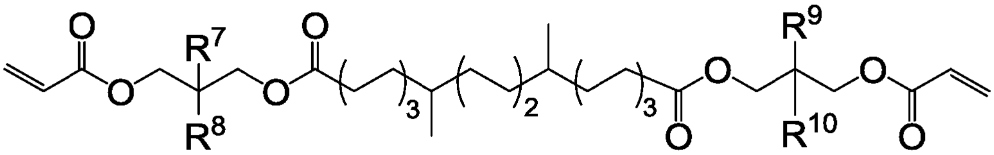

(4-1-1)

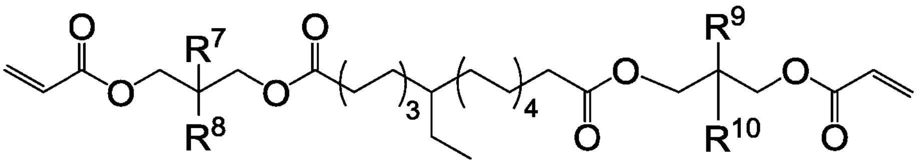

(4-1-2)

In formula (4-1-1) and formula (4-1-2), for example, $R^7$ and $R^9$ is ethyl, $R^8$ and $R^{10}$ are independently $-CH_2OCOC_9H_{19}$, $-CH_2OCOC_{10}H_{21}$, $-CH_2OC_8H_{17}$ or $-CH_2OC_{11}H_{23}$.

In formula (5), $M^6$ is hydrogen or methyl. Desirable $M^6$ is hydrogen for increasing the reactivity.

$Z^6$ is a single bond or alkylene having 1 to 5 carbons, and in the alkylene at least one hydrogen may be replaced by fluorine or chlorine and at least one $-CH_2-$ may be replaced by -O-, -CO-, -COO- or -OCO-. Desirable $Z^6$ is a single bond or alkylene having 1 to 5 carbons, and in the alkylene at least one $-CH_2-$ may be replaced by -O-, -CO-, -COO- or -OCO-.

$R^6$ is alkyl having 1 to 40 carbons, and in the alkyl at least one hydrogen may be replaced by fluorine or chlorine, at least one $-CH_2-$ may be replaced by -O-, -CO-, -COO- or -OCO-, and at least one $-CH_2-$ may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by alkyl having 1 to 12 carbons, and in the alkyl at least one $-CH_2-$ may be replaced by -O-, -CO-, -COO- or -OCO-. Desirable $R^6$ is alkyl having 5 to 30 carbons. More desirable $R^6$ is branched alkyl having 5 to 30 carbons.

One example of compound (5) includes compound (5-1) to compound (5-6) .

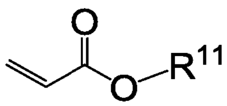

(5-1)

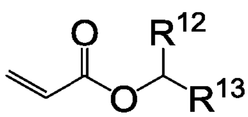

(5-2)

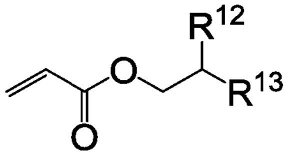

(5-3)

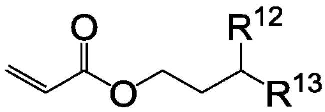

(5-4)

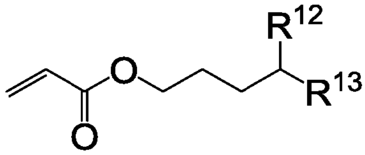

(5-5)

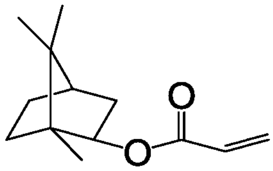

(5-6)

In formula (5-1) to formula (5-5), $R^{11}$ is alkyl having 5 to 20 carbons, and in the alkyl at least one $-CH_2-$ may be replaced by -O-, -CO-, -COO- or -OCO- and $R^{12}$ and $R^{13}$ are independently alkyl having 3 to 10 carbons, and in the alkyl at least one $-CH_2-$ may be replaced by -O-, -CO-, -COO- or -OCO-.

In formula (6), formula (7) and formula (8), ring F, ring G, ring I, ring J, ring K and ring L are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, where at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 1 to 5 carbons or alkanoyl having 1 to 5 carbons. In formula (6), formula (7) and formula (8), desirable ring is 1,4-cyclohexylene, 1,4-phenylene, 2-fluoro-1,4-phenylene, 2-methyl-1,4-phenylene, 2-methoxy-1,4-phenylene or 2-trifluoromethyl-1,4-phenylene. A more desirable ring is 1,4-cyclohexylene or 1,4-phenylene.

$Z^7$, $Z^9$, $Z^{11}$, $Z^{12}$ and $Z^{16}$ are independently a single bond, -O-, -COO-, -OCO- or -OCOO-. $Z^8$, $Z^{10}$, $Z^{13}$ and $Z^{15}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, $-N=C(CH_3)-$, $-C(CH_3)=N-$, -N=N- or -C=C-. $Z^{14}$ is a single bond, -O- or -COO-. In formula (6) and formula (7), desirable $Z^8$ , $2^{10}$ , $Z^{13}$ or $Z^{15}$ is a single bond, $-OCH_2-$, $-CH_2O-$, -COO-, -OCO-, $-CH_2CH_2-$, $-CH_2CH_2COO-$ or $-OCOCH_2CH_2-$.

X is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 1 to 20 carbons.

e and g is an integer from 1 to 4; j and 1 are independently an integer from 0 to 3; the sum of j and 1 is 1 to 4; and d, f, h, i, k and m are independently an integer from 0 to 20.

$M^7$ to $M^{12}$ are independently hydrogen or methyl.

One example of compound (6) includes compound (6-1) to compound (6-24).

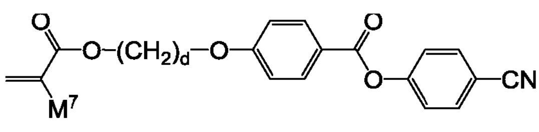

(6-1)

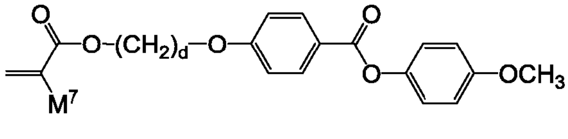

(6-2)

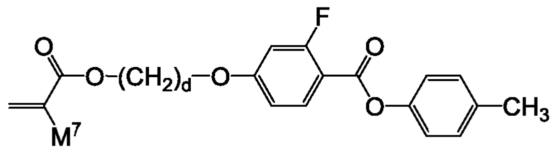

(6-3)

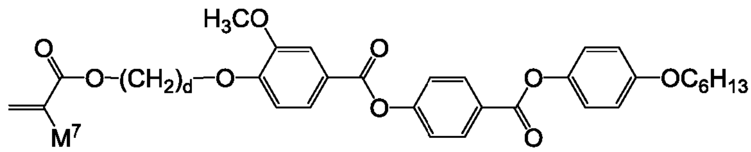

(6-4)

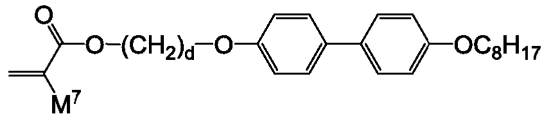

(6-5)

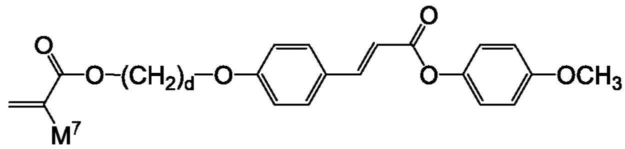

(6-6)

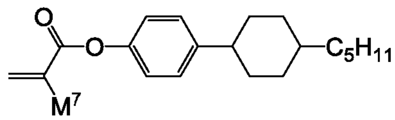

(6-7)

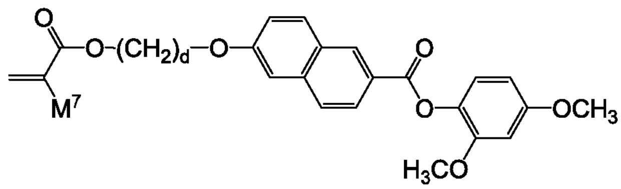

(6-8)

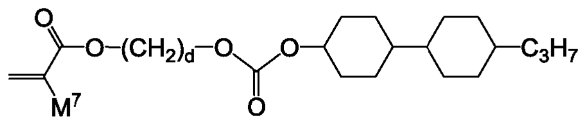

(6-9)

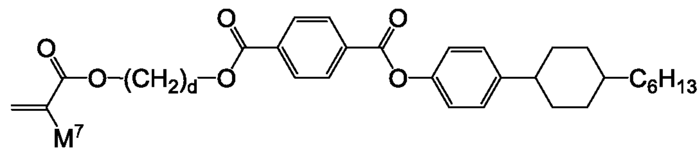

(6-10)

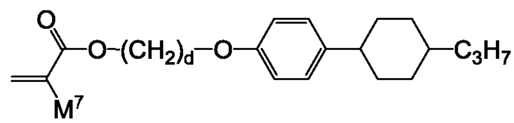

(6-11)

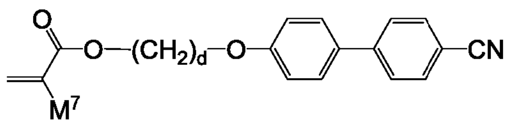

(6-12)

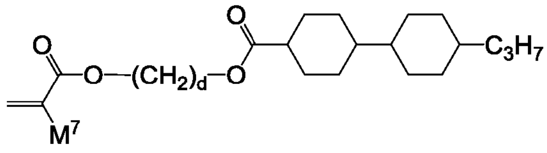

(6-13)

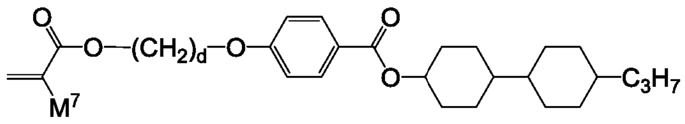

(6-14)

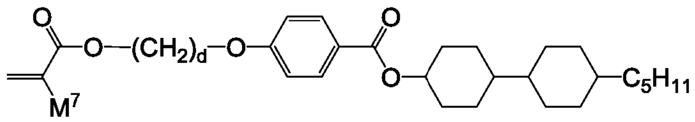

(6-15)

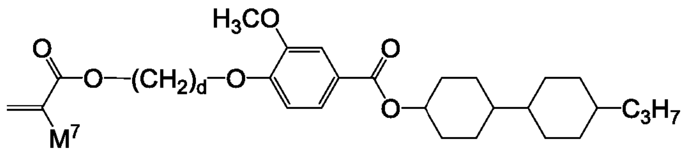

(6-16)

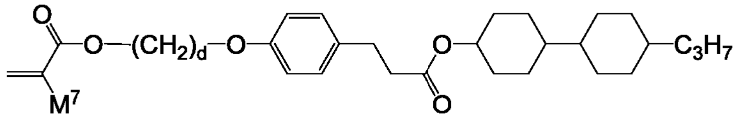

(6-17)

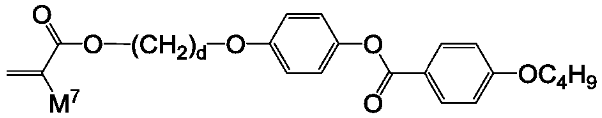

(6-18)

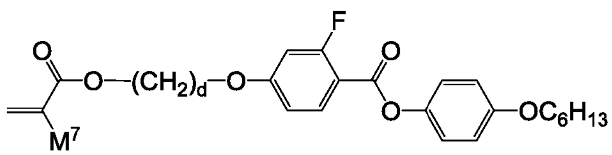

(6-19)

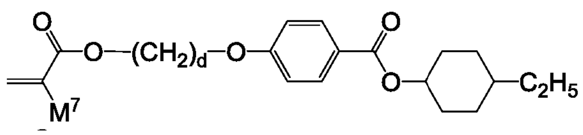

(6-20)

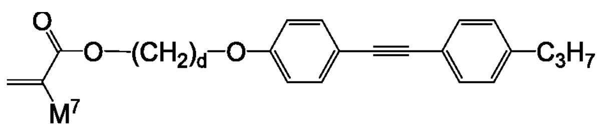

(6-21)

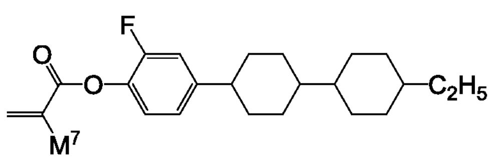

(6-22)

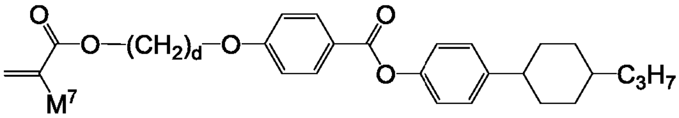

(6-23)

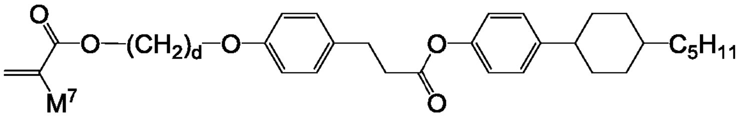

(6-24)

In formula (6-1) to formula (6-24), $M^7$ is hydrogen or methyl, and d is an integer from 1 to 20.

One example of compound (7) includes compound (7-1) to compound (7-31).

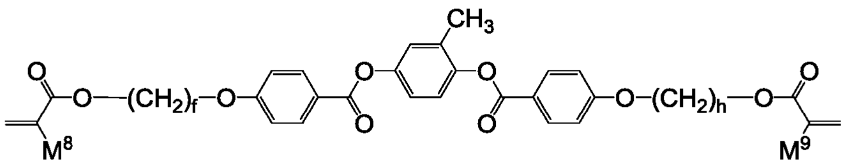

(7-1)

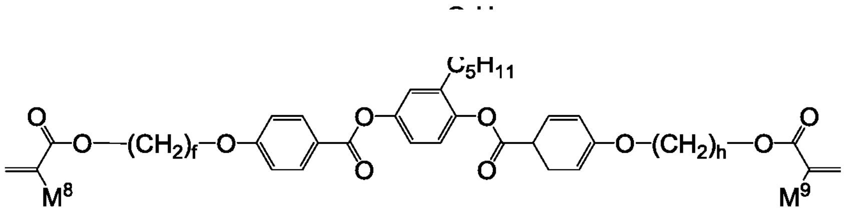

(7-2)

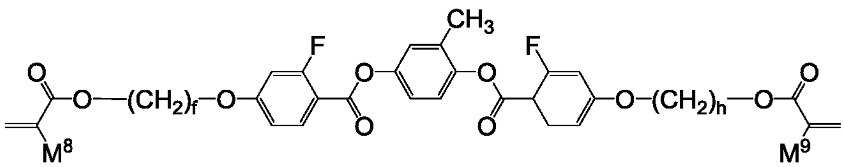

(7-3)

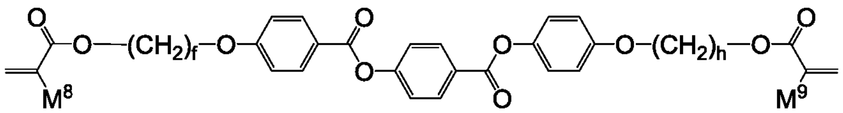

(7-4)

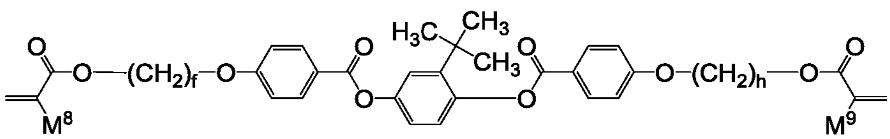

(7-5)

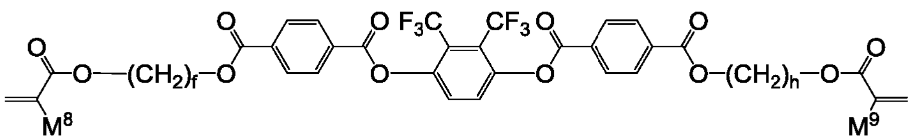

(7-6)

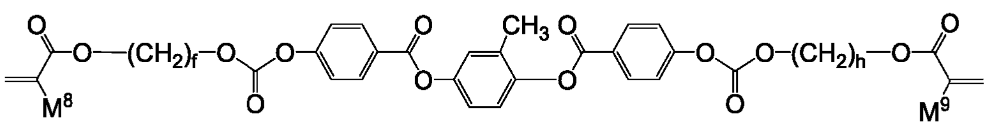

(7-7)

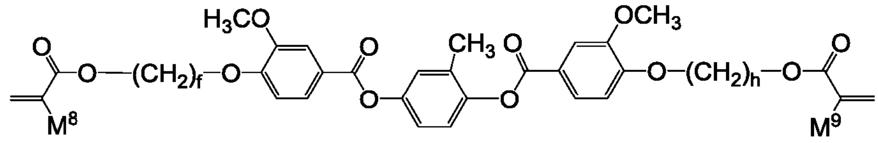

(7-8)

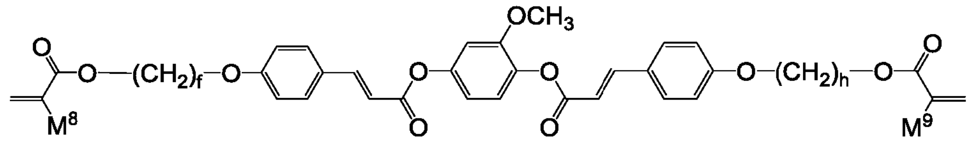

(7-9)

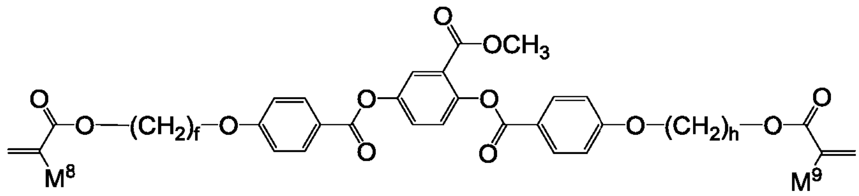

(7-10)

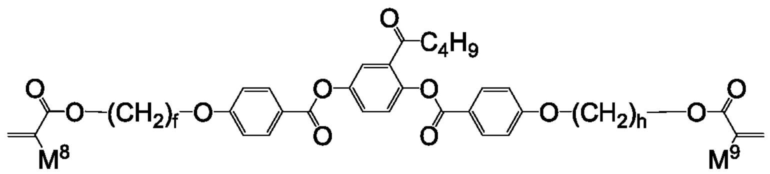

(7-11)

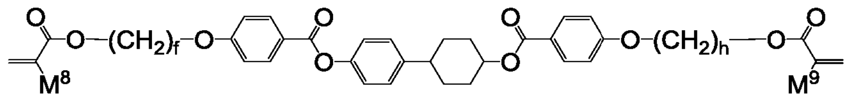

(7-12)

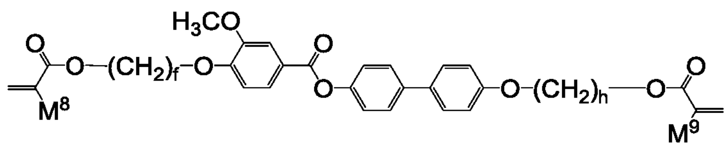

(7-13)

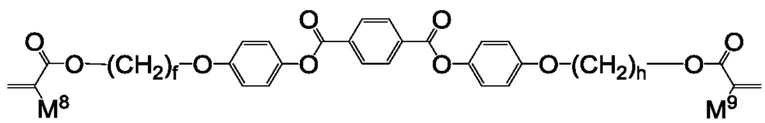

(7-14)

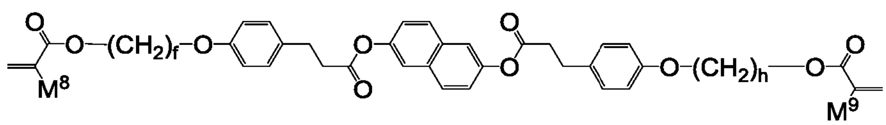

(7-15)

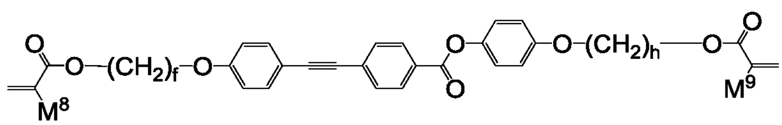

(7-16)

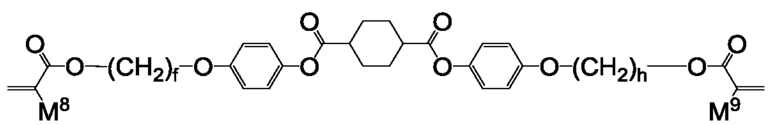

(7-17)

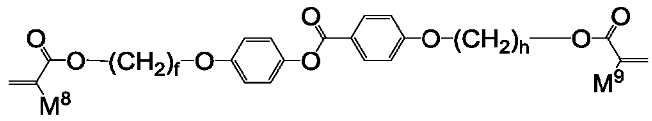
(7-18)

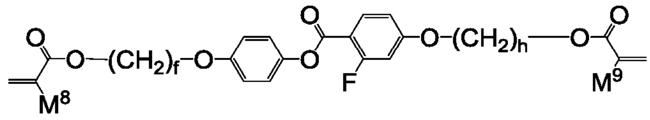
(7-19)

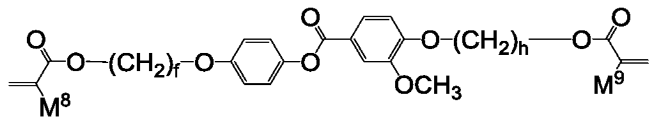
(7-20)

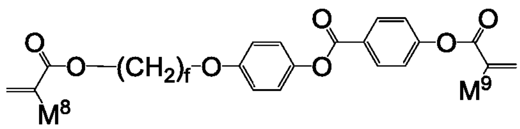
(7-21)

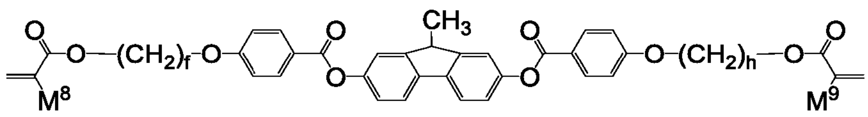
(7-22)

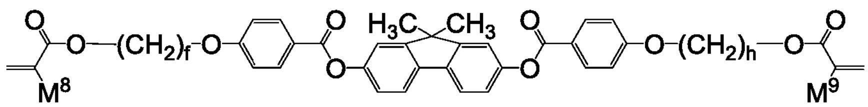
(7-23)

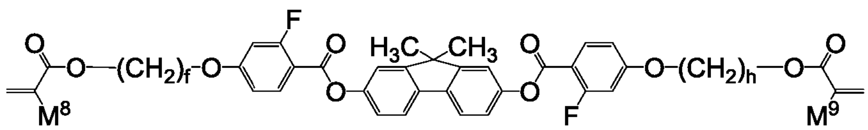
(7-24)

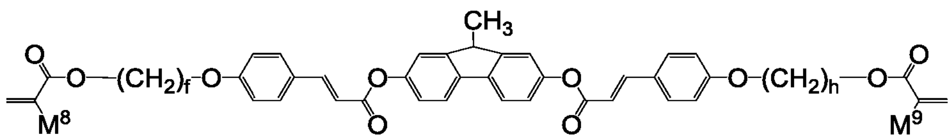
(7-25)

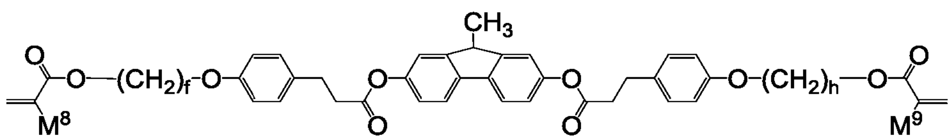
(7-26)

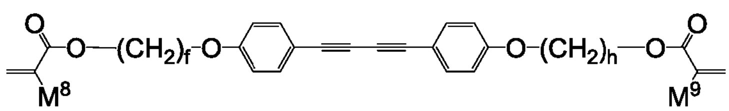
(7-27)

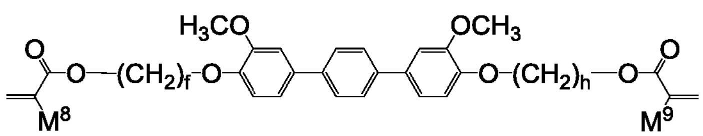
(7-28)

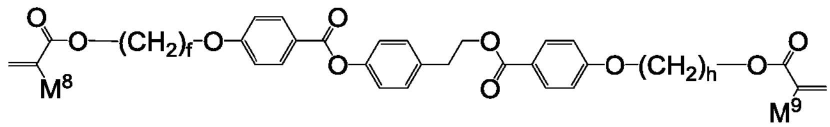
(7-29)

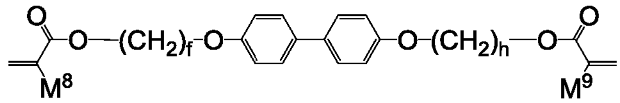
(7-30)

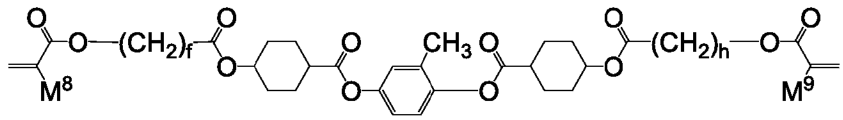
(7-31)

In formula (7-1) to formula (7-31), $M^8$ and $M^9$ are independently hydrogen or methyl, and f and h are independently an integer from 1 to 20.

One example of compound (8) includes compound (8-1) to compound (8-10).

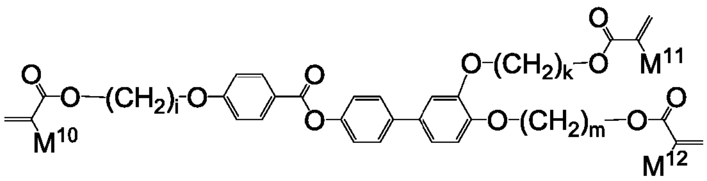
(8-1)

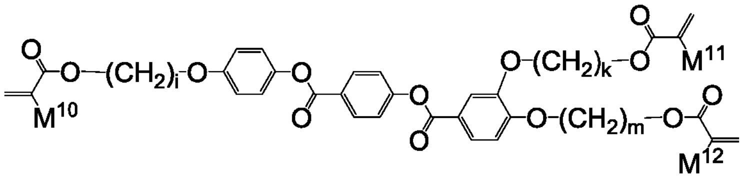
(8-2)

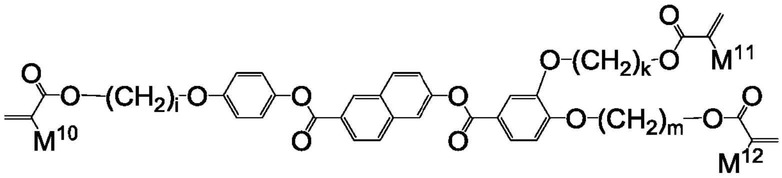
(8-3)

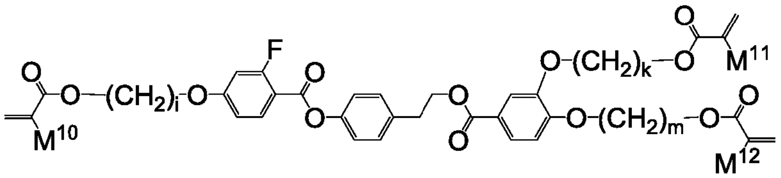
(8-4)

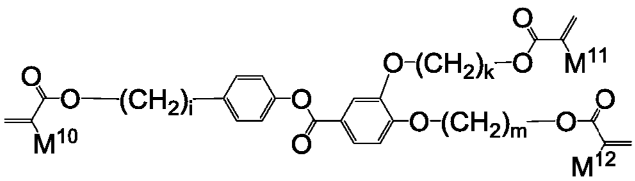
(8-5)

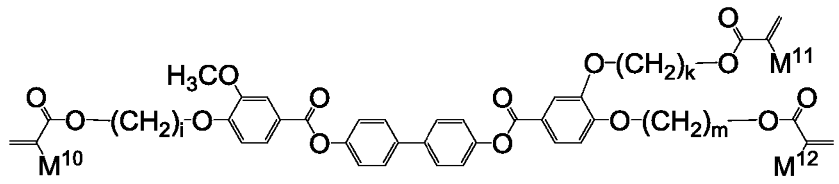

(8-6)

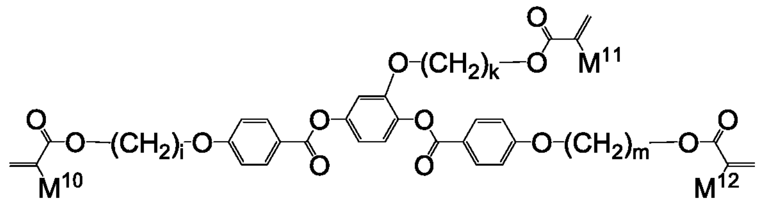

(8-7)

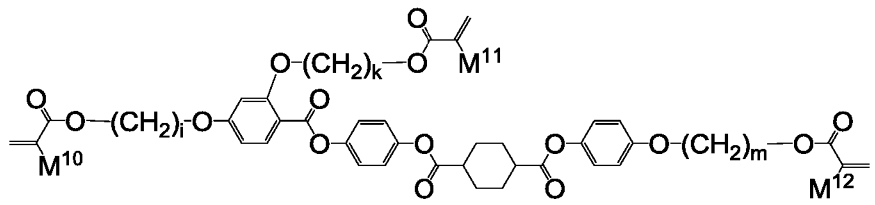

(8-8)

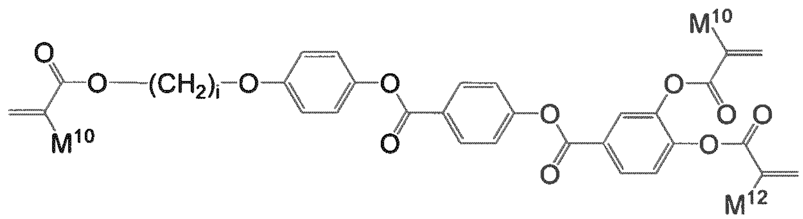

(8-9)

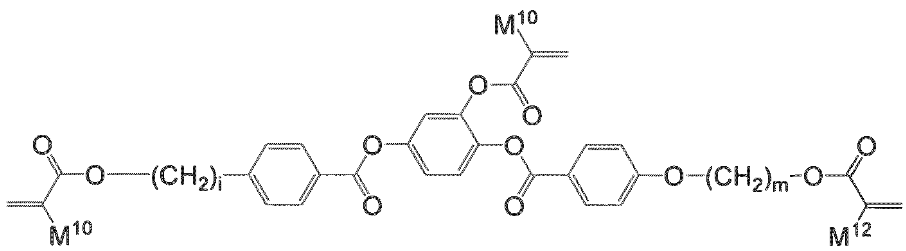

(8-10)

In formula (8-1) to formula (8-10), $M^{10}$ , $M^{11}$ and $M^{12}$ are independently hydrogen or methyl, and i, k and m are independently an integer from 1 to 20.

Sixth, desirable component compounds will be shown. Desirable compound (1) is compound (1-1) to compound (1-22) described above. It is desirable that in these compounds, at least one of the first component should be compound (1-1), compound (1-2), compound (1-3), compound (1-4), compound (1-6), compound (1-7), compound (1-8) or compound (1-10). It is desirable that at least two of the first component should be a combination of compound (1-1) and compound (1-6), compound (1-1) and compound (1-10), compound (1-3) and compound (1-6), compound (1-3) and compound (1-10), compound (1-4) and compound (1-6) or compound (1-4) and compound (1-10).

Desirable compound (2) is compound (2-1) to compound (2-13) described above. It is desirable that in these compounds, at least one of the second component should be compound (2-1), compound (2-3), compound (2-5), compound (2-6), compound (2-8) or compound (2-9). It is desirable that at least two of the second component should be a combination of compound (2-1) and compound (2-5), compound (2-1) and compound (2-6), compound (2-1) and compound (2-8), compound (2-1) and compound (2-9), compound (2-3) and compound (2-5), compound (2-3) and compound (2-6), compound (2-3) and compound (2-8) or compound (2-3) and compound (2-9).

Seventh, methods for synthesizing the component compounds will be explained. These compounds can be synthesized by known methods. The synthetic methods will be exemplified. Compound (1-1) is prepared by the method described in JP H02-503441 A (1990). Compound (2-1) is prepared by the method described in JP S59-176221 A (1984). Antioxidants are commercially available. A compound of formula (10) where r is 1, that is described below, is available from

Sigma-Aldrich Corporation. Compound (10) where r is 7, for instance, is synthesized according to the method described in U. S. Patent No. 3,660,505. Polymerizable compounds are commercially available or can be prepared by known methods.

Compounds whose synthetic methods are not described can be prepared according to the methods described in books such as "Organic Syntheses" (John Wiley & Sons, Inc.), "Organic Reactions" (John Wiley & Sons, Inc.), "Comprehensive Organic Synthesis" (Pergamon Press), and "Shin-Jikken Kagaku Kouza" (New experimental Chemistry Course, in English; Maruzen Co., Ltd., Japan). The composition is prepared according to known methods using the compounds thus obtained. For example, the component compounds are mixed and dissolved in each other by heating.

Eighth, additives that may be added to the composition will be explained. Such additives include an optically active compound, an antioxidant, an ultraviolet light absorber, a coloring matter, an antifoaming agent, a polymerization initiator, a polymerization inhibitor and a polar compound. The optically active compound is added to the composition for the purpose of inducing the helical structure of liquid crystal molecules and giving a twist angle. Examples of such compounds include compound (9-1) to compound (9-5) . A desirable ratio of the optically active compound is approximately 5% by weight or less, and a more desirable ratio is in the range of approximately 0.01% by weight to approximately 2% by weight.

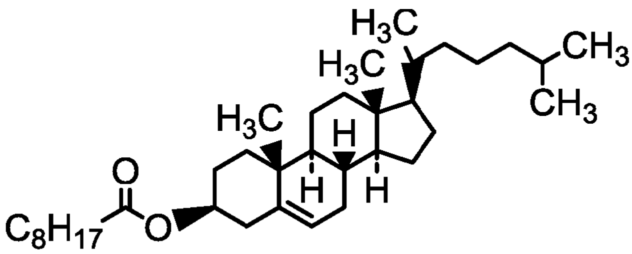
(9-1)

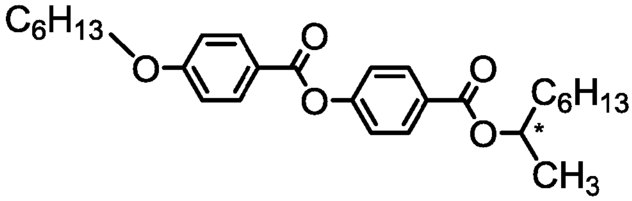
(9-2)

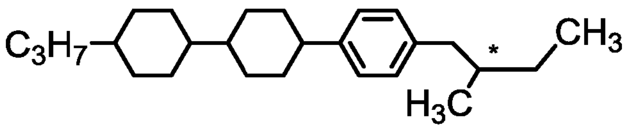
(9-3)

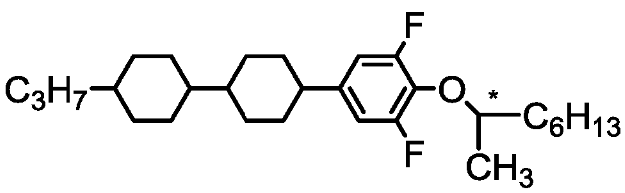
(9-4)

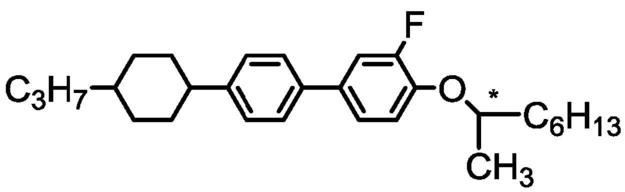
(9-5)

The antioxidant is added to the composition in order to prevent a decrease in specific resistance that is caused by heating under air, or to maintain a large voltage holding ratio at a temperature close to the maximum temperature as well as at room temperature, after the device has been used for a long time. A desirable example of the antioxidant is compound (10) where r is an integer from 1 to 9, for instance.

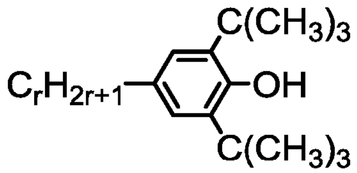

(10)

In compound (10), desirable r is 1, 3, 5, 7 or 9. More desirable r is 7. Compound (10) where r is 7 is effective in maintaining a large voltage holding ratio at a temperature close to the maximum temperature as well as at room temperature, after the device has been used for a long time, since it has a small volatility. A desirable ratio of the antioxidant is approximately 50 ppm or more for achieving its effect and is approximately 600 ppm or less for avoiding a decrease in the maximum temperature or avoiding an increase in the minimum temperature. A more desirable ratio is in the range of approximately 100 ppm to approximately 300 ppm.

Desirable examples of the ultraviolet light absorber include benzophenone derivatives, benzoate derivatives and triazole derivatives. A light stabilizer such as an amine having steric hindrance is also desirable. A desirable ratio of the absorber or the stabilizer is approximately 50 ppm or more for achieving its effect and is approximately 10,000 ppm or less for avoiding a decrease in the maximum temperature or avoiding an increase in the minimum temperature. A more desirable ratio is in the range of approximately 100 ppm to approximately 10,000 ppm.

A dichroic dye such as an azo dye or an anthraquinone dye is added to the composition for adjusting to a device having a guest host (GH) mode. A desirable ratio of the coloring matter is in the range of approximately 0.01% by weight to approximately 10% by weight. The antifoaming agent such as dimethyl silicone oil or methyl phenyl silicone oil is added to the composition for preventing foam formation. A desirable ratio of the antifoaming agent is approximately 1 ppm or more for achieving its effect and is approximately 1,000 ppm or less for preventing a poor display. A more desirable ratio is in the range of approximately 1 ppm to approximately 500 ppm.

The polymerizable compound is polymerized on irradiation with ultraviolet light. It may be polymerized in the presence of an initiator such as a photopolymerization initiator. Suitable conditions for polymerization, and a suitable type and amount of the initiator are known to a person skilled in the art, and have been described in the literature. For example, Irgacure 651 (registered trademark; BASF), Irgacure 184 (registered trademark; BASF) or Darocur 1173 (registered trademark; BASF), each of which is a photoinitiator, is suitable for radical polymerization.

The polymerization inhibitor may be added in order to prevent the polymerization when the polymerizable compound is kept in storage. The polymerizable compound is usually added to the composition without removing the polymerization inhibitor. Examples of the polymerization inhibitor include hydroquinone derivatives such as hydroquinone and methylhydroquinone, 4-t-butylcatechol, 4-methoxyphenol and phenothiazine.

A polar compound is an organic compound having polarity. Here it does not include a compound with ionic bonds . Atoms, such as oxygen, sulfur and nitrogen, are more electronegative and have a tendency to have partial negative charges. Carbon and hydrogen are neutral or have a tendency to have partial positive charges. Polarity results from the uneven partial charge distribution between different types of atoms in the compound. For example, the polar compound has at least one of partial structures such as -OH, -COOH, -SH, $-NH_2$, >NH and >N-.

Ninth, polymerizable compounds and polymerizable compositions will be explained. When compound (3) has many polymerizable groups, the polymer surrounding droplets becomes hard or networks becomes dense by the effect of bridging. A desirable polymerizable compound has at least one acryloyloxy ($-OCO-CH=CH_2$) or methacryloyloxy ($-OCO-(CH_3)C=CH_2$). Compound (3) gives the corresponding polymer by polymerization. When compound (3) is volatile, its oligomer may be used. A desirable polymer is colorless and transparent, and is not soluble in liquid crystal compositions. A desirable polymer has an excellent adhesion to the substrate of a device, and decreases the driving voltage. A polymerizable compound that is different from compound (3) may be used together to improve this effect.

Compound (4) is diacrylates or dimethacrylates. A network structure is easily formed in the polymer, since $Z^5$ is alkylene or the like. When the molecular chain of $Z^5$ is short, the network becomes small, since the cross-linking sites of the polymer are close. When the molecular chain of $Z^5$ is long, the driving voltage is decreased, since the cross-linking sites of the polymer are separated and the degree of freedom of molecular motion is improved. When $Z^5$ is branched, the driving voltage is further decreased, since the degree of freedom of molecular motion is further improved. A polymerizable compound that is different from compound (4) may be used together to improve this effect.

Compound (5) is acrylates or methacrylates. When $R^6$ has a ring structure, the affinity to the liquid crystal composition is improved. When $R^6$ is alkylene, a network structure is easily formed in the polymer. In this polymer, the driving voltage is decreased, since the degree of freedom of molecular motion is improved by the alkylene. A polymerizable compound that is different from compound (5) may be used together to improve this effect.

Compound (6), compound (7) and compound (8) have at least one acryloyloxy ($-OCO-CH=CH_2$) or methacryloyloxy ($-OCO-(CH_3)C=CH_2$). The liquid crystal compound has a mesogen (a rigid site to exhibit crystallinity), and these compounds also have a mesogen. Because of this, these compounds are aligned with the liquid crystal compound in the

same direction by the action of an alignment layer. This alignment is maintained after polymerization. Such a liquid crystal composite has a high transparency. A polymerizable compound that is different from compound (6), compound (7) and compound (8) may be used together to improve other characteristics.

The polymerizable composition is a mixture of the liquid crystal composition and the polymerizable compound. A polar compound may be added to the liquid crystal composition. The polar group of this compound has a noncovalent interaction with the surface such as a glass substrate and a metal oxide film. This compound is absorbed to the substrate surface by the action of the polar group, and adjusts the alignment of liquid crystal molecules. The polar compound sometimes adjusts a polymerizable compound as well as liquid crystal molecules. The polar compound is expected to have such an effect.

The method for preparing the liquid crystal composite from the is as follows. First, the polymerizable composition is sandwiched between a pair of substrates. Next, the polymerizable compound is polymerized by heat or light. Ultraviolet irradiation is desirable for the polymerization. A polymer is phase-separated from the polymerizable composition by polymerization. As a result, a dimming layer is formed between the substrates. The dimming layer is classified into a polymer-dispersed type, a polymer-network type and their mixture type.

Last, the liquid crystal composites will be explained. This liquid crystal composite is used for a liquid crystal dimming device. This is because transparency and opacity of the device can be adjusted by an applied voltage. This device can be obtained by the following method. First, a polymerizable composition is sandwiched between a pair of transparent substrates having electrodes in which at least one is transparent, at a temperature that is higher than the maximum temperature, by a vacuum injection process or a one drop fill process. Next, a polymerizable compound in the polymerizable composition is polymerized by irradiation with heat or ultraviolet light. In this case, a dimming layer is formed from the liquid crystal composition and the polymer, giving a liquid crystal dimming device.

One example of the transparent substrate is a material that is hardly deformed such as a glass plate, a quartz plate and an acrylic plate. Another example is a flexible transparent plastic film such as an acrylic film and a polycarbonate film. One of the substrates may be an opaque material such as a silicone resin depending on intended use. The substrate has a transparent electrode on it. The transparent electrode may have an alignment film or the like on it. Examples of the transparent electrode is tin-doped indium oxide (ITO) or a conductive polymer.

A thin film such as polyimide or polyvinyl alcohol is suitable for the alignment layer on the substrate. For example, a polyimide alignment film can be obtained by applying a polyimide-resin composition to a transparent substrate, then by curing thermally at 180 °C or higher, and by rubbing with a cotton cloth or a rayon cloth as required.

A pair of the substrates is faced each other with the transparent electrode layer inward. A spacer may be placed inside to make uniform the distance between substrates. Examples of the spacer include glass particles, plastic particles, aluminum particles and photo spacers. A desirable thickness of the dimming layer is 2 to 50 micrometers, more preferably 5 to 20 micrometers. A conventional sealant can be used for pasting a pair of substrates. An example of the sealant is an epoxy-thermosetting composition.

Ultraviolet irradiation is preferable to the polymerization of the polymerizable compound. Examples of an ultraviolet irradiation lamp include a metal halide lamp, a high pressure mercury lamp and an ultra high-pressure mercury lamp. It is desirable that the wavelength of ultraviolet should be in the absorption wavelength region of a photo-polymerization initiator, when the photo-polymerization initiator is used. The absorption wavelength region for the liquid crystal composition is avoided. Desirable wavelength is 330 nm or more. More desirable wavelength is 350 nm or more. The reaction may be carried out at room temperature or by heating.

In such a device, a light-absorbing layer, a diffuse reflector plate or the like can be arranged in the back of the device as required. A function such as specular reflection, diffuse reflection, retroreflection and hologram reflection may be added.

Such a device has a function as a dimming film or a dimming glass. When the device is film-like, it is pasted to an existing window or it is sandwiched between a pair of glasses, giving a laminated glass. Such a device is used for a window installed on an outer wall or the partition between a conference room and a hallway. That is to say, it is used for electronic blinds, dimming windows, smart windows and so forth. Furthermore, it can be utilized for liquid crystal shatters by using a function of a light switch.

[Examples]

The invention will be explained in more detail by way of examples. The invention is not limited to the examples. The invention includes a mixture of composition (M1) in Example 1 and composition (M2) in Example 2. The invention also includes a mixture prepared by mixing at least two compositions in Examples. Compounds prepared herein were identified by methods such as NMR analysis. The characteristics of the compounds, compositions and devices were measured by the methods described below.

NMR Analysis: A model DRX-500 apparatus made by Bruker BioSpin Corporation was used for measurement. In the measurement of $^1$H-NMR, a sample was dissolved in a deuterated solvent such as $CDCl_3$, and the measurement was

carried out under the conditions of room temperature, 500 MHz and the accumulation of 16 scans. Tetramethylsilane was used as an internal standard. In the measurement of $^{19}F$-NMR, $CFCl_3$ was used as the internal standard, and 24 scans were accumulated. In the explanation of the nuclear magnetic resonance spectra, the symbols s, d, t, q, quin, sex, m and br stand for a singlet, a doublet, a triplet, a quartet, a quintet, a sextet, a multiplet and line-broadening, respectively.

Gas Chromatographic Analysis: A gas chromatograph Model GC-14B made by Shimadzu Corporation was used for measurement. The carrier gas was helium (2 milliliters per minute) . The sample injector and the detector (FID) were set to 280 °C and 300 °C, respectively. A capillary column DB-1 (length 30 meters, bore 0.32 millimeters, film thickness 0.25 micrometers, dimethylpolysiloxane as the stationary phase, non-polar) made by Agilent Technologies, Inc. was used for the separation of component compounds . After the column had been kept at 200 °C for 2 minutes, it was further heated to 280 °C at the rate of 5 °C per minute. A sample was dissolved in acetone (0.1% by weight), and 1 microliter of the solution was injected into the sample injector. A recorder used was Model C-R5A Chromatopac Integrator made by Shimadzu Corporation or its equivalent. The resulting gas chromatogram showed the retention time of peaks and the peak areas corresponding to the component compounds.

Solvents for diluting the sample may also be chloroform, hexane and so forth. The following capillary columns may also be used in order to separate the component compounds: HP-1 made by Agilent Technologies Inc. (length 30 meters, bore 0.32 millimeters, film thickness 0.25 micrometers), Rtx-1 made by Restek Corporation (length 30 meters, bore 0.32 millimeters, film thickness 0.25 micrometers), and BP-1 made by SGE International Pty. Ltd. (length 30 meters, bore 0.32 millimeters, film thickness 0.25 micrometers). A capillary column CBP1-M50-025 (length 50 meters, bore 0.25 millimeters, film thickness 0.25 micrometers) made by Shimadzu Corporation may also be used for the purpose of avoiding an overlap of peaks of the compounds.

The ratio of the liquid crystal compounds included in the composition may be calculated according to the following method. A mixture of the liquid crystal compounds was analyzed by gas chromatography (FID) . The ratio of peak areas in the gas chromatogram corresponds to the ratio of the liquid crystal compounds. When the capillary columns described above are used, the correction coefficient of respective liquid crystal compounds may be regarded as 1 (one). Accordingly, the ratio (percentage by weight) of the liquid crystal compounds can be calculated from the ratio of peak areas.

Samples for measurement: A composition itself was used as a sample when the characteristics of the composition or the device were measured. When the characteristics of a compound were measured, a sample for measurement was prepared by mixing this compound (15% by weight) with mother liquid crystals (85% by weight). The characteristic values of the compound were calculated from the values obtained from measurements by an extrapolation method: (Extrapolated value) = [(Measured value of sample) - 0.85 × (Measured value of mother liquid crystals)] / 0.15. When a smectic phase (or crystals) deposited at 25 °C at this ratio, the ratio of the compound to the mother liquid crystals was changed in the order of (10% by weight: 90% by weight), (5% by weight: 95% by weight) and (1% by weight: 99% by weight). The values of the maximum temperature, the optical anisotropy, the viscosity and the dielectric anisotropy regarding the compound were obtained by means of this extrapolation method.

The mother liquid crystals described below were used. The ratio of the component compounds was expressed as a percentage by weight.

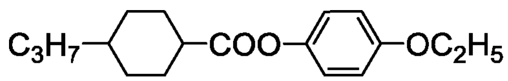
17.2%

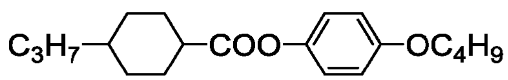
27.6%

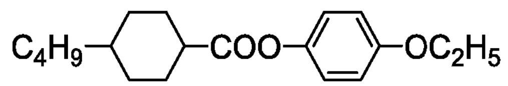
20.7%

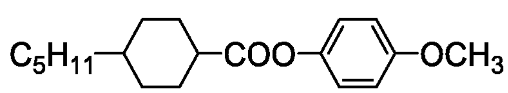
20.7%

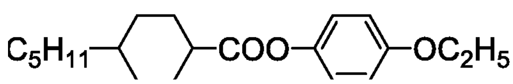
13.8%

Measurement methods: The characteristics of compounds were measured according to the following methods. Most are methods described in the JEITA standards (JEITA-ED-2521B) which was deliberated and established by Japan Electronics and Information Technology Industries Association (abbreviated to JEITA), or the modified methods. No thin film transistors (TFT) were attached to a TN device used for measurement.

(1) Maximum temperature of a nematic phase (NI; °C): A sample was placed on a hot plate in a melting point apparatus equipped with a polarizing microscope and was heated at the rate of 1 °C per minute. The temperature was measured when a part of the sample began to change from a nematic phase to an isotropic liquid. The maximum temperature of a nematic phase is sometimes abbreviated to the "maximum temperature".

(2) Minimum temperature of a nematic phase (Tc; °C) : A sample having a nematic phase was placed in glass vials and then kept in freezers at temperatures of 0 °C, -10 °C, -20 °C, -30 °C and -40 °C for 10 days, and then the liquid crystal phases were observed. For example, when the sample maintained the nematic phase at -20 °C, and was changed to crystals or a smectic phase at -30 °C, Tc was expressed as < -20 °C. The minimum temperature of a nematic phase is sometimes abbreviated to the "minimum temperature".

(3) Viscosity (bulk viscosity; $\eta$; measured at 20 °C; mPa•s) : An E-type viscometer made by Tokyo Keiki Inc. was used for measurement.

(4) Viscosity (rotational viscosity; $\gamma 1$; measured at 25 °C; mPa•s) : A rotational viscosity measuring system LCM-2 type made by Toyo Corporation was used for measurement. A sample was poured into a VA (vertical alignment) device in which the distance between the two glass substrates (cell gap) was 10 micrometers. Rectangular waves (55 V, 1 ms) was applied to this device. The peak current and the peak time of the transient current generated by the applied voltage were measured. The value of rotational viscosity was obtained from these measured values and the dielectric anisotropy. The dielectric anisotropy was measured according to measurement (6).

(5) Optical anisotropy (refractive index anisotropy; $\Delta n$; measured at 25 °C) : The measurement was carried out using an Abbe refractometer with a polarizer attached to the ocular, using light at a wavelength of 589 nanometers. The surface of the main prism was rubbed in one direction, and then a sample was placed on the main prism. The refractive index ($n\|$) was measured when the direction of the polarized light was parallel to that of rubbing. The refractive index ($n\perp$) was measured when the direction of polarized light was perpendicular to that of rubbing. The value of the optical anisotropy ($\Delta n$) was calculated from the equation: $\Delta n = n\| - n\perp$.

(6) Dielectric anisotropy ($\Delta\varepsilon$; measured at 25 °C) : The value of dielectric anisotropy was calculated from the equation: $\Delta\varepsilon = \varepsilon\| - \varepsilon\perp$. The dielectric constants ($\varepsilon\|$ and $\varepsilon\perp$) were measured as follows.

1) Measurement of a dielectric constant ($\varepsilon\|$): A solution of octadecyltriethoxysilane (0.16 mL) in ethanol (20 mL) was applied to thoroughly cleaned glass substrates. The glass substrates were rotated with a spinner, and then heated at 150 °C for one hour. A sample was poured into a VA device in which the distance between the two glass substrates (cell gap) was 4 micrometers, and then this device was sealed with a UV-curable adhesive. Sine waves (0.5 V, 1 kHz) were applied to this device, and the dielectric constant ($\varepsilon\|$) in the major axis direction of liquid crystal molecules was measured after 2 seconds.

2) Measurement of a dielectric constant ($\varepsilon\perp$) : A polyimide solution was applied to thoroughly cleaned glass substrates. The glass substrates were calcined, and then the resulting alignment film was subjected to rubbing. A sample was poured into a TN device in which the distance between the two glass substrates (cell gap) was 9 micrometers and the twist angle was 80 degrees. Sine waves (0.5 V, 1 kHz) were applied to this device, and the dielectric constant ($\varepsilon\perp$) in the minor axis direction of liquid crystal molecules was measured after 2 seconds.

(7) Threshold voltage (Vth; measured at 25 °C; V) : An LCD evaluation system Model LCD-5100 made by Otsuka Electronics Co., Ltd. was used for measurement. The light source was a halogen lamp. A sample was poured into a VA device having a normally black mode, in which the distance between the two glass substrates (cell gap) was 4 micrometers and the rubbing direction was antiparallel, and then this device was sealed with a UV-curable adhesive. The voltage to be applied to this device (60 Hz, rectangular waves) was stepwise increased in 0.02 V increments from 0 V up to 20 V. During the increase, the device was vertically irradiated with light, and the amount of light passing through the device was measured. A voltage-transmittance curve was prepared, in which the maximum amount of light corresponded to 100% transmittance and the minimum amount of light corresponded to 0% transmittance. The threshold voltage was expressed as voltage at 10% transmittance.

(8) Voltage holding ratio (VHR; measured at 60 °C; %) : A TN device used for measurement had a polyimide-alignment film, and the distance between the two glass substrates (cell gap) was 3.5 micrometers. A sample was poured into the device, and then this device was sealed with a UV-curable adhesive . The TN device was placed in a thermostatic oven at 60 °C. A pulse voltage (1 V, 60 microseconds, 3 Hz) was applied to this device and the device was charged. A decreasing voltage was measured for 166.6 milliseconds with a high-speed voltmeter, and area A between the voltage curve and the horizontal axis in a unit cycle was obtained. Area B was an area without the decrease. The voltage holding ratio was expressed as a percentage of area A to area B.

(9) Voltage holding ratio (UV-VHR; measured at 60 °C; %) : A TN device to which a sample was injected was irradiated with ultraviolet light of 5 mW for 166.6 minutes using a black light as a light source. The voltage holding ratio was measured and the stability to ultraviolet was evaluated. The structure of the TN device and the measurement method

of the voltage holding ratio was described above. A composition having a large UV-VHR has a high stability to ultraviolet light. UV-VHR is preferably 90% or more, more preferably 95% or more.

(10) Voltage holding ratio (heating-VHR; measured at 60 °C; %): A TN device to which a sample was injected was heated for 20 hours in a thermostatic oven at 120 °C, and then voltage holding ratio was measured, and the stability to heat was evaluated. The structure of the TN device or the measuring method of voltage holding ratios was described above. A composition having a large heating-VHR has a high stability to heat. The heating-VHR is preferably 90% or more, and more preferably 95% or more.

(11) Response time ($\tau$; measured at 25 °C; ms): An LCD evaluation system Model LCD-5100 made by Otsuka Electronics Co., Ltd. was used for measurement. The light source was a halogen lamp. The low-pass filter was set at 5 kHz. A sample was poured into a device with a normally black mode in which the distance between the two glass substrates (cell gap) was 4 micrometers. This device was sealed with a UV-curable adhesive. Rectangular waves (60 Hz, 10 V, 0.5 seconds) were applied to this device. The device was vertically irradiated with light simultaneously, and the amount of light passing through the device was measured. The transmittance was regarded as 100% when the amount of light reached a maximum. The transmittance was regarded as 0% when the amount of light reached a minimum. The response time was expressed as the period of time required for the change from 90% to 10% transmittance (fall time: millisecond).

(12) Elastic constant (K11: spray elastic constant and K33: bend elastic constant; measured at 25 °C; pN) : An Elastic Constant Measurement System Model EC-1 made by Toyo Corporation was used for measurement. A sample was poured into a VA device in which the distance between the two glass substrates (cell gap) was 20 micrometers. An electric charge of 20 volts to 0 volts was applied to this device, and the electrostatic capacity and the applied voltage were measured. The measured values of the electrostatic capacity (C) and the applied voltage (V) were fitted to equation (2.98) and equation (2.101) in page 75 of "Ekisho Debaisu Handobukku" (Liquid crystal device handbook, in English; the Nikkan Kogyo Shimbun, Ltd.) and the value of the elastic constant was obtained from equation (2.100).

(13) Specific resistance ($\rho$; measured at 25 °C; Q cm) : A sample (1.0 mL) was placed in a vessel equipped with electrodes. A DC voltage (10 V) was applied to this vessel, and the DC current was measured after 10 seconds. The specific resistance was calculated from the following equation:

(specific resistance) = [(voltage) × (electric capacity of vessel)] /[(DC current) × (dielectric constant in vacuum)]. (equation 1)

(14) Pretilt angle (degree): A spectroscopic ellipsometer, Model M-2000U (made by J. A. Woollam Co., Inc.) was used for measurement of a pretilt angle.

(15) Alignment stability (Stability of liquid crystal alignment axis): In an FFS (fringe field switching) device, the change of a liquid crystal alignment axis in a side of electrode was evaluated. A liquid crystal alignment angle [$\varphi$(before)] before stressed in the side of an electrode was measured. Rectangular waves (4.5 V, 60 Hz) were applied for 20 minutes to the device, the device was short circuited for 1 second, and then a liquid crystal alignment angle [$\varphi$(after)] in the side of the electrode was measured after 1 second and 5 minutes. The change ($\Delta\varphi$, deg.) of the liquid crystal alignment angle after 1 second and 5 minutes was calculated from these values by the following equation:

$$\Delta\varphi\ (\text{deg.}) = \varphi(\text{after}) - \varphi(\text{before}) \qquad \text{(equation 2)}$$

These measurements were carried out by referring J. Hilfiker, B. Johs, C. Herzinger, J. F. Elman, E. Montbach, D. Bryant, and P. J. Bos, Thin Solid Films, 455-456, (2004) 596-600. The smaller value of $\Delta\varphi$ means a smaller change ratio of the liquid crystal orientational axis, which means that the stability of liquid crystal orientational axis is better.

(16) Flicker rate (measured at 25 °C; %) : A multimedia display tester 3298F made by Yokogawa Electric Corporation was used for measurement. The light source was LED. A sample was poured into a device having a normally black mode, in which the distance between the two glass substrates (cell gap) was 3.5 micrometers and the rubbing direction was antiparallel. This device was sealed with a UV-curable adhesive. A voltage was applied to the device and a voltage was measured when the amount of light passed through the device reached a maximum. The sensor was brought close to the device while this voltage was applied to the device, and the flicker rate displayed was recorded.

(17) Haze (%): A haze meter NDH 5000 (made by Nippon Denshoku Industries Co., Ltd) was used for the measurement of haze.

Examples of compositions will be shown below. Component compounds were expressed in terms of symbols according to the definition in Table 3 described below. In Table 3, the configuration of 1,4-cyclohexylene is trans. The parenthesized number next to a symbolized compound represents the chemical formula to which the compound belongs. The symbol (-) means any other liquid crystal compound. The ratio (percentage) of a liquid crystal compound means the

percentages by weight (% by weight) based on the weight of the liquid crystal composition excluding additives. Last, the values of characteristics of the composition are summarized.

Table 3. Method of Description of Compounds using Symbols

$R-(A_1)-Z_1-\cdots\cdots-Z_n-(A_n)-R'$

| 1) Left-terminal Group R- | Symbol |
|---|---|
| $FC_nH_{2n}-$ | Fn- |
| $C_nH_{2n+1}-$ | n- |
| $C_nH_{2n+1}O-$ | nO- |
| $C_mH_{2m+1}OC_nH_{2n}-$ | mOn- |
| $CH_2=CH-$ | V- |
| $C_nH_{2n+1}-CH=CH-$ | nV- |
| $CH_2=CH-C_nH_{2n}-$ | Vn- |
| $C_mH_{2m+1}-CH=CH-C_nH_{2n}-$ | mVn- |
| $CF_2=CH-$ | VFF- |
| $CF_2=CH-C_nH_{2n}-$ | VFFn- |
| $C_mH_{2m+1}-CF_2-C_nH_{2n}-$ | m(CF2)n- |
| $CH_2=CH-COO-$ | AC- |
| $CH_2=C(CH_3)-COO-$ | MAC- |

| 2) Right-terminal Group -R' | Symbol |
|---|---|
| $-C_nH_{2n+1}$ | -n |
| $-OC_nH_{2n+1}$ | -On |
| $-CH=CH_2$ | -V |
| $-CH=CH-C_nH_{2n+1}$ | -Vn |
| $-C_nH_{2n}-CH=CH_2$ -nV | -nV |
| $-C_mH_{2m}-CH=CH-C_nH_{2n+1}$ | -mVn |
| $-CH=CF_2$ | -VFF |
| $-OCO-CH=CH_2$ | -AC |
| $-OCO-C(CH_3)=CH_2$ | -MAC |

| 3) Bonding Group $-Z_n-$ | Symbol |
|---|---|
| $-C_nH_{2n}-$ | n |
| -COO- | E |
| -CH=CH- | V |
| -CH=CHO- | VO |
| -OCH=CH- | OV |
| $-CH_2O-$ | 1O |
| $-OCH_2-$ | O1 |
| 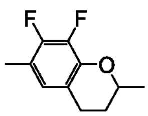 | Cro(7F,8F) |
| 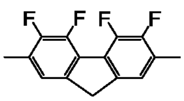 | FLF4 |

| 4) Ring Structure $-A_n-$ | Symbol |
|---|---|
| 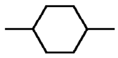 | H |
| 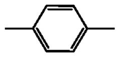 | B |
| 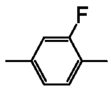 | B(F) |
| 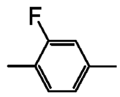 | B(2F) |
| 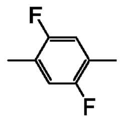 | B(2F,5F) |
| 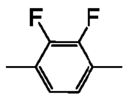 | B(2F,3F) |
| 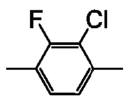 | B(2F,3Cl) |
| 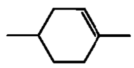 | ch |
| 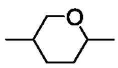 | dh |
| 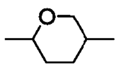 | Dh |
| 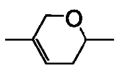 | dpr |
| 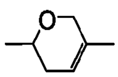 | Dpr |

| 5) Examples of Description | |
|---|---|
| Example 1. V-HHB(2F,3F)-O2 | Example 2. 5-DprB(2F,3F)-O2 |
| 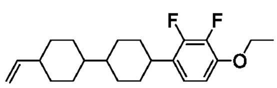 | 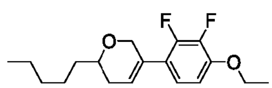 |
| Example 3. 3-HBB-1 | Example 4. 5-HFLF4-3 |

(continued)

| R-(A1)-Z1-·····-Zn-(An)-R' | |
|---|---|
| 1) Left-terminal Group R- Symbol | 4) Ring Structure -$A_n$- Symbol |
| 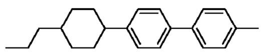 | 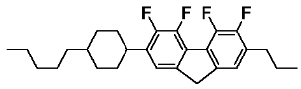 |

Composition (M1)

| | | |
|---|---|---|
| 5-HB (2F, 3F) -O2 | (1-1) | 3% |
| 2-BB (2F, 3F) -O2 | (1-4) | 2% |
| 3-BB (2F, 3F) -O2 | (1-4) | 5% |
| V2-BB (2F, 3F) -O2 | (1-4) | 6% |
| 1V2-BB (2F, 3F) -O2 | (1-4) | 3% |
| 3-HHB (2F, 3F) -O2 | (1-6) | 3% |
| 2-BB (2F, 3F) B-3 | (1-9) | 3% |
| V2-BB (2F, 3F) B-1 | (1-9) | 4% |
| 2-HBB (2F, 3F) -O2 | (1-10) | 3% |
| 3-HBB (2F, 3F) -O2 | (1-10) | 9% |
| 4-HBB (2F, 3F) -O2 | (1-10) | 6% |
| 5-HBB (2F, 3F) -O2 | (1-10) | 6% |
| 3-HB (2F, 3F) B-2 | (1) | 3% |
| 3-HH2BB (2F, 3F) -O2 | (1) | 3% |
| 2-HH-3 | (2-1) | 8% |
| 3-HB-O1 | (2-2) | 3% |
| 3-HHB-1 | (2-5) | 3% |
| 3-HHB-O1 | (2-5) | 3% |
| 5-B (F) BB-2 | (2-7) | 3% |
| 5-B (F) BB-3 | (2-7) | 3% |
| 2-BB (F) B-3 | (2-8) | 5% |
| 2-BB (F) B-5 | (2-8) | 4% |
| 3-BB(F)B-5 | (2-8) | 3% |
| 3-B2BB-2 | (2-9) | 3% |
| 3-HBB(F)B-3 | (2-13) | 3% |
| NI= 111.4 °C; Tc< -20 °C; $\Delta$n= 0.180; $\Delta\varepsilon$= -3.6; Vth= 2.36 V; $\gamma$1= 183.0 mPa•s. | | |

Composition (M2)

| | | |
|---|---|---|
| 3-H2B(2F,3F)-O2 | (1-2) | 3% |
| 3-BB (2F, 3F) -O2 | (1-4) | 3% |

(continued)

| | | |
|---|---|---|
| 1V2-BB (2F, 3F) -O2 | (1-4) | 4% |
| 3-HH2B (2F, 3F) -O2 | (1-7) | 5% |
| 2-BB (2F, 3F) B-3 | (1-9) | 7% |
| 2-BB (2F, 3F) B-4 | (1-9) | 6% |
| V2-BB (2F, 3F) B-1 | (1-9) | 6% |
| 3-HBB (2F, 3F) -O2 | (1-10) | 5% |
| 4-HBB (2F, 3F) -O2 | (1-10) | 5% |
| V-HBB (2F, 3F) -O2 | (1-10) | 5% |
| 3-HDhB (2F, 3F) -O2 | (1-16) | 5% |
| 3-BB (2F) B (2F, 3F) -O2 | (1-20) | 4% |
| 2-BB (2F) B (2F, 3F) -O4 | (1-20) | 3% |
| 3-BB (F) B (2F, 3F) -O2 | (1-21) | 5% |
| 3-B (2F) B (2F, 3F) -O2 | (1-22) | 3% |
| 2-HH-3 | (2-1) | 7% |
| 1-BB-5 | (2-3) | 3% |
| V2-BB-1 | (2-3) | 4% |
| 3-HHB-1 | (2-5) | 3% |
| 3-HBB-2 | (2-6) | 3% |
| V-HBB-2 | (2-6) | 4% |
| 3-HHEBH-3 | (2-11) | 3% |
| 3-HBB (F) B-3 | (2-13) | 4% |
| NI= 111.1 °C; Tc< -20 °C; Δn= 0.182; Δε= -3.6; Vth= 2.37 V; γ1= 224.2 mPa•s. | | |

Composition (M3)

| | | |
|---|---|---|
| 2-BB (2F, 3F) -O2 | (1-4) | 3% |
| 3-BB (2F, 3F) -O2 | (1-4) | 3% |
| 5-HHB (2F, 3F) -O2 | (1-6) | 3% |
| V2-HHB (2F, 3F) -O2 | (1-6) | 3% |
| 3-HH1OB(2F,3F)-O2 | (1-8) | 3% |
| 2-BB (2F, 3F) B-3 | (1-9) | 3% |
| V-HBB (2F, 3F) -O2 | (1-10) | 7% |
| V2-HBB (2F, 3F) -O2 | (1-10) | 3% |
| V-HBB (2F, 3F) -O4 | (1-10) | 5% |
| 3-HEB (2F,3F) B (2F,3F)-O2 | (1-11) | 4% |
| 3-dhBB (2F, 3F) -O2 | (1-17) | 4% |
| 3-BB (2F) B (2F, 3F) -O2 | (1-20) | 5% |
| 5-BB (2F) B (2F, 3F) -O2 | (1-20) | 4% |
| 2-BB (2F) B (2F, 3F) -O4 | (1-20) | 5% |

(continued)

| | | |
|---|---|---|
| 3-BB (F) B (2F, 3F) -O2 | (1-21) | 5% |
| 3-HH-V | (2-1) | 12% |
| 3-HH-V1 | (2-1) | 3% |
| V-HHB-1 | (2-5) | 3% |
| 3-B (F)BB-2 | (2-7) | 6% |
| 1-BB (F)B-2V | (2-8) | 6% |
| 2-BB (F) B-3 | (2-8) | 6% |
| 3-HBB (F)B-3 | (2-13) | 4% |
| NI= 119.3 °C; Tc< -20 °C; Δn= 0.191; Δε= -3.3; Vth= 2.39 V; γ1= 192.2 mPa•s. | | |

Composition (M4)

| | | |
|---|---|---|
| 3-HB (2F, 3F) -O2 | (1-1) | 3% |
| 5-H2B (2F, 3F) -O2 | (1-2) | 3% |
| 3-BB (2F, 3F) -O2 | (1-4) | 3% |
| V2-BB (2F, 3F) -O2 | (1-4) | 4% |
| 1V2-BB (2F, 3F) -O2 | (1-4) | 2% |
| 3-HHB (2F, 3F) -O2 | (1-6) | 3% |
| 5-HHB (2F, 3F) -O2 | (1-6) | 3% |
| 2-BB (2F, 3F) B-3 | (1-9) | 4% |
| 2-BB (2F, 3F) B-4 | (1-9) | 4% |
| 2-HBB (2F, 3F) -O2 | (1-10) | 3% |
| 3-HBB (2F, 3F) -O2 | (1-10) | 3% |
| V-HBB (2F, 3F) -O2 | (1-10) | 4% |
| 3-BB2B (2F, 3F) -O2 | (1) | 4% |
| V-HH2HB (2F,3F)-O2 | (1) | 3% |
| V-HH2BB (2F,3F)-O2 | (1) | 3% |
| 3-HH-4 | (2-1) | 7% |
| V2-BB-1 | (2-3) | 4% |
| V-HHB-1 | (2-5) | 3% |
| 3-HBB-2 | (2-6) | 3% |
| 5-B (F) BB-2 | (2-7) | 4% |
| 5-B (F) BB-3 | (2-7) | 5% |
| 1-BB (F) B-2V | (2-8) | 4% |
| 2-BB (F) B-3 | (2-8) | 4% |
| 2-BB (F) B-5 | (2-8) | 4% |
| 3-BB (F)B-5 | (2-8) | 4% |
| 3-B2BB-2 | (2-9) | 3% |
| 3-HBB (F) B-3 | (2-13) | 3% |

(continued)

| | | |
|---|---|---|
| 5-HFLF4-3 | (-) | 3% |
| NI= 111.4 °C; Tc< -20 °C; Δn= 0.188; Δε= -2.6; Vth= 2.78 V; γ1= 164.3 mPa•s. | | |

Composition (M5)

| | | |
|---|---|---|
| 3-H2B (2F, 3F) -O2 | (1-2) | 4% |
| 3-BB (2F, 3F) -O2 | (1-4) | 6% |
| V2-BB (2F, 3F) -O2 | (1-4) | 4% |
| 3-HHB (2F, 3F) -1 | (1-6) | 3% |
| 2-HHB (2F, 3F) -O2 | (1-6) | 2% |
| 3-HHB (2F, 3F) -O2 | (1-6) | 5% |
| 3-HH1OB (2F, 3F) -O2 | (1-8) | 3% |
| 2-BB (2F, 3F) B-3 | (1-9) | 4% |
| 2-BB (2F, 3F) B-4 | (1-9) | 3% |
| V2-BB (2F, 3F) B-1 | (1-9) | 4% |
| 2-HBB (2F, 3F) -O2 | (1-10) | 5% |
| 3-HBB (2F, 3F) -O2 | (1-10) | 5% |
| 4-HBB (2F, 3F) -O2 | (1-10) | 3% |
| 5-HBB (2F, 3F) -O2 | (1-10) | 3% |
| V-HBB (2F, 3F) -O4 | (1-10) | 5% |
| 3-HEB(2F,3F)B(2F,3F)-O2 | (1-11) | 3% |
| 3-H1OCro(7F,8F)-5 | (1-14) | 3% |
| 20-B (2F) B (2F, 3F) -02 | (1-22) | 3% |
| 3-H2BBB (2F, 3F) -02 | (1) | 3% |
| V-H2BBB (2F, 3F) -02 | (1) | 4% |
| 3-HH-01 | (2-1) | 3% |
| 1-BB-5 | (2-3) | 4% |
| 5-B (F) BB-2 | (2-7) | 3% |
| 1-BB(F)B-2V | (2-8) | 6% |
| 2-BB (F) B-3 | (2-8) | 3% |
| 5-HB(F)BH-3 | (2-12) | 3% |
| 3-HBB (F) B-3 | (2-13) | 3% |
| NI= 119.3 °C; Tc< -20 °C; Δn= 0.186; Δε= -4.0; Vth= 2.19 V; γ1= 236.9 mPa•s. | | |

Composition (M6)

| | | |
|---|---|---|
| 3-HB (2F, 3F) -04 | (1-1) | 4% |
| 2-BB (2F, 3F) -02 | (1-4) | 3% |

(continued)

| | | |
|---|---|---|
| 3-BB (2F, 3F) -02 | (1-4) | 3% |
| 2-HBB (2F, 3F) -02 | (1-10) | 3% |
| 3-HBB (2F, 3F) -02 | (1-10) | 3% |
| 3-dhBB (2F, 3F) -02 | (1-17) | 5% |
| 3-chB (2F, 3F) -02 | (1-18) | 3% |
| 2-HchB (2F, 3F) -02 | (1-19) | 3% |
| 3-BB (2F) B (2F, 3F) -02 | (1-20) | 4% |
| 5-BB (2F) B (2F, 3F) -02 | (1-20) | 5% |
| 2-BB (2F) B (2F, 3F) -04 | (1-20) | 6% |
| 3-BB (F) B (2F, 3F) -02 | (1-21) | 5% |
| 5-HH-V | (2-1) | 6% |
| 7-HB-1 | (2-2) | 3% |
| V-HHB-1 | (2-5) | 4% |
| V2-HHB-1 | (2-5) | 3% |
| 3-HBB-2 | (2-6) | 3% |
| V-HBB-2 | (2-6) | 3% |
| 3-B (F) BB-2 | (2-7) | 6% |
| 5-B (F) BB-3 | (2-7) | 4% |
| 1-BB(F)B-2V | (2-8) | 6% |
| 2-BB (F) B-3 | (2-8) | 5% |
| 3-BB(F)B-5 | (2-8) | 3% |
| 3-B2BB-2 | (2-9) | 3% |
| 3-HBB(F)B-3 | (2-13) | 4% |
| NI= 113.3 °C; Tc< -20 °C; $\Delta n$= 0.196; $\Delta\varepsilon$= -2.3; Vth= 2.93 V; $\gamma 1$= 224.0 mPa•s. | | |

Composition (M7)

| | | |
|---|---|---|
| 2-BB (2F, 3F) -02 | (1-4) | 5% |
| 3-BB (2F, 3F) -02 | (1-4) | 8% |
| V2-BB (2F, 3F) -02 | (1-4) | 7% |
| 2-BB (2F, 3F) B-3 | (1-9) | 6% |
| 2-BB (2F, 3F) B-4 | (1-9) | 4% |
| V2-BB (2F, 3F) B-1 | (1-9) | 5% |
| 2-HBB (2F, 3F) -02 | (1-10) | 3% |
| 3-HBB (2F, 3F) -02 | (1-10) | 3% |
| V-HBB (2F, 3F) -02 | (1-10) | 4% |
| V2-HBB (2F, 3F) -02 | (1-10) | 4% |
| 3-HHB(2F,3Cl)-O2 | (1-12) | 3% |
| 5-HBB(2F,3Cl)-O2 | (1-13) | 3% |

(continued)

| | | |
|---|---|---|
| 3-BB (2F) B (2F, 3F) -02 | (1-20) | 5% |
| 5-BB (2F) B (2F, 3F) -02 | (1-20) | 5% |
| 3-BB (F) B (2F, 3F) -02 | (1-21) | 4% |
| 3-HH-V | (2-1) | 8% |
| F3-HH-V | (2-1) | 3% |
| 3-HHEH-3 | (2-4) | 4% |
| 3-HHB-3 | (2-5) | 3% |
| 3-B (F) BB-2 | (2-7) | 4% |
| 5-B (F) BB-2 | (2-7) | 3% |
| 3-HB(F)HH-2 | (2-10) | 3% |
| 3-HBB(F)B-3 | (2-13) | 3% |
| NI= 105.2 °C; Tc< -20 °C; Δn= 0.183; Δε= -3.7; Vth= 2.30 V; γ1= 211.2 mPa•s. | | |

Composition (M8)

| | | |
|---|---|---|
| 3-HB (2F, 3F) -02 | (1-1) | 3% |
| V2-BB (2F, 3F) -02 | (1-4) | 3% |
| 2-HHB (2F, 3F) -1 | (1-6) | 3% |
| 3-HHB (2F, 3F) -1 | (1-6) | 3% |
| 2-BB (2F, 3F) B-3 | (1-9) | 5% |
| 2-BB (2F, 3F) B-4 | (1-9) | 4% |
| V2-BB (2F, 3F) B-1 | (1-9) | 5% |
| 3-HBB (2F, 3F) -02 | (1-10) | 5% |
| 4-HBB (2F, 3F) -02 | (1-10) | 3% |
| 5-HBB (2F, 3F) -02 | (1-10) | 3% |
| V-HBB (2F, 3F) -02 | (1-10) | 5% |
| V2-HBB (2F, 3F) -02 | (1-10) | 4% |
| 3-DhB (2F, 3F) -02 | (1) | 4% |
| 2-B2BB(2F,3F)-O2 | (1) | 4% |
| V-HH2HB (2F, 3F) -02 | (1) | 3% |
| 3-HH-V | (2-1) | 5% |
| 1-BB-5 | (2-3) | 3% |
| V-HHB-1 | (2-5) | 4% |
| V2-HHB-1 | (2-5) | 3% |
| V-HBB-2 | (2-6) | 4% |
| 5-B (F) BB-3 | (2-7) | 5% |
| 1-BB(F)B-2V | (2-8) | 4% |
| 2-BB (F) B-3 | (2-8) | 5% |
| 2-BB (F) B-5 | (2-8) | 4% |

(continued)

| | | |
|---|---|---|
| 3-BB(F)B-5 | (2-8) | 3% |
| 3-B2BB-2 | (2-9) | 3% |
| NI= 111.2 °C; Tc< -20 °C; Δn= 0.185; Δε= -2.7; Vth= 2.71 V; γ1= 155.6 mPa•s. | | |

Composition (M9)

| | | |
|---|---|---|
| 3-H10B(2F,3F)-02 | (1-3) | 3% |
| 3-BB (2F, 3F) -02 | (1-4) | 4% |
| V2-BB (2F, 3F) -02 | (1-4) | 3% |
| 2-HHB (2F, 3F) -02 | (1-6) | 3% |
| 3-HHB (2F, 3F) -02 | (1-6) | 4% |
| 3-HH10B(2F,3F)-O2 | (1-8) | 3% |
| 2-BB (2F, 3F) B-3 | (1-9) | 5% |
| 2-BB (2F, 3F) B-4 | (1-9) | 4% |
| V2-BB (2F, 3F) B-1 | (1-9) | 3% |
| 3-dhBB (2F, 3F) -02 | (1-17) | 3% |
| 3-BB (2F) B (2F, 3F) -O2 | (1-20) | 4% |
| 5-BB (2F) B (2F, 3F) -O2 | (1-20) | 4% |
| 2-BB (2F) B (2F, 3F) -O4 | (1-20) | 4% |
| 3-BB (F) B (2F, 3F) -O2 | (1-21) | 5% % |
| 3-HH-V | (2-1) | 12% |
| 1-BB-3 | (2-3) | 3% |
| V-HBB-2 | (2-6) | 5% |
| 3-B (F) BB-2 | (2-7) | 4% |
| 1-BB(F)B-2V | (2-8) | 6% |
| 2-BB (F) B-3 | (2-8) | 5% |
| 3-B2BB-2 | (2-9) | 3% |
| 3-HB(F)BH-3 | (2-12) | 3% |
| 5-HB(F)BH-3 | (2-12) | 3% |
| 5-HBBH-1O1 | (- ) | 4% |
| NI= 114.5 °C; Tc< -20 °C; Δn= 0.192; Δε= -2.7; Vth= 2.71 V; γ1= 185.1 mPa•s. | | |

Composition (M10)

| | | |
|---|---|---|
| 3-H2B(2F,3F)-O2 | (1-2) | 4% |
| 3-H10B(2F,3F)-O2 | (1-3) | 3% |
| 3-BB (2F, 3F) -O2 | (1-4) | 8% |
| V2-BB (2F, 3F) -O2 | (1-4) | 7% |

(continued)

| | | |
|---|---|---|
| 1V2-BB(2F,3F)-O2 | (1-4) | 3% |
| 2-BB (2F, 3F) B-3 | (1-9) | 3% |
| 2-BB (2F, 3F) B-4 | (1-9) | 3% |
| V2-BB (2F, 3F) B-1 | (1-9) | 4% |
| 2-HBB (2F, 3F) -02 | (1-10) | 4% |
| 3-HBB (2F, 3F) -02 | (1-10) | 7% |
| 5-HBB (2F, 3F) -02 | (1-10) | 4% |
| 2-BB (2F) B (2F, 3F) -04 | (1-20) | 5% |
| 3-BB (F) B (2F, 3F) -02 | (1-21) | 5% |
| 3-HH-V | (2-1) | 7% |
| 3-HBB-2 | (2-6) | 5% |
| V-HBB-2 | (2-6) | 4% |
| 3-B (F) BB-2 | (2-7) | 4% |
| 1-BB(F)B-2V | (2-8) | 5% |
| 2-BB (F) B-3 | (2-8) | 5% |
| 3-B2BB-2 | (2-9) | 3% |
| 5-HB(F)BH-3 | (2-12) | 3% |
| 3-HBB (F) B-3 | (2-13) | 4% |
| NI= 104.8 °C; Tc< -20 °C; Δn= 0.196; Δε= -3.1; Vth= 2.52 V; γ1= 185.9 mPa•s. | | |

Composition (M11)

| | | |
|---|---|---|
| 3-HB (2F, 3F) -04 | (1-1) | 4% |
| 3-H2B (2F, 3F) -02 | (1-2) | 3% |
| 3-BB (2F, 3F) -02 | (1-4) | 4% |
| V2-BB (2F, 3F) -02 | (1-4) | 4% |
| 20-BB (2F, 3F) -02 | (1-4) | 3% |
| 2-HHB (2F, 3F) -02 | (1-6) | 3% |
| 3-HHB (2F, 3F) -02 | (1-6) | 4% |
| 5-HHB (2F, 3F) -02 | (1-6) | 3% |
| 2-BB (2F, 3F) B-4 | (1-9) | 4% |
| V2-BB (2F, 3F) B-1 | (1-9) | 5% |
| 2-HBB (2F, 3F) -02 | (1-10) | 4% |
| 3-HBB (2F, 3F) -02 | (1-10) | 3% |
| 5-HBB (2F, 3F) -02 | (1-10) | 5% |
| V-HBB (2F, 3F) -02 | (1-10) | 5% |
| 3-BB (2F) B (2F, 3F) -02 | (1-20) | 3% |
| 5-BB (2F) B (2F, 3F) -02 | (1-20) | 4% |
| 2-BB (2F) B (2F, 3F) -04 | (1-20) | 4% |

(continued)

| | | |
|---|---|---|
| 3-BB (F) B (2F, 3F) -02 | (1-21) | 3% |
| 2-HH-3 | (2-1) | 10% |
| V-HBB-2 | (2-6) | 3% |
| 1-BB(F)B-2V | (2-8) | 4% |
| 2-BB (F) B-3 | (2-8) | 6% |
| 3-B2BB-2 | (2-9) | 3% |
| 3-HB(F)BH-3 | (2-12) | 3% |
| 5-HB(F)BH-3 | (2-12) | 3% |
| NI= 110.6 °C; Tc< -20 °C; Δn= 0.180; Δε= -3.7; Vth= 2.35 V; γ1= 227.0 mPa•s. | | |

Composition (M12)

| | | |
|---|---|---|
| 2-H10B(2F,3F)-02 | (1-3) | 3% |
| 3-H10B(2F,3F)-02 | (1-3) | 5% |
| 2-HH10B(2F,3F)-02 | (1-8) | 3% |
| 3-HH10B(2F,3F)-02 | (1-8) | 3% |
| 2-BB (2F, 3F) B-3 | (1-9) | 4% |
| 2-BB (2F, 3F) B-4 | (1-9) | 4% |
| V2-BB (2F, 3F) B-1 | (1-9) | 4% |
| 3-HBB (2F, 3F) -02 | (1-10) | 7% |
| 4-HBB (2F, 3F) -02 | (1-10) | 4% |
| 3-dhBB (2F, 3F) -02 | (1-17) | 4% |
| 5-BB (2F) B (2F, 3F) -02 | (1-20) | 4% |
| 2-BB (2F) B (2F, 3F) -04 | (1-20) | 3% |
| 3-BB (F) B (2F, 3F) -02 | (1-21) | 4% |
| 3-HH-V | (2-1) | 12% |
| 1-BB-3 | (2-3) | 3% |
| V2-BB-1 | (2-3) | 3% |
| 3-HBB-2 | (2-6) | 3% |
| V-HBB-2 | (2-6) | 3% |
| 5-B (F) BB-2 | (2-7) | 3% |
| 5-B (F) BB-3 | (2-7) | 3% |
| 1-BB(F)B-2V | (2-8) | 3% |
| 2-BB (F) B-3 | (2-8) | 4% |
| 2-BB (F) B-5 | (2-8) | 4% |
| 3-HB(F)BH-3 | (2-12) | 3% |
| 3-HBB (F) B-3 | (2-13) | 4% |
| NI= 108.2 °C; Tc< -20 °C; Δn= 0.185; Δε= -2.7; Vth= 2.71 V; γ1= 158.9 mPa•s. | | |

Composition (M13)

| | | |
|---|---|---|
| 2-H10B(2F,3F)-02 | (1-3) | 3% |
| 3-H10B(2F,3F)-02 | (1-3) | 3% |
| 3-BB (2F, 3F) -02 | (1-4) | 3% |
| 3-HH2B (2F, 3F) -02 | (1-7) | 3% |
| 2-BB (2F, 3F) B-3 | (1-9) | 5% |
| 2-BB (2F, 3F) B-4 | (1-9) | 4% |
| V2-BB (2F, 3F) B-1 | (1-9) | 5% |
| 3-HBB (2F, 3F) -02 | (1-10) | 3% |
| 4-HBB (2F, 3F) -02 | (1-10) | 4% |
| 5-HBB (2F, 3F) -02 | (1-10) | 5% |
| V-HBB (2F, 3F) -02 | (1-10) | 6% |
| 3-B (2F) B (2F, 3F) -02 | (1-22) | 3% |
| 5-HB (2F, 3F) B-3 | (1) | 3% |
| 3-B2BB (2F, 3F) -02 | (1) | 4% |
| 2-BB2B (2F, 3F) -3 | (1) | 5% |
| 3-HH-V | (2-1) | 4% |
| 3-HH-V1 | (2-1) | 4% |
| 3-HH-VFF | (2-1) | 5% |
| V2-BB-1 | (2-3) | 3% |
| 5-B (F) BB-2 | (2-7) | 4% |
| 1-BB(F)B-2V | (2-8) | 4% |
| 2-BB (F) B-3 | (2-8) | 3% |
| 2-BB(F)B-5 | (2-8) | 5% |
| 3-B2BB-2 | (2-9) | 5% |
| 3-HBB (F) B-3 | (2-13) | 4% |
| NI= 100.1 °C; Tc< -20 °C; Δn= 0.183; Δε= -2.6; Vth= 2.80 V; γ1= 153.9 mPa•s. | | |

Composition (M14)

| | | |
|---|---|---|
| 3-BB (2F, 3F) -02 | (1-4) | 3% |
| V2-BB (2F, 3F) -02 | (1-4) | 2% |
| 20-BB (2F, 3F) -02 | (1-4) | 2% |
| 2-BB (2F, 3F) B-3 | (1-9) | 6% |
| 2-BB (2F, 3F) B-4 | (1-9) | 3% |
| V2-BB (2F, 3F) B-1 | (1-9) | 3% |
| 2-HBB (2F, 3F) -02 | (1-10) | 3% |
| 3-HBB (2F, 3F) -02 | (1-10) | 7% |

(continued)

| | | |
|---|---|---|
| 4-HBB (2F, 3F) -02 | (1-10) | 4% |
| V-HBB (2F, 3F) -02 | (1-10) | 6% |
| 3-HH10Cro(7F,8F)-5 | (1-15) | 3% |
| 3-BB (2F) B (2F, 3F) -02 | (1-20) | 5% |
| 5-BB (2F) B (2F, 3F) -02 | (1-20) | 4% |
| 2-BB (2F) B (2F, 3F) -04 | (1-20) | 4% |
| 3-BB (F) B (2F, 3F) -02 | (1-21) | 5% |
| 3-HH-V | (2-1) | 16% |
| 3-HH-V1 | (2-1) | 5% |
| 3-B (F) BB-2 | (2-7) | 5% |
| 1-BB(F)B-2V | (2-8) | 6% |
| 2-BB (F) B-3 | (2-8) | 5% |
| 3-B2BB-2 | (2-9) | 3% |
| NI= 106.1 °C; Tc< -20 °C; Δn= 0.187; Δε= -2.9; Vth= 2.60 V; γ1= 156.9 mPa•s. | | |

Composition (M15)

| | | |
|---|---|---|
| 3-HH1OB(2F,3F)-O2 | (1-8) | 3% |
| 2-BB (2F, 3F) B-3 | (1-9) | 6% |
| 2-BB (2F, 3F) B-4 | (1-9) | 6% |
| V2-BB (2F, 3F) B-1 | (1-9) | 6% |
| 3-HBB (2F, 3F) -02 | (1-10) | 3% |
| V-HBB (2F, 3F) -02 | (1-10) | 4% |
| V2-HBB (2F, 3F) -02 | (1-10) | 4% |
| 5-HDhB (2F, 3F) -02 | (1-16) | 4% |
| 3-dhBB (2F, 3F) -02 | (1-17) | 3% |
| 2-HchB (2F, 3F) -02 | (1-19) | 5% |
| 3-BB (2F) B (2F, 3F) -02 | (1-20) | 4% |
| 5-BB (2F) B (2F, 3F) -02 | (1-20) | 3% |
| 2-BB (2F) B (2F, 3F) -04 | (1-20) | 4% |
| 3-BB (F) B (2F, 3F) -02 | (1-21) | 4% |
| 4-HH-V | (2-1) | 9% |
| 1-HH-2V1 | (2-1) | 3% |
| 3-HH-2V1 | (2-1) | 3% |
| V2-BB-1 | (2-3) | 4% |
| 1V2-BB-1 | (2-3) | 4% |
| 5-B (F) BB-3 | (2-7) | 5% |
| 1-BB(F)B-2V | (2-8) | 4% |
| 2-BB (F) B-3 | (2-8) | 5% |

(continued)

| | | |
|---|---|---|
| 3-HB(F)BH-3 | (2-12) | 4% |
| NI= 112.4 °C; Tc< -20 °C; Δn= 0.190; Δε= -2.7; Vth= 2.68 V; γ1= 158.6 mPa•s. | | |

Composition (M16)

| | | |
|---|---|---|
| V2-H2B (2F, 3F) -O2 | (1-2) | 5% |
| V2-H1OB(2F,3F)-O4 | (1-3) | 3% |
| 3-BB (2F, 3F) -O2 | (1-4) | 5% |
| V2-BB (2F, 3F) -O2 | (1-4) | 6% |
| 5-HH2B (2F, 3F) -O2 | (1-7) | 3% |
| V-HH2B (2F, 3F) -O2 | (1-7) | 5% |
| 2-BB (2F, 3F) B-3 | (1-9) | 4% |
| 2-BB (2F, 3F) B-4 | (1-9) | 3% |
| V2-BB (2F, 3F) B-1 | (1-9) | 4% |
| V-HBB (2F, 3F) -02 | (1-10) | 6% |
| V2-HBB (2F, 3F) -O2 | (1-10) | 6% |
| V-HBB (2F, 3F) -04 | (1-10) | 4% |
| V-H2BBB (2F, 3F) -02 | (1) | 4% |
| 2-HH-3 | (2-1) | 8% |
| 1-BB-5 | (2-3) | 5% |
| 3-HBB-2 | (2-6) | 3% |
| V-HBB-2 | (2-6) | 3% |
| 3-B (F) BB-2 | (2-7) | 3% |
| 5-B (F) BB-2 | (2-7) | 4% |
| 1-BB(F)B-2V | (2-8) | 4% |
| 2-BB (F) B-3 | (2-8) | 5% |
| 2-BB (F) B-5 | (2-8) | 4% |
| 3-B2BB-2 | (2-9) | 3% |
| NI= 98.3 °C; Tc< -20 °C; Δn= 0.185; Δε= -2.7; Vth= 2.67 V; γ1= 176.3 mPa•s. | | |

Composition (M17)

| | | |
|---|---|---|
| 3-BB (2F, 3F) -02 | (1-4) | 5% |
| V2-BB (2F, 3F) -02 | (1-4) | 3% |
| 3-B (2F, 3F) B (2F, 3F) -02 | (1-5) | 2% |
| 2-HHB (2F, 3F) -1 | (1-6) | 7% |
| V-HHB (2F, 3F) -04 | (1-6) | 3% |
| 2-HH10B (2F, 3F) -02 | (1-8) | 3% |

(continued)

| | | |
|---|---|---|
| 3-HBB (2F, 3F) -02 | (1-10) | 4% |
| V-HBB (2F, 3F) -02 | (1-10) | 3% |
| V2-HBB (2F, 3F) -02 | (1-10) | 3% |
| 3-HBB(2F,3Cl)-O2 | (1-13) | 3% |
| 3-BB (2F) B (2F, 3F) -02 | (1-20) | 4% |
| 5-BB (2F) B (2F, 3F) -02 | (1-20) | 3% |
| 2-BB (2F) B (2F, 3F) -04 | (1-20) | 4% |
| 3-BB (F) B (2F, 3F) -02 | (1-21) | 5% |
| 2-B2BB (2F, 3F) -02 | (1) | 2% |
| 3-H2BBB (2F, 3F) -02 | (1) | 3% |
| V-H2BBB (2F, 3F) -02 | (1) | 3% |
| 3-HH-V | (2-1) | 7% |
| 3-HH-V1 | (2-1) | 4% |
| 3-HBB-2 | (2-6) | 3% |
| 3-B (F) BB-2 | (2-7) | 4% |
| 5-B (F) BB-2 | (2-7) | 5% |
| 5-B (F) BB-3 | (2-7) | 5% |
| 3-B2BB-2 | (2-9) | 3% |
| 3-HB(F)BH-3 | (2-12) | 3% |
| 5-HB(F)BH-3 | (2-12) | 3% |
| 3-HBB (F) B-3 | (2-13) | 3% |
| NI= 131.5 °C; Tc< -20 °C; Δn= 0.189; Δε= -3.4; Vth= 2.73 V; η= 50.3 mPa•s. | | |

Composition (M18)

| | | |
|---|---|---|
| V-HB (2F, 3F) -02 | (1-1) | 3% |
| V2-HB (2F, 3F) -02 | (1-1) | 3% |
| V-HHB (2F, 3F) -02 | (1-6) | 3% |
| 2-BB (2F, 3F) B-3 | (1-9) | 4% |
| 2-BB (2F, 3F) B-4 | (1-9) | 5% |
| V2-BB (2F, 3F) B-1 | (1-9) | 8% |
| 3-HBB (2F, 3F) -02 | (1-10) | 3% |
| 4-HBB (2F, 3F) -02 | (1-10) | 3% |
| 5-HBB (2F, 3F) -02 | (1-10) | 4% |
| V-HBB (2F, 3F) -02 | (1-10) | 6% |
| V-HBB (2F, 3F) -04 | (1-10) | 8% |
| V-HHB(2F,3Cl)-O2 | (1-12) | 7% |
| 3-HH-4 | (2-1) | 12% |
| 3-B (F) BB-2 | (2-7) | 3% |

(continued)

| | | |
|---|---|---|
| 5-B (F) BB-2 | (2-7) | 4% |
| 5-B (F) BB-3 | (2-7) | 5% |
| 1-BB(F)B-2V | (2-8) | 6% |
| 2-BB (F) B-3 | (2-8) | 7% |
| 2-BB (F) B-5 | (2-8) | 3% |
| 3-BB(F)B-5 | (2-8) | 3% |
| NI= 120.2 °C; Tc< -20 °C; Δn= 0.192; Δε= -2.4; Vth= 2.86 V. | | |

Composition (M19)

| | | |
|---|---|---|
| 2-BB (2F, 3F) -O2 | (1-4) | 6% |
| 3-BB (2F, 3F) -O2 | (1-4) | 10% |
| V2-BB (2F, 3F) -O2 | (1-4) | 10% |
| 3-HHB (2F, 3F) -O2 | (1-6) | 7% |
| 3-HH2B (2F, 3F) -O2 | (1-7) | 6% |
| 2-HBB (2F, 3F) -02 | (1-10) | 3% |
| 3-HBB (2F, 3F) -02 | (1-10) | 7% |
| 3-dhBB (2F, 3F) -02 | (1-17) | 10% |
| 1-BB-3 | (2-3) | 4% |
| 1-BB-5 | (2-3) | 2% |
| 3-HBB-2 | (2-6) | 8% |
| V-HBB-2 | (2-6) | 9% |
| 5-B (F) BB-2 | (2-7) | 9% |
| 5-B (F) BB-3 | (2-7) | 9% |
| NI= 98.6 °C; Tc< -20 °C; Δn= 0.185; Δε= -3.3; Vth= 2.46 V; η= 41.7 mPa•s. | | |

Composition (M20)

| | | |
|---|---|---|
| 3-BB (2F, 3F) -02 | (1-4) | 6% |
| 5-BB (2F, 3F) -02 | (1-4) | 6% |
| 2-HHB (2F, 3F) -02 | (1-6) | 3% |
| 3-HHB (2F, 3F) -02 | (1-6) | 3% |
| 5-HHB (2F, 3F) -02 | (1-6) | 5% |
| 3-HH2B (2F, 3F) -02 | (1-7) | 9% |
| 2-HBB (2F, 3F) -02 | (1-10) | 3% |
| 3-HBB (2F, 3F) -02 | (1-10) | 7% |
| 4-HBB (2F, 3F) -02 | (1-10) | 4% |
| 3-HDhB (2F, 3F) -02 | (1-16) | 9% |

(continued)

| | | |
|---|---|---|
| 3-dhBB (2F, 3F) -02 | (1-17) | 6% |
| 3-HB-02 | (2-2) | 4% |
| 1-BB-3 | (2-3) | 4% |
| 1-BB-5 | (2-3) | 3% |
| 3-HHB-1 | (2-5) | 3% |
| 3-HHB-01 | (2-5) | 3% |
| 3-HBB-2 | (2-6) | 5% |
| 5-B (F) BB-2 | (2-7) | 6% |
| 5-B (F) BB-3 | (2-7) | 7% |
| 3-HHEBH-3 | (2-11) | 4% |
| NI= 122.6 °C; Tc< -20 °C; Δn= 0.162; Δε= -3.8; Vth= 2.56 V. | | |

Polymerizable compounds (RM-1) to (RM-11) that will be used in Examples are as follows.

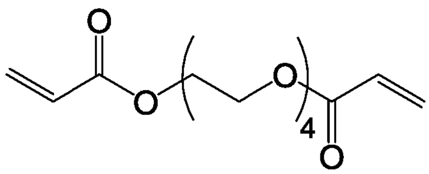

(RM-1)

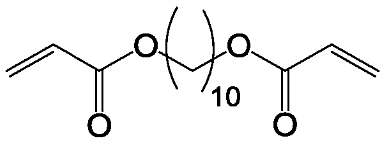

(RM-2)

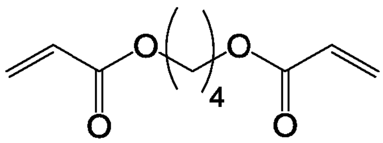

(RM-3)

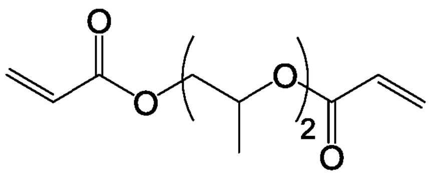

(RM-4)

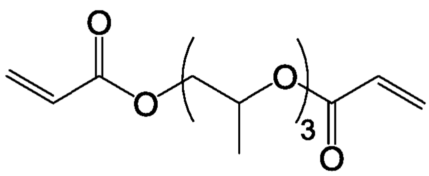

(RM-5)

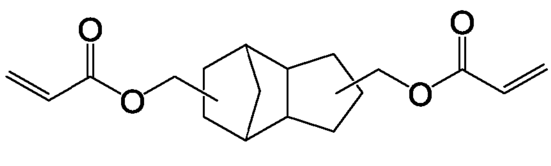

(RM-6)

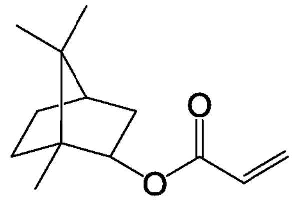

(RM-7)

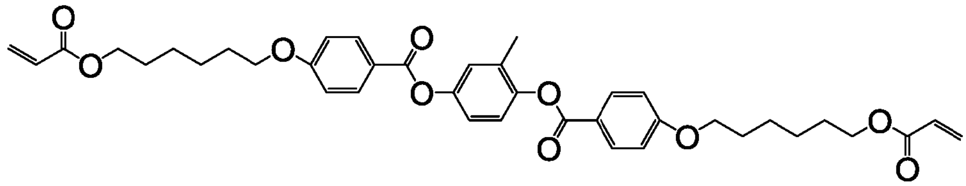

(RM-8)

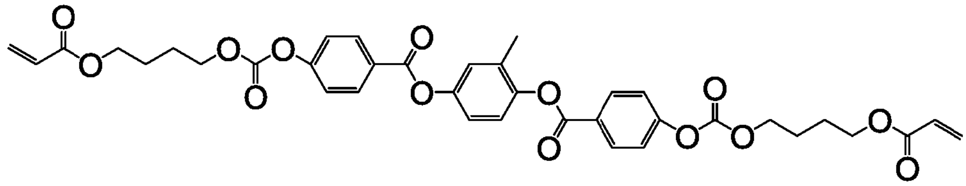

(RM-9)

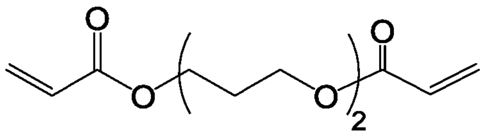

(RM-10)

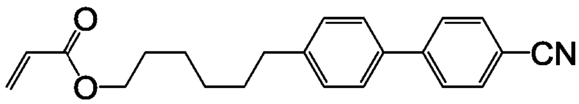

(RM-11)

Example 1

Production of the liquid crystal dimming device

A polymerization initiator, Irgacure 651, was added to composition (M1) having negative dielectric anisotropy in the ratio of 0.3% by weight. 95% by weight of composition (M1) was mixed with 5% by weight of polymerizable compound (RM-1) to give a polymerizable composition. The polymerizable composition was injected to a VA (vertical alignment) device, in which the distance between the two glass substrates (cell gap) was 3.5 micrometers. The temperature during injection was 140 °C. The device was irradiated with ultraviolet light of 1 J at 365 nm to produce a device having a liquid crystal composite. The device was transparent. This device became opaque when a voltage of 45 V was applied and light was irradiated. From these results, the VA device was found to be a reverse mode.

Examples 2 to 29

VA devices were produced in the same manner as in Example 1 using composition (M1) to composition (M20) and polymerizable compounds (RM-1) to (RM-9). The results were summarized in Table 4. Any VA device was found to have a reverse mode.

**Table 4. Production of liquid crystal dimming devices**

| Example | Liquid crystal composition | Polymerizable compound | VA device | |
|---|---|---|---|---|
| | | | No voltage applied | Voltage applied |
| 1 | M1 | RM-1 | transparent | opaque |
| 2 | M2 | RM-2 | transparent | opaque |

(continued)

| Example | Liquid crystal composition | Polymerizable compound | VA device | |
|---|---|---|---|---|
| | | | No voltage applied | Voltage applied |
| 3 | M3 | RM-8 | transparent | opaque |
| 4 | M3 | RM-9 | transparent | opaque |
| 5 | M4 | RM-4 | transparent | opaque |
| 6 | M5 | RM-5 | transparent | opaque |
| 7 | M6 | RM-6 | transparent | opaque |
| 8 | M7 | RM-7 | transparent | opaque |
| 9 | M8 | RM-8 | transparent | opaque |
| 10 | M9 | RM-6 | transparent | opaque |
| 11 | M10 | RM-4 | transparent | opaque |
| 12 | M10 | RM-8 | transparent | opaque |
| 13 | M10 | RM-9 | transparent | opaque |
| 14 | M11 | RM-3 | transparent | opaque |
| 15 | M12 | RM-4 | transparent | opaque |
| 16 | M13 | RM-5 | transparent | opaque |
| 17 | M14 | RM-5 | transparent | opaque |
| 18 | M14 | RM-8 | transparent | opaque |
| 19 | M14 | RM-9 | transparent | opaque |
| 20 | M15 | RM-1 | transparent | opaque |
| 21 | M16 | RM-2 | transparent | opaque |
| 22 | M17 | RM-3 | transparent | opaque |
| 23 | M17 | RM-9 | transparent | opaque |
| 24 | M18 | RM-7 | transparent | opaque |
| 25 | M18 | RM-9 | transparent | opaque |
| 26 | M19 | RM-1 | transparent | opaque |
| 27 | M19 | RM-2 | transparent | opaque |
| 28 | M19 | RM-9 | transparent | opaque |
| 29 | M20 | RM-8 | transparent | opaque |

Example 30

Production of the liquid crystal dimming device

Next, two polymerizable compositions are combined. A polymerization initiator, Irgacure 651, was added to composition (M20) having negative dielectric anisotropy in the ratio of 0.3% by weight. 90% by weight of liquid crystal composition (M20), 5% by weight of polymerizable compound (RM-8) and 5% by weight of polymerizable compound (RM-11) were mixed to give a polymerizable composition. The polymerizable composition was injected to a VA device in which the distance between the two glass substrates (cell gap) were 3.5 micrometers. The temperature at the injection was 140 °C. The device was irradiated with ultraviolet light of 1 J at 365 nm to produce a device having a liquid crystal composite. The device was transparent. This device became opaque when a voltage of 45 V was applied and light was irradiated. From these results, the VA device was found to have a reverse mode.

Examples 31 to 39

VA devices were produced from composition (M20) and two polymerizable compounds in the same manner as in Example 30. The results were summarized in Table 5. Any VA device had a reverse mode.

Table 5. Production of liquid crystal dimming devices

| Example | Liquid crystal composition | | Polymerizable compound 1 | | Polymerizable compound 2 | | VA device | |
|---|---|---|---|---|---|---|---|---|
| | Number | % by weight | Number | % by weight | Number | % by weight | No voltage applied | Voltage applied |
| 30 | M20 | 90 | RM-8 | 5 | RM-11 | 5 | transparent | opaque |
| 31 | M20 | 90 | RM-9 | 5 | RM-11 | 5 | transparent | opaque |
| 32 | M20 | 85 | RM-8 | 10 | RM-11 | 5 | transparent | opaque |
| 33 | M20 | 85 | RM-9 | 10 | RM-11 | 5 | transparent | opaque |
| 34 | M20 | 90 | RM-9 | 5 | RM-8 | 5 | transparent | opaque |
| 35 | M20 | 85 | RM-9 | 10 | RM-8 | 5 | transparent | opaque |
| 36 | M20 | 85 | RM-9 | 5 | RM-8 | 10 | transparent | opaque |
| 37 | M20 | 95 | RM-8 | 3 | RM-6 | 2 | transparent | opaque |
| 38 | M20 | 95 | RM-8 | 2 | RM-10 | 3 | transparent | opaque |
| 39 | M20 | 95 | RM-6 | 3 | RM-10 | 3 | transparent | opaque |

Measurement for Hazes

The VA device produced in Example 18 was placed in a haze meter in order that the device is perpendicular to incident light. A voltage in the range of 0 to 60 V was applied to the device, and the haze was measured. The haze was 3.2% (transparent) when no voltage was applied. The haze was 62.2% (opaque) when a voltage of 30 V was applied. Hazes of some VA devices were measured in the same manner. The results were summarized in Table 6. The best combination of the haze and a voltage was reported since the haze had voltage dependence.

Table 6. Haze of liquid crystal dimming devices

| Liquid crystal dimming device | Haze (%) | |
|---|---|---|
| | No voltage applied | Voltage applied |
| VA device in Example 18 | 3.2 | 62.2 (30 V) |
| VA device in Example 28 | 1.4 | 74.2 (45 V) |
| VA device in Example 29 | 1.3 | 71.1 (45 V) |
| VA device in Example 30 | 2.6 | 56.0 (60 V) |
| VA device in Example 31 | 1.4 | 69.6 (60 V) |
| VA device in Example 34 | 1.2 | 60.7 (60 V) |
| VA device in Example 37 | 1.7 | 65.3 (40 V) |
| VA device in Example 38 | 1.4 | 68.8 (40 V) |

From the results in Table 4 to Table 6, the liquid crystal composites in Examples 1 to 39 was found to have characteristics suitable for a liquid crystal dimming device having a reverse mode.

When the characteristics of the liquid crystal composition or the liquid crystal display device are measured, a device with a glass substrate is usually used. In the liquid crystal dimming device, a plastic film is sometimes used as a substrate. Then, a device in which the substrate was polycarbonate was produced and the characteristics such as a threshold voltage and a response time were measured. The measured value was compared with these of a device with a glass plate. As a result, two types of the measured values were almost the same. Thus, measurement using a device with a

glass substrate was described with regard to characteristics such as a threshold voltage and a response time.

**Industrial Applicability**

The liquid crystal dimming device including the liquid crystal composite of the invention can be used for dimming windows or smart windows, since it has characteristics such as a short response time, a large voltage holding ratio, a low threshold voltage, a large haze and a long service life.

## Claims

1. A liquid crystal composite for a reverse mode-device that is transparent when no voltage is applied and is opaque when voltage is applied, the liquid crystal composite includes a polymer and a liquid crystal composition that includes at least one compound selected from compounds represented by formula (1) as a first component:

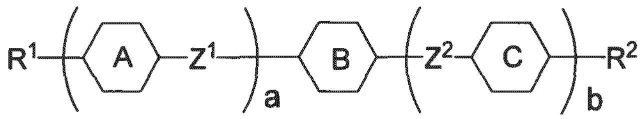

(1)

in formula (1), $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine; ring A and ring C are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2, 6-diyl or chromane-2, 6-diyl in which at least one hydrogen has been replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^1$ and $Z^2$ are independently a single bond, ethylene, carbonyloxy or methyleneoxy; a is 1, 2 or 3, b is 0 or 1; and the sum of a and b is 3 or less.

2. The liquid crystal composite according to claim 1, wherein the liquid crystal composition includes at least one compound selected from the group of compounds represented by formula (1-1) to formula (1-22) as the first component:

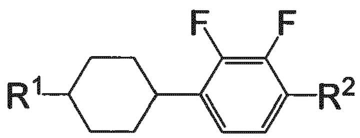

(1-1)

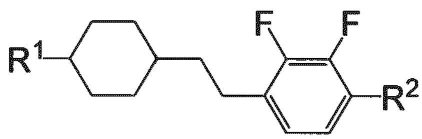

(1-2)

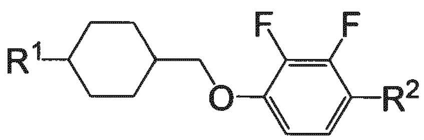

(1-3)

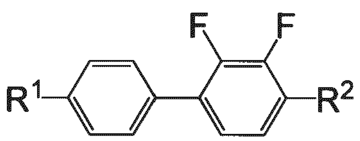

(1-4)

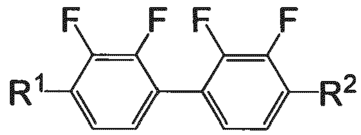

(1-5)

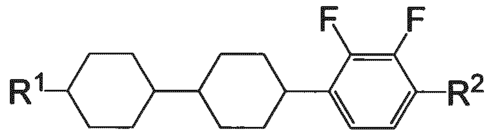

(1-6)

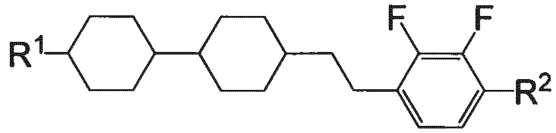

(1-7)

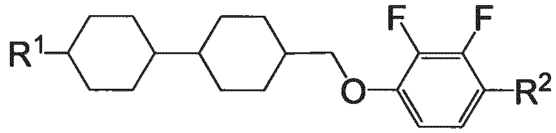

(1-8)

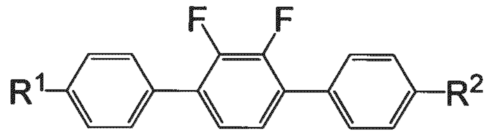

(1-9)

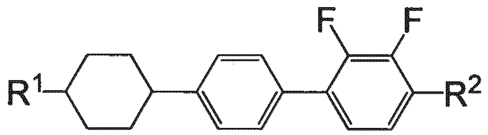

(1-10)

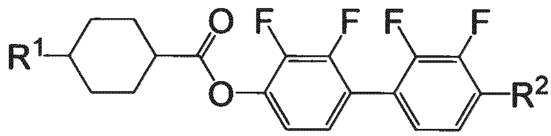

(1-11)

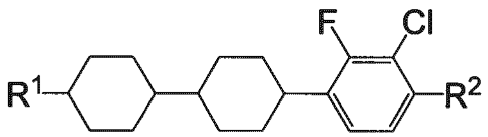

(1-12)

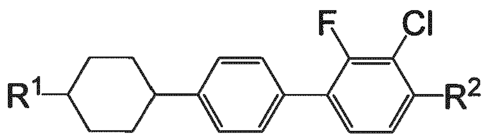

(1-13)

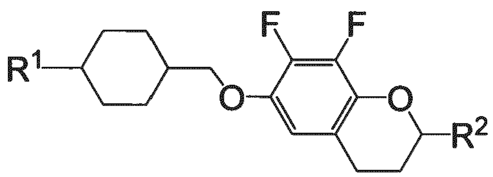

(1-14)

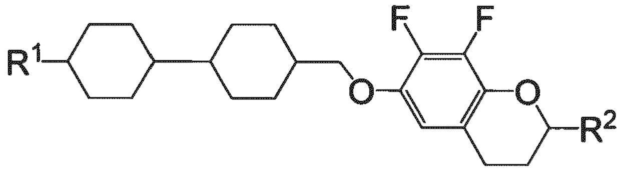
(1-15)

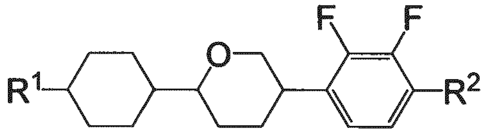
(1-16)

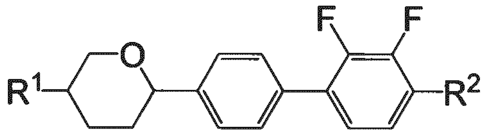
(1-17)

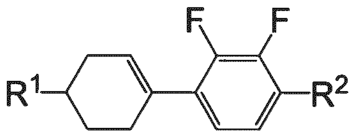
(1-18)

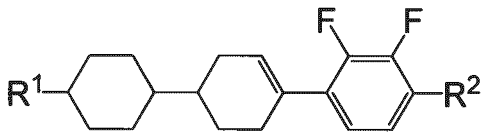
(1-19)

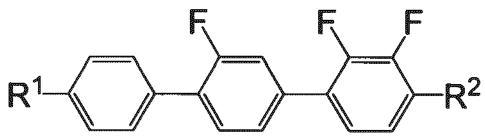
(1-20)

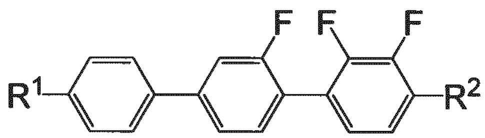
(1-21)

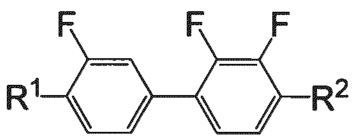
(1-22)

in formula (1-1) to formula (1-22), $R^1$ and $R^2$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one hydrogen has been replaced by fluorine or chlorine.

**3.** The liquid crystal composite according to claim 1 or 2, wherein a ratio of the first component is in the range of 20% by weight to 90% by weight based on a weight of the liquid crystal composition.

**4.** The liquid crystal composite according to any one of claims 1 to 3, wherein the liquid crystal composition further includes at least one compound selected from compounds represented by formula (2) as a second component:

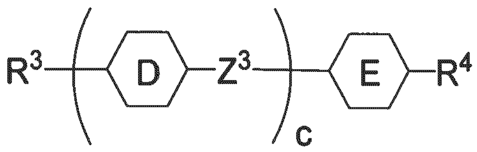

(2)

in formula (2), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine or alkenyl having 2 to 12 carbons in which at least one hydrogen has been replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, ethylene or carbonyloxy; and c is 1, 2 or 3.

**5.** The liquid crystal composite according to any one of claims 1 to 4, wherein the liquid crystal composition further includes at least one compound selected from the group of compounds represented by formula (2-1) to formula (2-13) as the second component:

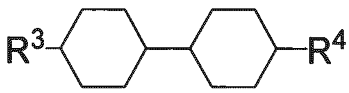

(2-1)

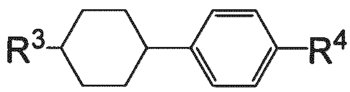

(2-2)

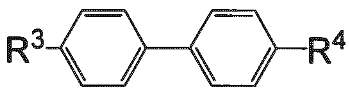

(2-3)

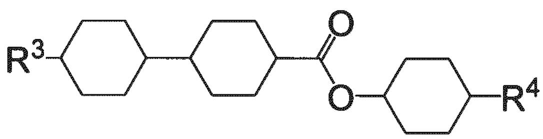

(2-4)

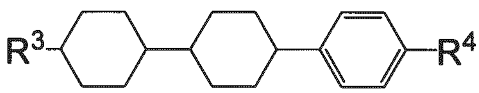

(2-5)

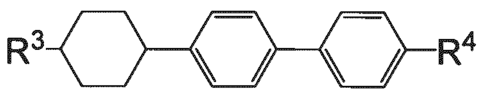

(2-6)

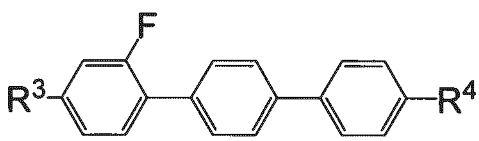

(2-7)

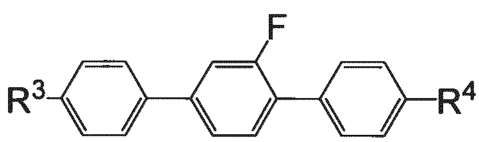

(2-8)

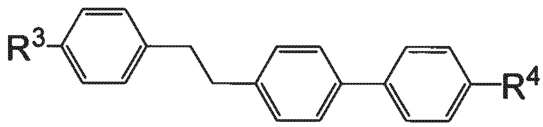

(2-9)

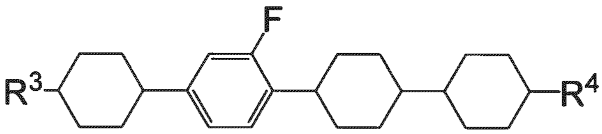

(2-10)

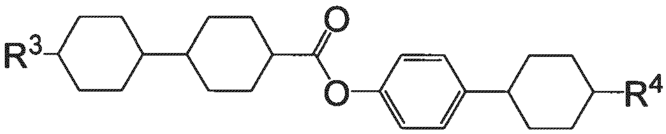

(2-11)

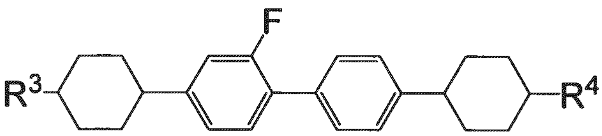

(2-12)

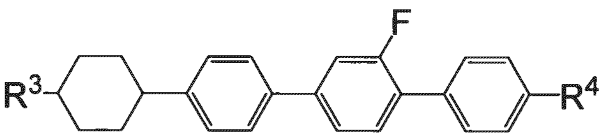

(2-13)

in formula (2-1) to formula (2-13), R and R are independently alkyl having 1 to 12 carbons, alkoxy having 1 to 12 carbons, alkenyl having 2 to 12 carbons, alkyl having 1 to 12 carbons in which at least one hydrogen has been replaced by fluorine or chlorine or alkenyl having 2 to 12 carbons in which at least one hydrogen has been replaced by fluorine or chlorine.

**6.** The liquid crystal composite according to claim 4 or 5, wherein a ratio of the second component is in the range of 10% by weight to 70% by weight based on a weight of the liquid crystal composition.

**7.** The liquid crystal composite according to any one of claims 1 to 6, wherein the polymer is a polymer derived from a polymerizable compound including a compound represented by formula (3):

$$P^1\text{-}Z^4\text{-}P^2 \qquad (3)$$

in formula (3), $Z^4$ is alkylene having 1 to 20 carbons, and in the alkylene at least one hydrogen may be replaced by alkyl having 1 to 5 carbons, fluorine, chlorine or $P^3$ , at least one $-CH_2-$ may be replaced by -O-, -CO-, -COO-, -OCO-, -NH- or $-N(R^5)-$, at least one $-CH_2-CH_2-$may be replaced by -CH=CH- or -C≡C-, and at least one $-CH_2-$ may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by $R^5$ or $P^3$, where $R^5$ is alkyl having 1 to 12 carbons, and in the alkyl at least one $-CH_2-$ may be replaced by -O-, -CO-, -COO- or -OCO-; and $P^1$, $P^2$ and $P^3$ are independently a polymerizable group.

**8.** The liquid crystal composite according to any one of claims 1 to 6, wherein the polymer is a polymer derived from a compound represented by formula (3):

$$P^1\text{-}Z^4\text{-}P^2 \qquad (3)$$

in formula (3), Z is alkylene having 1 to 20 carbons, and in the alkylene at least one hydrogen may be replaced by alkyl having 1 to 5 carbons, fluorine, chlorine or $P^3$, at least one $-CH_2-$ may be replaced by -O-, -CO-, -COO-, -OCO-, -NH-,

-N($R^5$)-, -CH=CH- or -C=C-, and at least one -$CH_2$- may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by $R^5$ or $P^3$, where $R^5$ is alkyl having 1 to 12 carbons, and in the alkyl at least one -$CH_2$- may be replaced by -O-, -CO-, -COO- or -OCO-; and $P^1$, $P^2$ and $P^3$ are independently a polymerizable group.

**9.** The liquid crystal composite according to claim 7 or 8, wherein in formula (3), $P^1$, $P^2$ and $P^3$ are independently a group selected from the group of polymerizable groups represented by formula (P-1) to formula (P-6) :

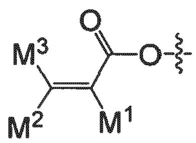
(P-1)

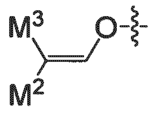
(P-2)

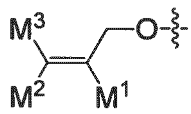
(P-3)

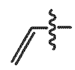
(P-4)

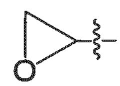
(P-5)

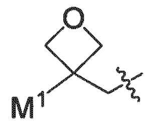
(P-6)

in formula (P-1) to formula (P-6), $M^1$, $M^2$ and $M^3$ are independently hydrogen, fluorine, alkyl having 1 to 5 carbons or alkyl having 1 to 5 carbons in which at least one hydrogen has been replaced by fluorine or chlorine.

**10.** The liquid crystal composite according to any one of claims 7 to 9, wherein in formula (3), at least one of $P^1$, $P^2$ and $P^3$ is acryloyloxy or methacryloyloxy.

**11.** The liquid crystal composite according to any one of claims 1 to 6, wherein the polymer is a polymer derived from a polymerizable compound including a compound represented by formula (4):

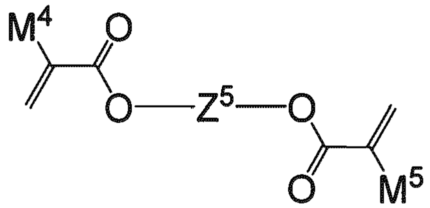
(4)

in formula (4), $M^4$ and $M^5$ are independently hydrogen or methyl; and $Z^5$ is alkylene having 20 to 80 carbons, and in the alkylene at least one hydrogen may be replaced by alkyl having 1 to 20 carbons, fluorine or chlorine, at least one -$CH_2$- may be replaced by -O-, -CO-, -COO-, -OCO-, -NH- or -N($R^5$)-, and at least one -$CH_2$-$CH_2$- may be replaced by -CH=CH- or -C≡C-, where $R^5$ is alkyl having 1 to 12 carbons, and in the alkyl at least one -$CH_2$- may be replaced by -O-, -CO-, -COO- or -OCO-.

**12.** The liquid crystal composite according to any one of claims 1 to 6, wherein the polymer is a polymer derived from a polymerizable compound including a compound represented by formula (5):

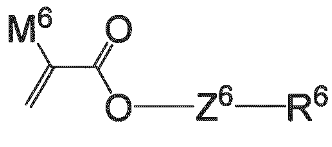
(5)

in formula (5), $M^6$ is hydrogen or methyl; $Z^6$ is a single bond or alkylene having 1 to 5 carbons, and in the alkylene at least one hydrogen may be replaced by fluorine or chlorine and at least one -$CH_2$- may be replaced by -O-, -CO-, -COO- or -OCO-; and $R^6$ is alkyl having 1 to 40 carbons, and in the alkyl at least one hydrogen may be replaced by fluorine or chlorine, at least one -$CH_2$- may be replaced by -O-, -CO-, -COO- or -OCO-, and at least one -$CH_2$- may be replaced by a divalent group formed from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound or a heterocyclic aromatic compound by removing two hydrogens, and in these divalent groups the number of carbons is 5 to 35 and at least one hydrogen may be replaced by alkyl having 1 to 12 carbons, and in the alkyl at least one -$CH_2$-may be replaced by -O-, -CO-, -COO- or -OCO-.

**13.** The liquid crystal composite according to claim 12, wherein in formula (5), $R^6$ is alkyl having 1 to 40 carbons, and in the alkyl at least one hydrogen may be replaced by fluorine or chlorine and at least one $-CH_2-$ may be replaced by -O-, -CO-, -COO- or -OCO-.

**14.** The liquid crystal composite according to any one of claims 1 to 6, wherein the polymer is a polymer derived from a polymerizable compound including a compound selected from the group of compounds represented by formula (6), formula (7) and formula (8) :

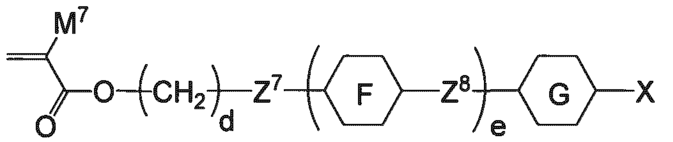

(6)

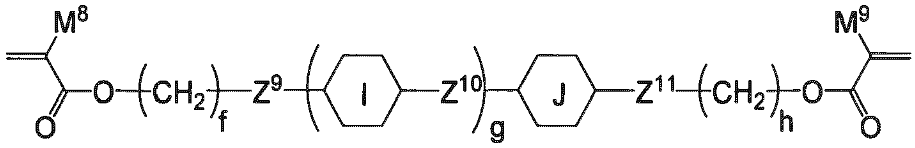

(7)

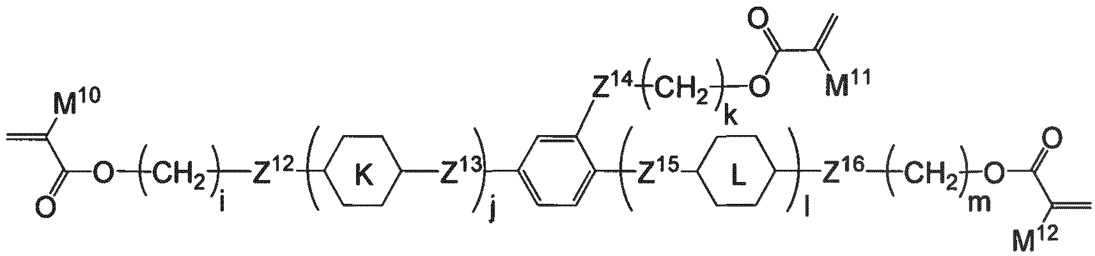

(8)

in formula (6), formula (7) and formula (8), ring F, ring G, ring I, ring J, ring K and ring L are independently 1,4-cyclohexylene, 1,4-phenylene, 1,4-cyclohexenylene, pyridine-2,5-diyl, 1,3-dioxane-2,5-diyl, naphthalene-2,6-diyl or fluorene-2,7-diyl, where at least one hydrogen may be replaced by fluorine, chlorine, cyano, hydroxy, formyl, trifluoroacetyl, difluoromethyl, trifluoromethyl, alkyl having 1 to 5 carbons, alkoxyl having 1 to 5 carbons, alkoxycarbonyl having 1 to 5 carbons or alkanoyl having 1 to 5 carbons; $Z^7$, $Z^9$, $Z^{11}$, $Z^{12}$ and $Z^{16}$ are independently a single bond, -O-, -COO-, -OCO- or -OCOO-; $Z^8$, $Z^{10}$, $Z^{13}$ and $Z^{15}$ are independently a single bond, $-OCH_2-$, $-CH_2O-$, -COO-, -OCO-, -COS-, -SCO-, -OCOO-, -CONH-, -NHCO-, $-CF_2O-$, $-OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, $-N=C(CH_3)-$, $-C(CH_3)=N-$, -N=N- or -C≡C-; $Z^{14}$ is a single bond, -O- or -COO-; X is hydrogen, fluorine, chlorine, trifluoromethyl, trifluoromethoxy, cyano, alkyl having 1 to 20 carbons, alkenyl having 2 to 20 carbons, alkoxy having 1 to 20 carbons or alkoxycarbonyl having 1 to 20 carbons; e and g are an integer from 1 to 4; j and l are independently an integer from 0 to 3; the sum of j and l is 1 to 4; d, f, h, i, k and m are independently an integer from 0 to 20; and $M^7$ to $M^{12}$ are independently hydrogen or methyl.

**15.** The liquid crystal composite according to any one of claims 1 to 14, wherein a ratio of the liquid crystal composition is in the range of 50% by weight to 95% by weight, and a ratio of the polymer is in the range of 5% by weight to 50% by weight based on a weight of the liquid crystal composite.

**16.** The liquid crystal composite according to any one of claims 1 to 15, wherein the liquid crystal composite is obtained from a precursor of a polymerizable composition including the liquid crystal composition and the polymerizable compound, and the polymerizable composition includes a photo-polymerization initiator as an additive.

**17.** A liquid crystal dimming device, wherein a dimming layer is the liquid crystal composite according to any one of claims 1 to 16, and the dimming layer is sandwiched between a pair of transparent substrates and the transparent substrates have a transparent electrode.

**18.** The liquid crystal dimming device according to claim 17, wherein the transparent substrate is a glass plate or an acrylic plate.

19. The liquid crystal dimming device according to claim 17, wherein the transparent substrate is a plastic film.

20. A dimming window using the liquid crystal dimming device according to any one of claims 17 to 19.

21. A smart window using the liquid crystal dimming device according to any one of claims 17 to 19.

22. Use of the liquid crystal composite according to any one of claims 1 to 16 for a liquid crystal dimming device.

23. Use of the liquid crystal composite according to any one of claims 1 to 16 for a liquid crystal dimming device where the transparent substrate is a plastic film.

24. Use of the liquid crystal composite according to any one of claims 1 to 16, for a dimming window.

25. Use of the liquid crystal composite according to any one of claims 1 to 16, for a smart window.

**Patentansprüche**

1. Flüssigkristallverbund für eine Umkehrmodus-Vorrichtung, die transparent ist, wenn keine Spannung angelegt wird, und undurchsichtig ist, wenn Spannung angelegt wird, wobei der Flüssigkristallverbund ein Polymer und eine Flüssigkristallzusammensetzung enthält, die mindestens eine Verbindung enthält, die aus Verbindungen, dargestellt durch Formel (1), als eine erste Komponente ausgewählt ist:

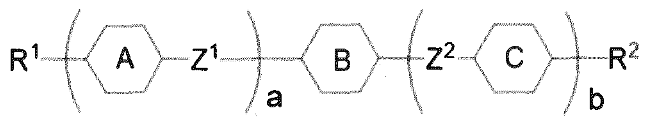

(1)

In Formel (1) $R^1$ und $R^2$ unabhängig voneinander Alkyl mit 1 bis 12 Kohlenstoffatomen, Alkoxy mit 1 bis 12 Kohlenstoffatomen, Alkenyl mit 2 bis 12 Kohlenstoffatomen, Alkenyloxy mit 2 bis 12 Kohlenstoffatomen oder Alkyl mit 1 bis 12 Kohlenstoffatomen sind, in dem mindestens ein Wasserstoff durch Fluor oder Chlor ersetzt wurde; Ring A und Ring C unabhängig voneinander 1,4-Cyclohexylen, 1,4-Cyclohexenylen, Tetrahydropyran-2,5-diyl, 1,4-Phenylen, 1,4-Phenylen sind, in dem mindestens ein Wasserstoff durch Fluor oder Chlor ersetzt wurde, Naphthalin-2,6-diyl, Naphthalin-2,6-diyl, in dem mindestens ein Wasserstoff durch Fluor oder Chlor ersetzt wurde, Chroman-2,6-diyl oder Chroman-2,6-diyl, in dem mindestens ein Wasserstoff durch Fluor oder Chlor ersetzt wurde; Ring B 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorchroman-2,6-diyl ist; $Z^1$ und $Z^2$ unabhängig voneinander eine Einfachbindung, Ethylen, Carbonyloxy oder Methylenoxy sind; a 1, 2 oder 3 ist, b 0 oder 1 ist; und die Summe von a und b 3 oder weniger ist.

2. Flüssigkristallverbund gemäß Anspruch 1, wobei die Flüssigkristallzusammensetzung mindestens eine Verbindung, ausgewählt aus der Gruppe von Verbindungen, die durch Formel (1-1) bis Formel (1-22) dargestellt sind, als die erste Komponente enthält:

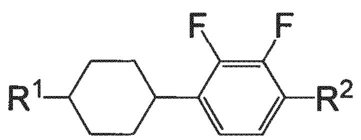

(1-1)

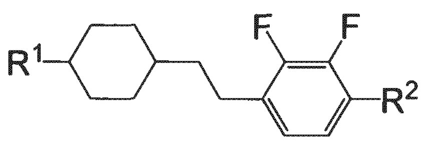

(1-2)

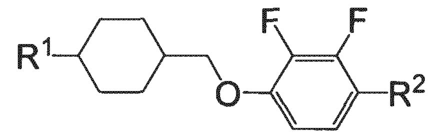
(1-3)

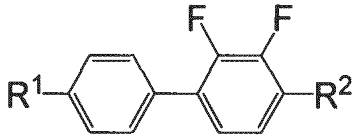
(1-4)

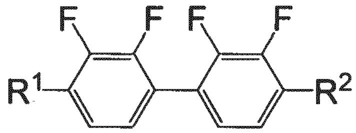
(1-5)

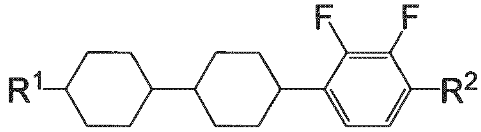
(1-6)

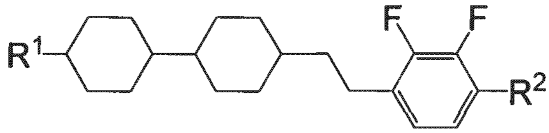
(1-7)

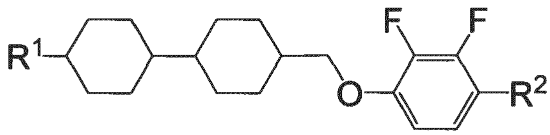
(1-8)

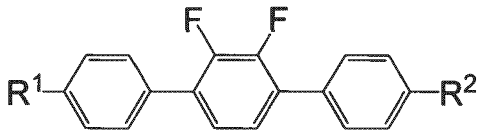
(1-9)

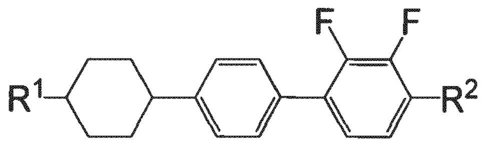
(1-10)

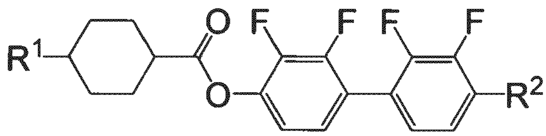
(1-11)

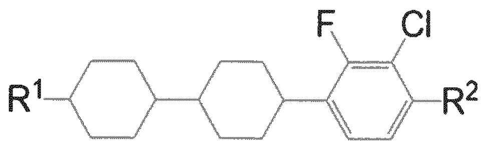
(1-12)

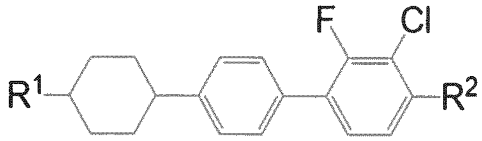
(1-13)

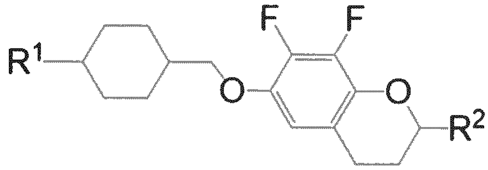
(1-14)

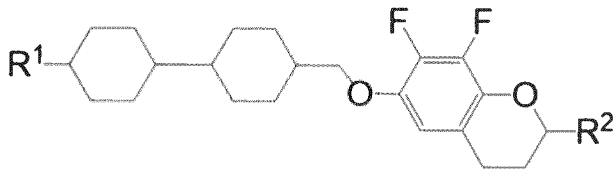
(1-15)

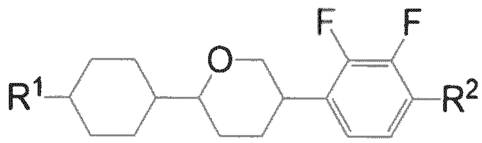
(1-16)

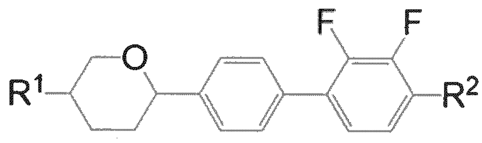
(1-17)

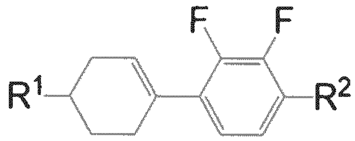
(1-18)

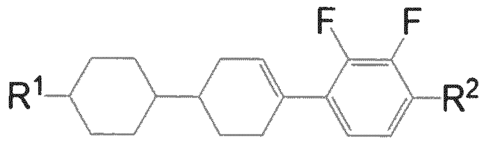
(1-19)

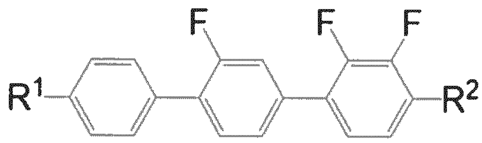
(1-20)

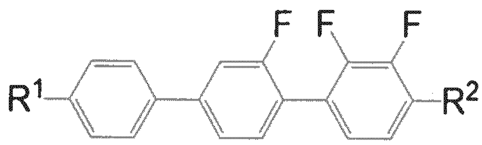
(1-21)

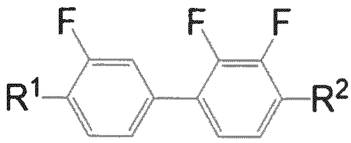

(1-22)

in Formel (1-1) bis Formel (1-22) $R^1$ und $R^2$ unabhängig Alkyl mit 1 bis 12 Kohlenstoffatomen, Alkoxy mit 1 bis 12 Kohlenstoffatomen, Alkenyl mit 2 bis 12 Kohlenstoffatomen, Alkenyloxy mit 2 bis 12 Kohlenstoffatomen oder Alkyl mit 1 bis 12 Kohlenstoffatomen sind, in dem mindestens ein Wasserstoff durch Fluor oder Chlor ersetzt wurde.

**3.** Flüssigkristallverbund gemäß Anspruch 1 oder 2, wobei ein Verhältnis der ersten Komponente in dem Bereich von 20 Gew.-% bis 90 Gew.-% liegt, basierend auf einem Gewicht der Flüssigkristallzusammensetzung.

**4.** Flüssigkristallverbund gemäß einem der Ansprüche 1 bis 3, wobei die Flüssigkristallzusammensetzung ferner mindestens eine Verbindung, ausgewählt aus Verbindungen, die durch Formel (2) dargestellt werden, als eine zweite Komponente enthält:

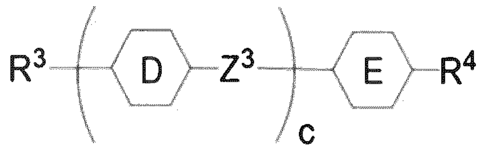

(2)

In Formel (2) $R^3$ und $R^4$ unabhängig voneinander Alkyl mit 1 bis 12 Kohlenstoffatomen, Alkoxy mit 1 bis 12 Kohlenstoffatomen, Alkenyl mit 2 bis 12 Kohlenstoffatomen, Alkyl mit 1 bis 12 Kohlenstoffatomen, in dem mindestens ein Wasserstoff durch Fluor oder Chlor ersetzt wurde, oder Alkenyl mit 2 bis 12 Kohlenstoffatomen sind, in dem mindestens ein Wasserstoff durch Fluor oder Chlor ersetzt wurde; Ring D und Ring E unabhängig voneinander 1,4-Cyclohexylen, 1,4-Phenylen, 2-Fluor-1,4-phenylen oder 2,5-Difluor-1,4-phenylen sind; $Z^3$ eine Einfachbindung, Ethylen oder Carbonyloxy ist; und c 1, 2 oder 3 ist.

**5.** Flüssigkristallverbund gemäß einem der Ansprüche 1 bis 4, wobei die Flüssigkristallzusammensetzung ferner mindestens eine Verbindung, ausgewählt aus der Gruppe von Verbindungen, die durch die Formel (2-1) bis Formel (2-13) dargestellt werden, als die zweite Komponente enthält:

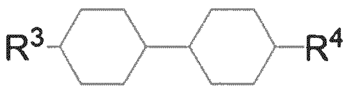

(2-1)

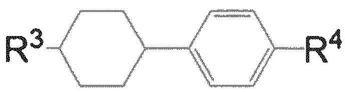

(2-2)

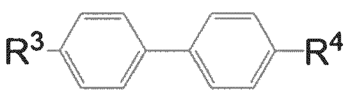

(2-3)

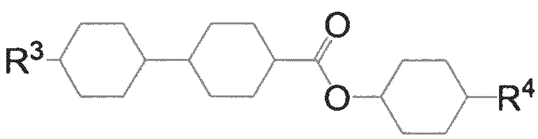

(2-4)

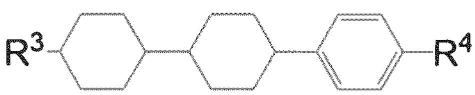

(2-5)

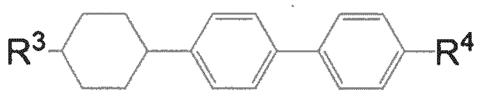

(2-6)

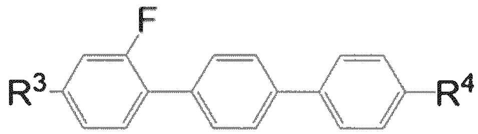

(2-7)

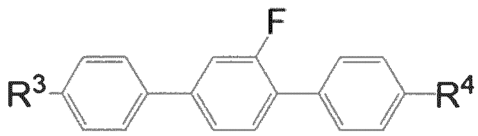

(2-8)

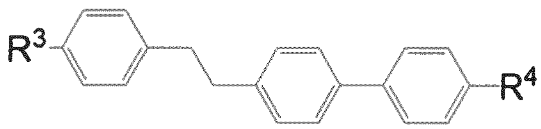

(2-9)

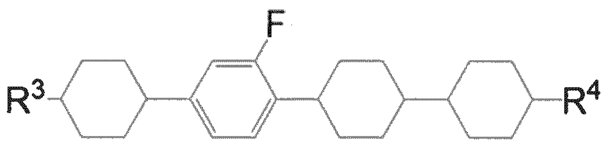

(2-10)

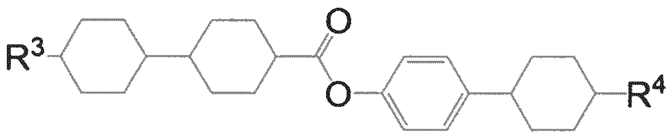

(2-11)

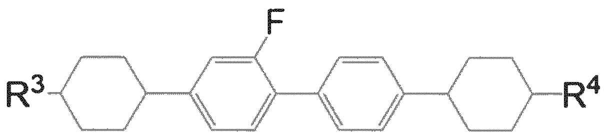

(2-12)

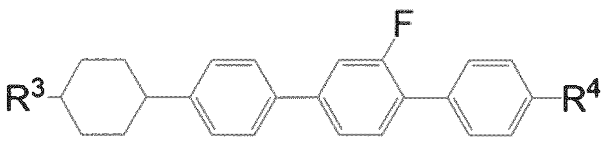

(2-13)

In Formel (2-1) bis Formel (2-13) $R^3$ und $R^4$ unabhängig voneinander Alkyl mit 1 bis 12 Kohlenstoffatomen, Alkoxy mit 1 bis 12 Kohlenstoffatomen, Alkenyl mit 2 bis 12 Kohlenstoffatomen, Alkyl mit 1 bis 12 Kohlenstoffatomen, in dem mindestens ein Wasserstoffatom durch Fluor oder Chlor ersetzt ist, oder Alkenyl mit 2 bis 12 Kohlenstoffatomen sind, in dem mindestens ein Wasserstoffatom durch Fluor oder Chlor ersetzt ist.

**6.** Flüssigkristallverbund gemäß Anspruch 4 oder 5, wobei ein Verhältnis der zweiten Komponente in dem Bereich von 10 Gew.-% bis 70 Gew.-% liegt, basierend auf einem Gewicht der Flüssigkristallzusammensetzung.

**7.** Flüssigkristallverbund gemäß einem der Ansprüche 1 bis 6, wobei das Polymer ein Polymer ist, das von einer polymerisierbaren Verbindung abgeleitet ist, die eine Verbindung, dargestellt durch die Formel (3), enthält:

$P^1$-$Z^4$-$P^2$ (3)

in Formel (3) $Z^4$ Alkylen mit 1 bis 20 Kohlenstoffatomen ist, und in dem Alkylen mindestens ein Wasserstoff durch Alkyl

mit l bis 5 Kohlenstoffatomen, Fluor, Chlor oder $P^3$ ersetzt sein kann, mindestens ein $-CH_2-$ durch -O-, -CO-, -COO-, -OCO-, -NH- oder - $N(R^5)$- ersetzt sein kann, mindestens ein $-CH_2-CH_2-$ durch -CH=CH- oder -C=C- ersetzt sein kann, und mindestens ein $-CH_2-$ durch eine zweiwertige Gruppe ersetzt sein kann, die aus einer carbocyclischen gesättigten aliphatischen Verbindung, einer heterocyclischen gesättigten aliphatischen Verbindung, einer carbocyclischen ungesättigten aliphatischen Verbindung, einer heterocyclischen ungesättigten aliphatischen Verbindung, einer carbocyclischen aromatischen Verbindung oder einer heterocyclischen aromatischen Verbindung durch Entfernen von zwei Wasserstoffen gebildet ist, und in diesen zweiwertigen Gruppen die Anzahl der Kohlenstoffe 5 bis 35 beträgt und mindestens ein Wasserstoff durch $R^5$ oder $P^3$ ersetzt sein kann, wobei $R^5$ Alkyl mit 1 bis 12 Kohlenstoffen ist und in dem Alkyl mindestens ein $-CH_2-$ durch -O-, -CO-, -COO- oder -OCO- ersetzt sein kann; und $P^1$, $P^2$ und $P^3$ unabhängig voneinander eine polymerisierbare Gruppe sind.

**8.** Flüssigkristallverbund gemäß einem der Ansprüche 1 bis 6, wobei das Polymer ein Polymer ist, das von einer Verbindung, dargestellt durch Formel (3), abgeleitet ist:

$$P^1\text{-}Z^4\text{-}P^2 \qquad (3)$$

in Formel (3) $Z^4$ Alkylen mit 1 bis 20 Kohlenstoffatomen ist, und in dem Alkylen mindestens ein Wasserstoff durch Alkyl mit 1 bis 5 Kohlenstoffatomen, Fluor, Chlor oder $P^3$ ersetzt sein kann, mindestens ein $-CH_2-$ durch -O-, -CO-, -COO-, -OCO-, -NH-, $-N(R^5)$, -CH=CH- oder -C≡C- ersetzt werden kann, und mindestens ein $-CH_2-$ durch eine zweiwertige Gruppe ersetzt werden, die aus einer carbocyclischen gesättigten aliphatischen Verbindung, einer heterocyclischen gesättigten aliphatischen Verbindung, einer carbocyclischen ungesättigten aliphatischen Verbindung, einer heterocyclischen ungesättigten aliphatischen Verbindung, einer carbocyclischen aromatischen Verbindung oder einer heterocyclischen aromatischen Verbindung durch Entfernen von zwei Wasserstoffen gebildet wird, und in diesen zweiwertigen Gruppen die Anzahl der Kohlenstoffe 5 bis 35 beträgt und mindestens ein Wasserstoff durch $R^5$ oder $P^3$ ersetzt werden kann, wobei $R^5$ Alkyl mit 1 bis 12 Kohlenstoffen ist und in dem Alkyl mindestens ein $-CH_2-$ durch -O-, -CO-, -COO- oder -OCO- ersetzt sein kann; und P’, $P^2$ und $P^3$ unabhängig voneinander eine polymerisierbare Gruppe sind.

**9.** Flüssigkristallverbund gemäß Anspruch 7 oder 8, wobei in Formel (3) $P^1$, $P^2$ und $P^3$ unabhängig voneinander eine Gruppe sind, die aus der Gruppe der polymerisierbaren Gruppen, die durch Formel (P-1) bis Formel (P-6) dargestellt sind, ausgewählt ist:

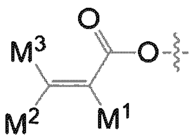
(P-1)
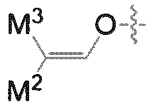
(P-2)
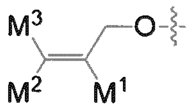
(P-3)
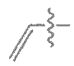
(P-4)
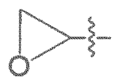
(P-5)
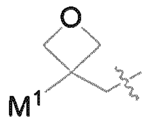
(P-6)

in Formel (P-1) bis Formel (P-6) M’, $M^2$ und $M^3$ unabhängig voneinander Wasserstoff, Fluor, Alkyl mit 1 bis 5 Kohlenstoffatomen oder Alkyl mit 1 bis 5 Kohlenstoffatomen sind, in dem mindestens ein Wasserstoff durch Fluor oder Chlor ersetzt wurde.

**10.** Flüssigkristallverbund gemäß einem der Ansprüche 7 bis 9, wobei in Formel (3) mindestens eines von $P^1$, $P^2$ und $P^3$ Acryloyloxy oder Methacryloyloxy ist.

**11.** Flüssigkristallverbund gemäß einem der Ansprüche 1 bis 6, wobei das Polymer ein Polymer ist, das von einer polymerisierbaren Verbindung abgeleitet ist, die eine Verbindung, dargestellt durch Formel (4), enthält:

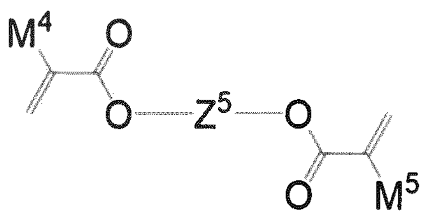
(4)

in Formel (4) $M^4$ und $M^5$ unabhängig voneinander Wasserstoff oder Methyl sind; und $Z^5$ Alkylen mit 20 bis 80 Kohlenstoffatomen ist, und in dem Alkylen mindestens ein Wasserstoff durch Alkyl mit 1 bis 20 Kohlenstoffatomen, Fluor oder Chlor ersetzt sein kann, mindestens ein $-CH_2-$ durch -O-, -CO-, -COO-, -OCO-, -NH- oder $-N(R^5)-$ ersetzt sein kann, und mindestens ein $-CH_2-CH_2-$ durch -CH=CH- oder -C=C- ersetzt sein kann, wobei $R^5$ Alkyl mit 1 bis 12 Kohlenstoffatomen ist und in dem Alkyl mindestens ein $-CH_2-$ durch - O-, -CO-, -COO- oder -OCO- ersetzt sein kann.

**12.** Flüssigkristallverbund gemäß einem der Ansprüche 1 bis 6, wobei das Polymer ein Polymer ist, das von einer polymerisierbaren Verbindung abgeleitet ist, die eine Verbindung, dargestellt durch Formel (5), enthält:

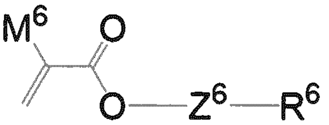

(5)

In Formel (5) $M^6$ Wasserstoff oder Methyl ist; $Z^6$ eine Einfachbindung oder Alkylen mit 1 bis 5 Kohlenstoffatomen ist, und in dem Alkylen mindestens ein Wasserstoff durch Fluor oder Chlor ersetzt sein kann und mindestens ein $-CH_2-$ durch -O-, -CO-, -COO- oder -OCOersetzt sein kann; und $R^6$ ein Alkyl mit 1 bis 40 Kohlenstoffatomen ist, und in dem Alkyl mindestens ein Wasserstoff durch Fluor oder Chlor ersetzt sein kann, mindestens ein $-CH_2-$durch -O-, -CO-, -COO- oder -OCO- ersetzt sein kann und mindestens ein $-CH_2-$ durch eine zweiwertige Gruppe ersetzt sein kann, die aus einer carbocyclischen gesättigten aliphatischen Verbindung, einer heterocyclischen gesättigten aliphatischen Verbindung, einer carbocyclischen ungesättigten aliphatischen Verbindung, einer heterocyclischen ungesättigten aliphatischen Verbindung, einer carbocyclischen aromatischen Verbindung oder einer heterocyclischen aromatischen Verbindung durch Entfernen von zwei Wasserstoffen gebildet wird, und in diesen zweiwertigen Gruppen die Anzahl der Kohlenstoffe 5 bis 35 beträgt und mindestens ein Wasserstoff durch Alkyl mit 1 bis 12 Kohlenstoffen ersetzt sein kann und in dem Alkyl mindestens ein $-CH_2-$ durch -O-, -CO-, - COO- oder -OCO- ersetzt sein kann.

**13.** Flüssigkristallverbund gemäß Anspruch 12, wobei in Formel (5) $R^6$ ein Alkyl mit 1 bis 40 Kohlenstoffatomen ist und in dem Alkyl mindestens ein Wasserstoff durch Fluor oder Chlor ersetzt sein kann und mindestens ein $-CH_2-$ durch -O-, -CO-, -COO- oder -OCOersetzt sein kann.

**14.** Flüssigkristallverbund gemäß einem der Ansprüche 1 bis 6, wobei das Polymer ein Polymer ist, das von einer polymerisierbaren Verbindung abgeleitet ist, die eine Verbindung enthält, die aus der Gruppe von Verbindungen ausgewählt ist, die durch Formel (6), Formel (7) und Formel (8) dargestellt werden:

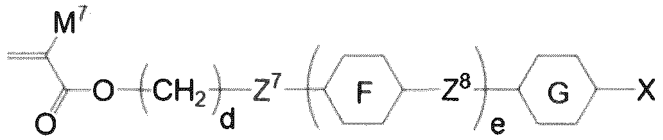

(6)

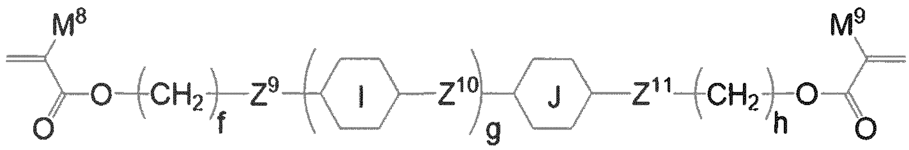

(7)

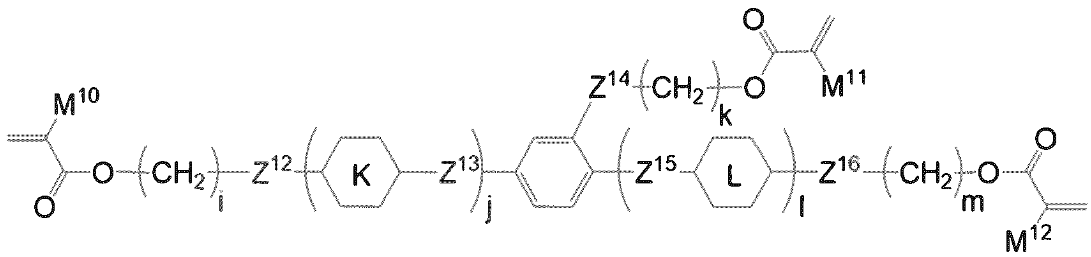

(8)

In Formel (6), Formel (7) und Formel (8) Ring F, Ring G, Ring I, Ring J, Ring K und Ring L unabhängig voneinander 1,4-Cyclohexylen, 1,4-Phenylen, 1,4-Cyclohexenylen, Pyridin-2,5-diyl, 1,3-Dioxan-2,5-diyl, Naphthalin-2 ,6-diyl oder

Fluoren-2,7-diyl sind, wobei mindestens ein Wasserstoff durch Fluor, Chlor, Cyan, Hydroxy, Formyl, Trifluoracetyl, Difluormethyl, Trifluormethyl, Alkyl mit 1 bis 5 Kohlenstoffatomen, Alkoxy mit 1 bis 5 Kohlenstoffatomen, Alkoxycarbonyl mit 1 bis 5 Kohlenstoffatomen oder Alkanoyl mit 1 bis 5 Kohlenstoffatomen sind; $Z^7$, $Z^9$, $Z^{11}$, $Z^{12}$ und $Z^{16}$ unabhängig voneinander eine Einfachbindung, -O-, -COO-, -OCO- oder -OCOO- sind; $Z^8$, $Z^{10}$, $Z^{13}$ und $Z^{15}$ unabhängig voneinander eine Einfachbindung, $-OCH_2-$, $-CH_2O-$, -COO-, -OCO-, -COS-, - SCO-, - OCOO-, -CONH-, -NHCO-, $-CF_2O-$, $-OCF_2-$, $-CH_2CH_2-$, $-CF_2CF_2-$, -CH=CHCOO-, - OCOCH=CH-, $-CH_2CH_2COO-$, $-OCOCH_2CH_2-$, -CH=CH-, -N=CH-, -CH=N-, - $N=C(CH_3)-$, $-C(CH_3)$ =N-, -N=N- oder -C=C-; $Z^{14}$ eine Einfachbindung, -O- oder -COOist; X Wasserstoff, Fluor, Chlor, Trifluormethyl, Trifluormethoxy, Cyan, Alkyl mit 1 bis 20 Kohlenstoffatomen, Alkenyl mit 2 bis 20 Kohlenstoffatomen, Alkoxy mit 1 bis 20 Kohlenstoffatomen oder Alkoxycarbonyl mit 1 bis 20 Kohlenstoffatomen ist; e und g eine ganze Zahl von 1 bis 4 sind; j und 1 unabhängig eine ganze Zahl von 0 bis 3 sind; die Summe von j und 1 1 bis 4 ist; d, f, h, i, k und m unabhängig eine ganze Zahl von 0 bis 20 sind; und $M^7$ bis $M^{12}$ unabhängig Wasserstoff oder Methyl sind.

**15.** Flüssigkristallverbund gemäß einem der Ansprüche 1 bis 14, wobei ein Verhältnis der Flüssigkristallzusammensetzung im Bereich von 50 Gew.-% bis 95 Gew.-% liegt und ein Verhältnis des Polymers im Bereich von 5 Gew.-% bis 50 Gew.-% liegt, basierend auf einem Gewicht des Flüssigkristallverbunds.

**16.** Flüssigkristallverbund gemäß einem der Ansprüche 1 bis 15, wobei der Flüssigkristallverbund aus einem Vorläufer einer polymerisierbaren Zusammensetzung erhalten wird, die die Flüssigkristallzusammensetzung und die polymerisierbare Verbindung enthält, und die polymerisierbare Zusammensetzung einen Photopolymerisationsinitiator als ein Additiv enthält.

**17.** Flüssigkristall-Dimmvorrichtung, wobei eine Dimmschicht der Flüssigkristallverbund gemäß einem der Ansprüche 1 bis 16 ist und die Dimmschicht zwischen einem Paar transparenter Substrate sandwichartig angeordnet ist und die transparenten Substrate eine transparente Elektrode aufweisen.

**18.** Flüssigkristall-Dimmvorrichtung gemäß Anspruch 17, wobei das transparente Substrat eine Glasplatte oder eine Acrylplatte ist.

**19.** Flüssigkristall-Dimmvorrichtung nach Anspruch 17, wobei das transparente Substrat eine Kunststofffolie ist.

**20.** Dimmfenster, das die Flüssigkristall-Dimmvorrichtung gemäß einem der Ansprüche 17 bis 19 verwendet.

**21.** Intelligentes Fenster, das die Flüssigkristall-Dimmvorrichtung gemäß einem der Ansprüche 17 bis 19 verwendet.

**22.** Verwendung des Flüssigkristallverbunds gemäß einem der Ansprüche 1 bis 16 für eine Flüssigkristall-Dimmvorrichtung.

**23.** Verwendung des Flüssigkristallverbunds gemäß einem der Ansprüche 1 bis 16 für eine Flüssigkristall-Dimmvorrichtung, bei der das transparente Substrat eine Kunststofffolie ist.

**24.** Verwendung des Flüssigkristallverbunds gemäß einem der Ansprüche 1 bis 16 für ein Dimmfenster.

**25.** Verwendung des Flüssigkristallverbunds gemäß einem der Ansprüche 1 bis 16 für ein intelligentes Fenster.

## Revendications

**1.** Composite de cristaux liquides pour dispositif en mode inverse qui est transparent quand aucune tension n'est appliquée et qui est opaque quand une tension est appliquée, le composite de cristaux liquides comprend un polymère et une composition de cristaux liquides qui comprend au moins un composé choisi parmi les composés représentés par la formule (1) comme premier composant :

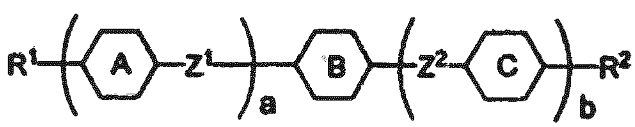

(1)

dans la formule (1), $R^1$ et $R^2$ sont indépendamment un groupe alkyle ayant 1 à 12 atomes de carbone, alcoxy ayant 1 à 12 atomes de carbone, alcényle ayant 2 à 12 atomes de carbone, alcényloxy ayant 2 à 12 atomes de carbone ou alkyle ayant 1 à 12 atomes de carbone dans lequel au moins un atome d'hydrogène a été remplacé par un atome de fluor ou de chlore ; le cycle A et le cycle C sont indépendamment le 1,4-cyclohexylène, le 1,4-cyclohexénylène, le tétrahydropyrane-2,5-diyle, le 1,4-phénylène, le naphtalène-2,6-diyle, le naphtalène-2,6-diyle dans lequel au moins un atome d'hydrogène a été remplacé par un atome de fluor ou de chlore, le naphtalène-2,6-diyle, le chromane-2,6-diyle ou le chromane-2,6-diyle dans lequel au moins un atome d'hydrogène a été remplacé par un atome de fluor ou de chlore ; le cycle B est le 2,3-difluoro-1,4-phénylène, le 2-chloro-3-fluoro-1,4-phénylène, le 2,3-difluoro-5-méthyl-1,4-phénylène, le 3,4,5-trifluoronaphtalène-2,6-diyle, le 7,8-difluorochromane-2,6-diyle ; $Z^1$ et $Z^2$ sont indépendamment une simple liaison, un groupe éthylène, carbonyloxy ou méthylèneoxy, a vaut 1, 2 ou 3, b vaut 0 ou 1 ; et la somme de a et de b est de 3 ou moins.

**2.** Composite de cristaux liquides selon la revendication 1, dans lequel la composition de cristaux liquides comprend au moins un composé choisi dans le groupe de composés représentés par la formule (1-1) à la formule (1-22) comme premier composant :

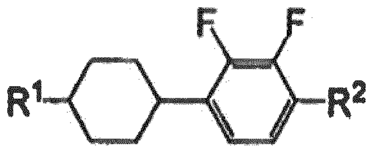

(1-1)

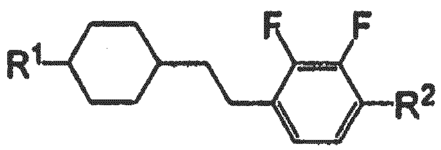

(1-2)

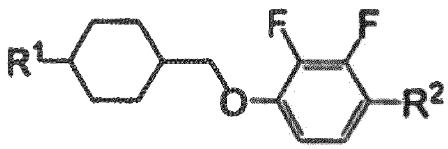

(1-3)

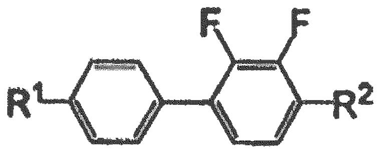

(1-4)

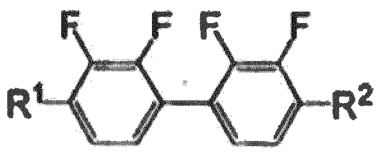

(1-5)

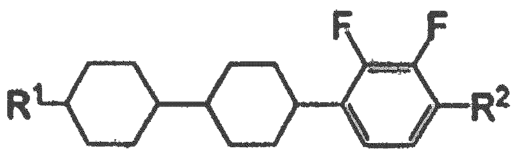

(1-6)

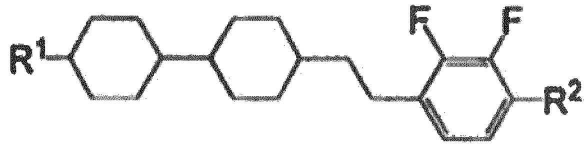
(1-7)

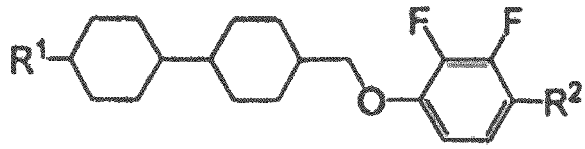
(1-8)

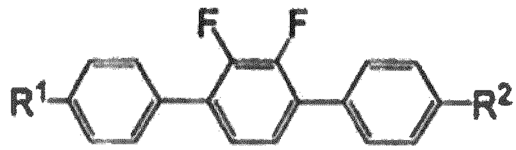
(1-9)

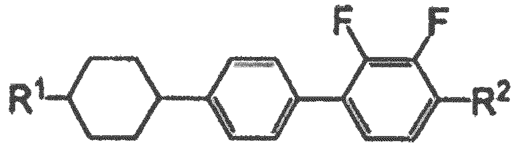
(1-10)

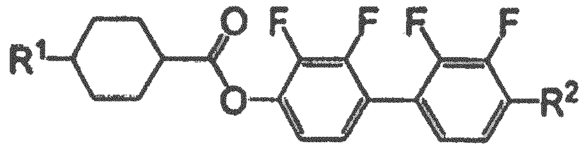
(1-11)

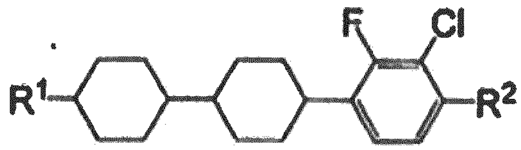
(1-12)

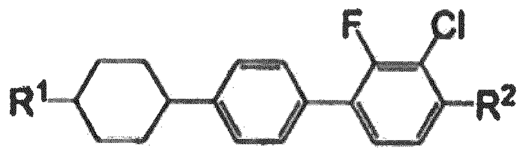
(1-13)

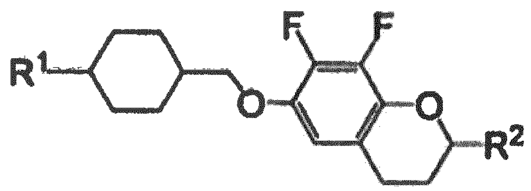
(1-14)

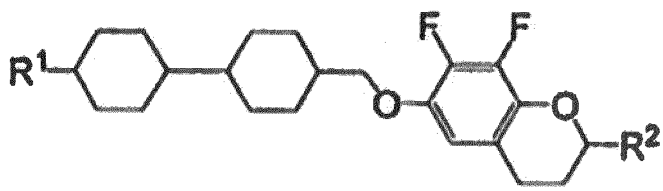
(1-15)

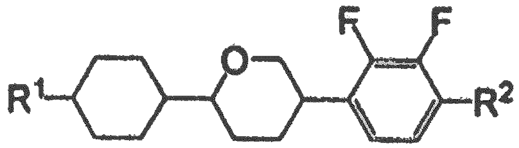

(1-16)

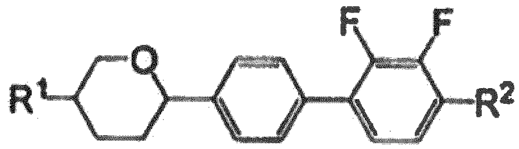

(1-17)

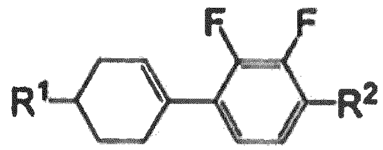

(1-18)

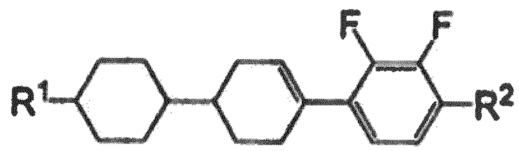

(1-19)

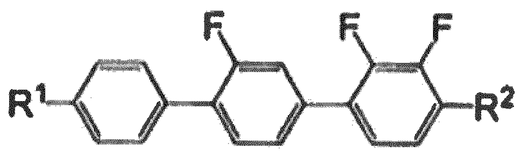

(1-20)

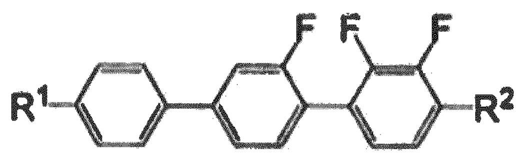

(1-21)

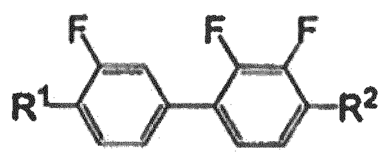

(1-22)

dans la formule (1-1) à la formule (1-22), $R^1$ et $R^2$ sont indépendamment un groupe alkyle ayant 1 à 12 atomes de carbone, alcoxy ayant 1 à 12 atomes de carbone, alcényle ayant 2 à 12 atomes d carbone, alcényloxy ayant 2 à 12 atomes de carbone ou alkyle ayant 1 à 12 atomes de carbone dans lequel au moins un atome d'hydrogène a été remplacé par un atome de fluor ou de chlore.

**3.** Composite de cristaux liquides selon la revendication 1 ou 2, dans lequel un rapport du premier composant se situe dans la plage de 20 % en poids à 90 % en poids sur la base d'un poids de la composition de cristaux liquides.

**4.** Composite de cristaux liquides selon l'une quelconque des revendications 1 à 3, dans lequel la composition de cristaux liquide comprend en outre au moins un composé choisi parmi les composés représentés par la formule (2) comme second composant :

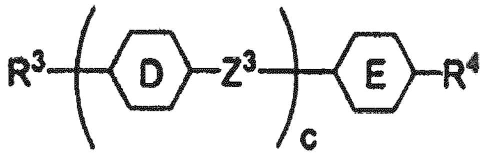

(2)

dans la formule (2), $R^3$ et $R^4$ sont indépendamment un groupe alkyle ayant 1 à 12 atomes de carbone, alcoxy ayant 1 à 12 atomes de carbone, alcényle ayant 2 à 12 atomes de carbone, alkyle ayant 1 à 12 atomes de carbone dans lequel au moins un atome d'hydrogène a été remplacé par un atome de fluor ou de chlore ou alcényle à 1 à 12 atomes de carbone dans lequel au moins un atome d'hydrogène a été remplacé par un atome de fluor ou de chlore ; le cycle D et le cycle E sont indépendamment le 1,4-cyclohexylène, le 1,4-phénylène, le 2-fluoro-1,4-phénylène, le 2,5-difluoro-1,4-phénylène ; $Z^3$ est une simple liaison, un groupe éthylène ou carbonyloxy ; et c vaut 1, 2 ou 3.

**5.** Composite de cristaux liquides selon l'une quelconque des revendications 1 à 4, dans lequel la composition de cristaux liquides comprend en outre au moins un composé choisi dans le groupe de composés représentés par la formule (2-1) à la formule (2-13) comme second composant :

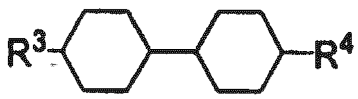

(2-1)

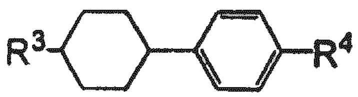

(2-2)

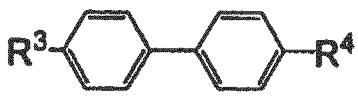

(2-3)

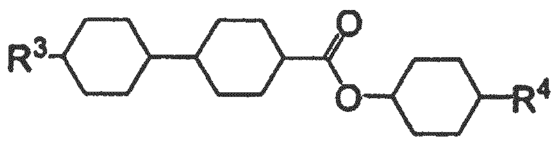

(2-4)

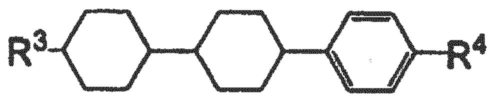

(2-5)

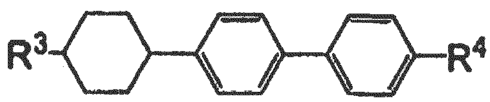

(2-6)

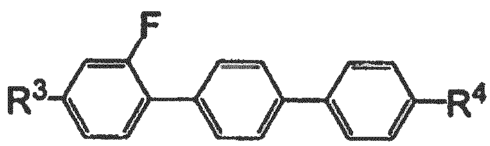

(2-7)

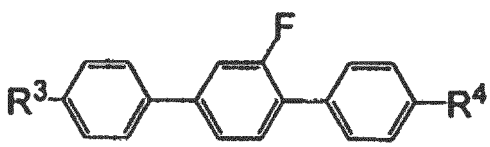

(2-8)

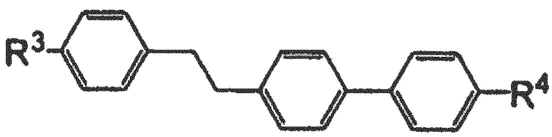

(2-9)

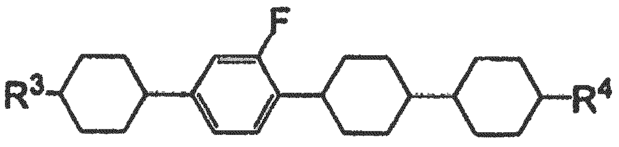

(2-10)

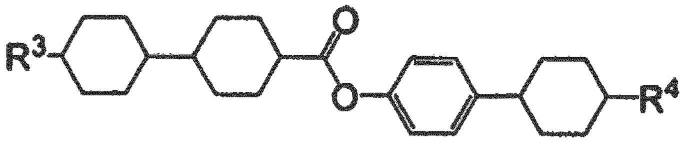

(2-11)

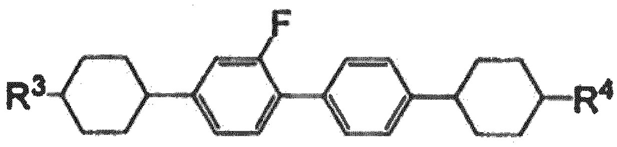

(2-12)

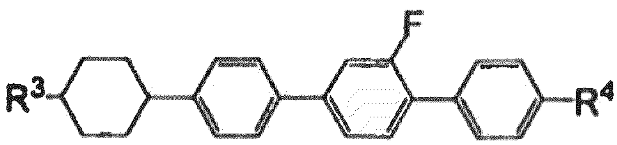

(2-13)

dans la formule (2-1) à la formule (2-13), $R^3$ et $R^4$ sont indépendamment un groupe alkyle ayant 1 à 12 atomes de carbone, alcoxy ayant 1 à 12 atomes de carbone, alcényle ayant 2 à 12 atomes de carbone, alkyle ayant 1 à 12 atomes de carbone dans lequel au moins un atome d'hydrogène a été remplacé par un atome de fluor ou un atome de chlore ou alcényle ayant 2 à 12 atomes de carbone dans lequel au moins un atome d'hydrogène a été remplacé par un atome de fluor ou de chlore.

**6.** Composite de cristaux liquides selon la revendication 4 ou 5, dans lequel un rapport du second composant se situe dans la plage de 10 % en poids à 70 % en poids sur la base d'un poids de la composition de cristaux liquides.

**7.** Composite de cristaux liquides selon l'une quelconque des revendications 1 à 6, dans lequel le polymère est un polymère dérivé d'un composé polymérisable comprenant un composé représenté par la formule (3) :

$P^1-Z^4-P^2$ (3)

dans la formule (3), $Z^4$ est un groupe alkylène ayant 1 à 20 atomes de carbone et dans le groupe alkylène au moins un atome d'hydrogène peut être remplacé par un groupe alkyle ayant 1 à 5 atomes de carbone, un atome de fluor, de chlore ou $P^3$, au moins un $-CH_2-$ peut être remplacé par -O-, -CO-, -COO-, -OCO-, -NH- ou $-N(R^5)-$, au moins un $-CH_2CH_2-$ peut être remplacé par -CH=CH- ou -C≡'C- et au moins un $-CH_2-$ peut être remplacé par un groupe divalent formé d'un composé aliphatique saturé carbocyclique, d'un composé aliphatique saturé hétérocyclique, d'un composé aliphatique insaturé carboyclique, d'un composé aliphatique insaturé hétérocyclique, d'un composé aromatique carbocyclique ou d'un composé aromatique hétérocyclique en enlevant deux atomes d'hydrogène et dans ces groupes divalents le nombre de carbones est de 5 à 35 et au moins un atome d'hydrogène peut être remplacé par $R^5$ ou $P^3$, où $R^5$ est un groupe alkyle ayant 1 à 12 atomes de carbone et dans le groupe alkyle au moins un $-CH_2-$ peut être remplacé par -O-, -CO-, -COO- ou -OCO- ; et $P^1$, $P^2$ et $P^3$ sont indépendamment un groupe polymérisable.

**8.** Composite de cristaux liquides selon l'une quelconque des revendications 1 à 6, dans lequel le polymère est un polymère dérivé d'un composé représenté par la formule (3) :

$P^1$-$Z^4$-$P^2$ (3)

dans la formule (3), $Z^4$ est un groupe alkylène ayant 1 à 20 atomes de carbone et dans le groupe alkylène au moins un atome d'hydrogène peut être remplacé par un groupe alkyle ayant 1 à 5 atomes de carbone, un atome de fluor, de chlore ou $P^3$, au moins un -$CH_2$- peut être remplacé par -O-, -CO-, -COO-, -OCO-, -NH-, -N($R^5$)-, - CH=CH- ou -C≡'C- et au moins un -$CH^2$- peut être remplacé par un groupe divalent formé d'un composé aliphatique saturé carbocyclique, d'un composé aliphatique saturé hétérocyclique, d'un composé aliphatique insaturé carbocyclique, d'un composé aliphatique insaturé hétérocyclique, d'un composé aromatique carbocyclique ou d'un composé aromatique hétérocyclique en enlevant deux atomes d'hydrogène et dans ces groupes divalents le nombre d'atomes de carbone est de 5 à 35 et au moins un atome d'hydrogène peut être remplacé par $R^5$ ou $P^3$, où $R^5$ est un groupe alkyle ayant 1 à 12 carbones et dans le groupe alkyle au moins un -$CH^2$- peut être remplacé par -O-, -CO-, - COO- ou -OCO- ; et $P^1$, $P^2$ et $P^3$ sont indépendamment un groupe polymérisable.

**9.** Composite de cristaux liquides selon la revendication 7 ou 8, dans lequel dans la formule (3), $P^1$, $P^2$ et $P^3$ sont indépendamment un groupe choisi dans le groupe de groupes polymérisables représentés par la formule (P-1) à la formule (P-6) :

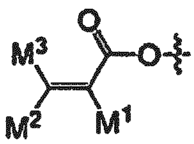
(P-1)

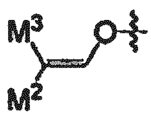
(P-2)

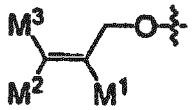
(P-3)

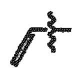
(P-4)

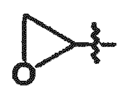
(P-5)

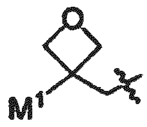
(P-6)

dans la formule (P-1) à la formule (P-6), $M^1$, $M^2$ et $M^3$ sont indépendamment un atome d'hydrogène, de fluor, un groupe alkyle ayant 1 à 5 atomes de carbone ou alkyle ayant 1 à 5 atomes de carbone dans lequel au moins un atome d'hydrogène a été remplacé par un atome de fluor ou de chlore.

**10.** Composite de cristaux liquides selon l'une quelconque des revendications 7 à 9, dans lequel dans la formule (3), au moins un de $P^1$, $P^2$ et $P^3$ est un groupe acryloyloxy ou méthacryloyloxy.

**11.** Composite de cristaux liquides selon l'une quelconque des revendications 1 à 6, dans lequel le polymère est un polymère dérivé d'un composé polymérisable comprenant un composé représenté par la formule (4) :

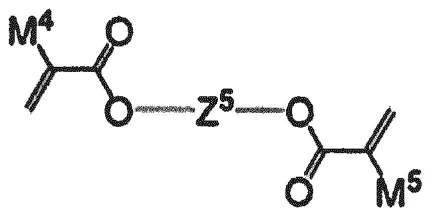
(4)

dans la formule (4) , $M^4$ et $M^5$ sont indépendamment un atome d'hydrogène ou un groupe méthyle ; et $Z^5$ est un groupe alkylène ayant 20 à 80 atomes de carbone et dans le groupe alkylène au moins un atome d'hydrogène peut être remplacé par un groupe alkyle ayant 1 à 20 atomes de carbone, atome de fluor ou de chlore, au moins un -$CH_2$- peut être remplacé par -O-, -CO-, -COO-, -OCO-, -NH- ou -N($R^5$) - et au moins un $CH_2$-$CH_2$- peut être remplacé par -CH=CH- ou -C≡'C-, où $R^5$ est u groupe alkyle ayant 1 à 12 atomes de carbone et dans le groupe alkyle au moins un -$CH_2$- peut être remplacé par -O-, -CO-, -COO- ou -OCO-.

**12.** Composite de cristaux liquides selon l'une quelconque des revendications 1 à 6, dans lequel le polymère est un polymère dérivé d'un composé polymérisable comprenant un composé représenté par la formule (5) :

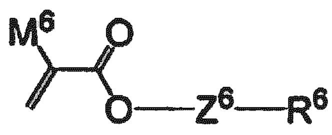
(5)

dans la formule (5), $M^6$ est un atome d'hydrogène ou un groupe méthyle ; $Z^6$ est une simple liaison ou un groupe alkylène ayant 1 à 5 atomes de carbone et dans le groupe alkylène au moins un atome d'hydrogène peut être remplacé par un atome de fluor ou de chlore et au moins un $-CH_2-$ peut être remplacé par -O-, -CO-, -COO-ou -OCO- ; et $R^6$ est un groupe alkyle ayant 1 à 40 atomes de carbone et dans le groupe alkyle au moins un atome d'hydrogène être remplacé par un atome de fluor ou de chlore, au moins un $-CH_2-$ peut être remplacé par -O-, -CO-, -COO- ou -OCO- et au moins un $-CH_2-$ peut être remplacé par un groupe divalent formé d'un composé aliphatique saturé carbocyclique, d'un composé aliphatique saturé hétérocyclique, d'un composé aliphatique insaturé carbocyclique, d'un composé aliphatique insaturé hétérocyclique d'un composé aromatique carbocyclique ou d'un composé aromatique hétérocyclique en enlevant deux atomes d'hydrogène et dans ces groupes divalents le nombre d'atomes de carbone est de 5 à 35, et au moins un atome d'hydrogène peut être remplacé par un groupe alkyle ayant 1 à 12 atomes de carbone et dans le groupe alkyle au moins un $-CH_2-$ peut être remplacé par -O-, - CO-, -COO- ou -OCO-.

**13.** Composite de cristaux liquide selon la revendication 12, dans lequel dans la formule (5), $R^6$ est un groupe alkyle ayant 1 à 40 atomes de carbone et dans le groupe alkyle au moins un atome d'hydrogène peut être remplacé par un atome de fluor ou de chlore et au moins un $-CH_2-$ peut être remplacé par -O-, -CO-, -COO-ou -OCO-.

**14.** Composite de cristaux liquides selon l'une quelconque des revendications 1 à 6, dans lequel le polymère est un polymère dérivé d'un composé polymérisable comprenant un composé choisi dans le groupe de composés représentés par la formule (6), la formule (7) et la formule (8) :

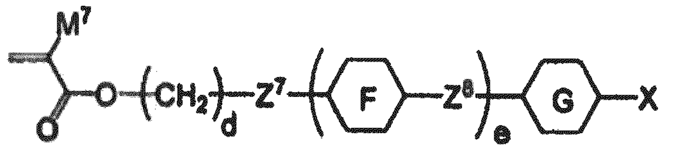

(6)

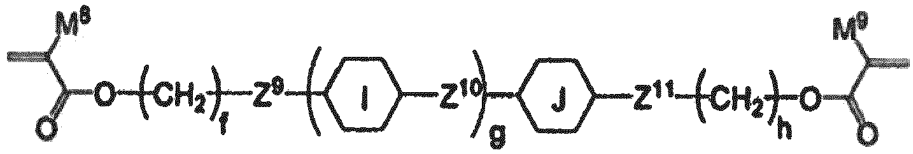

(7)

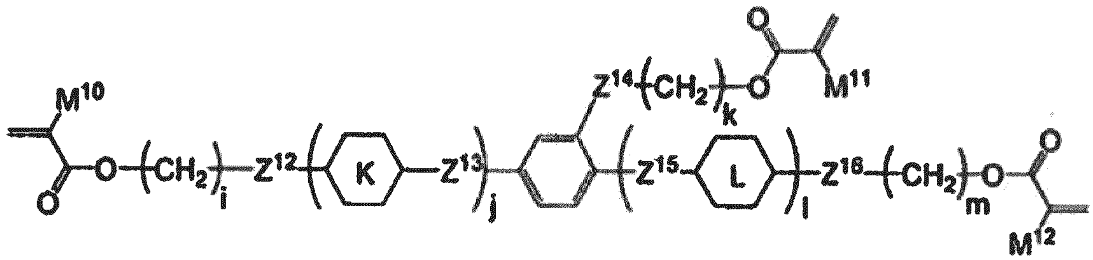

(8)

dans la formule (6), la formule (7) et la formule (8), le cycle F, le cycle G, le cycle I, le cycle J, le cycle K et le cycle L sont indépendamment le 1,4-cyclohexylène, le 1,4-phénylène, le 1,4-cyclohexénylène, la pyridine-2,5-diyle, le 1,3-dioxane-2,5-diyle, le naphtalène-2,6-diyle ou le fluorène-2,7-diyle, où au moins un atome d'hydrogène peut être remplacé par un atome de fluor, de chlore, un groupe cyano, hydroxy, formyle, trifluoroacétyle, difluorométhyle, trifluorométhyle, alkyle ayant 1 à 5 atomes de carbone, alcoxy ayant 1 à 5 atomes de carbone, alcoxycarbonyle ayant 1 à 5 atomes de carbone ou alcanoyle ayant 1 à 5 atomes de carbone ; $Z^7$, $Z^9$, $Z^{11}$, $Z^{12}$ et $Z^{16}$ sont indépendamment une simple liaison, -O-, -CO-, -COO- ou -OCO- ; $Z^8$, $Z^{10}$, $Z^{13}$ et $Z^{15}$ sont indépendamment une simple liaison, $-OCH_2-$, $-CH_2O-$, - COO-, -OCO-, -COS-, -SCO-, -OCOO-, -CONH-, -NHCO-, - $CF_2O-$, $OCF_2-$, $-CH_2CH_2-$, $-CF_2CF_2-$, -CH=CHCOO-, -OCOCH=CH-, $-CH_2CH_2COO-$, $-OCOCH_2CH_2-$, -CH=CH-, -N=CH-, -CH=N-, - $N=C(CH_3)$, $-C(CH_3)=N-$, -N=N- ou -C≡'C- ; $Z^{14}$ est une simple liaison, -O- ou -COO- ; X est un atome d'hydrogène, de fluor, de chlore, un groupe trifluorométhyle, trifluorométhoxy, cyano, alkyle ayant 1 à 20 atomes de carbone, alcényle ayant 2 à 20 atomes de carbone, alcoxy ayant 1 à 20 atomes de carbone ou alcoxycarbonyle ayant 1 à 20 atomes de carbone ; e et g sont un nombre entier de 1 à 4 ; j et 1 sont indépendamment un nombre entier de 0 à 3 ; la somme de j et de 1 est de 1 à 4 ; d, f, h, i, k et m sont indépendamment un nombre entier de 0 à 20 ; et $M^7$ à $M^{12}$ sont indépendamment un atome d'hydrogène ou un groupe méthyle.

**15.** Composite de cristaux liquides selon l'une quelconque des revendications 1 à 14, dans lequel un rapport de la composition de cristaux liquides se situe dans la plage de 50 % en poids à 95 % en poids et un rapport du polymère se situe dans la plage de 5 % en poids à 50 % en poids sur la base d'un poids du composite de cristaux liquides.

**16.** Composite de cristaux liquides selon l'une quelconque des revendications 1 à 15, dans lequel le composite de cristaux liquides est obtenu à partir d'un précurseur d'une composition polymérisable comprenant la composition de cristaux liquides et le composé polymérisable et la composition polymérisable comprend un initiateur de photo-polymérisation comme additif.

**17.** Dispositif gradateur à cristaux liquides, dans lequel une couche de gradage se trouve dans le composite de cristaux liquides selon l'une quelconque des revendications 1 à 16 et la couche de gradage est prise en sandwich entre une paire de substrats transparents et les substrats transparents ont une électrode transparente.

**18.** Dispositif gradateur à cristaux liquides selon la revendication 17, dans lequel le substrat transparent est une plaque de verre ou une plaque acrylique.

**19.** Dispositif gradateur à cristaux liquides selon la revendication 17, dans lequel le substrat transparent est un film en plastique.

**20.** Fenêtre gradatrice utilisant le dispositif gradateur à cristaux liquides selon l'une quelconque des revendications 17 à 19.

**21.** Fenêtre intelligente utilisant le dispositif gradateur à cristaux liquides selon l'une quelconque des revendications 17 à 19.

**22.** Utilisation du composite de cristaux liquides selon l'une quelconque des revendications 1 à 16 pour un dispositif gradateur à cristaux liquides.

**23.** Utilisation du composite de cristaux liquides selon l'une quelconque des revendications 1 à 16 pour un dispositif gradateur à cristaux liquides où le substrat transparent est un film en plastique.

**24.** Utilisation du composite de cristaux liquides selon l'une quelconque des revendications 1 à 16, pour une fenêtre de gradage.

**25.** Utilisation du composite à cristaux liquides selon l'une quelconque des revendications 1 à 16, pour une fenêtre intelligente.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06273725 A
- WO 201196386 A
- JP S63278035 A
- JP H01198725 A
- JP H07104262 A
- JP H07175045 A
- JP 2016186070 A
- JP 2015131956 A
- JP 2013144796 A
- WO 2016146245 A1
- WO 2016082922 A1
- CN 104371744 A
- JP 2013254059 A
- JP 2013254060 A
- JP 2003255315 A
- WO 2016072436 A1
- US 20160168466 A1
- US 20150102259 A1
- US 20150376505 A1
- WO 2012050178 A
- JP H02503441 A
- US 3660505 A


### Non-patent literature cited in the description


- Organic Syntheses. John Wiley & Sons, Inc.
- Organic Reactions. John Wiley & Sons, Inc.
- Comprehensive Organic Synthesis. Pergamon Press
- Shin-Jikken Kagaku Kouza. Maruzen Co., Ltd.
- **J. HILFIKER** ; **B. JOHS** ; **C. HERZINGER** ; **J. F. ELMAN** ; **E. MONTBACH** ; **D. BRYANT** ; **P. J. BOS**. *Thin Solid Films*, 2004, 455-456, 596-600